# EUROPEAN PATENT APPLICATION

(11) **EP 3 511 672 A1**
(43) Date of publication of application: **17.07.2019**
(21) Application number: 17848773.2
(22) Date of filing: 05.09.2017
(51) Int. Cl.: G01B 7/16

(54) **SENSOR STRUCTURE, COMPONENT PROVIDED WITH SENSOR STRUCTURE, AND PATTERNING METHOD FOR SENSOR STRUCTURE**

(30) Priority: 09.09.2016 JP 2016177085; 09.09.2016 JP 2016177086
(71) Applicant: Nejilaw Inc., Bunkyo-ku, Tokyo 1130033 (JP)
(72) Inventor: MICHIWAKI Hiroshi, Tokyo 108-6028 (JP)
(74) Representative: Mozzi, Matteo
(86) International application number: PCT/JP2017/032002
(87) International publication number: WO 2018/047833

(57) **Abstract**

A sensor structure according to the present invention is provided with: a plurality of high resistance partial conducting sections 95T formed by a first conductive material and disposed with intervals existing therebetween; and a plurality of low resistance partial conducting sections 95Q formed by a second conductive material having a small electric resistivity when compared with the first conductive material, disposed such that each of the low resistance partial conducting sections 95Q connects the high resistance partial conducting sections 95T forming pairs with the low resistance partial conducting sections 95Q, and disposed with intervals existing therebetween. Due to a change of the electric resistance value in a range including both the high resistance partial conducting sections 95T and the low resistance partial conducting sections 95Q, physical phenomenon are detected. Through said feature, by making it possible to objectively measure the state of a variety of components, maintenance management of an entire building, judgment concerning the timing of maintenance, and buildings and sites to be preferentially repaired are clarified.

## Description

### Technical Field

Embodiments of the present invention relate to a structure such as a house, an apartment or a building, an edifice or construction (hereinafter, the edifice and the construction are simply and collectively referred to as the construction) such as a bridge, a steel tower, a railroad, a pipeline, a plant, a power plant, a wind power generator or a solar photovoltaic power generator, or various members such as construction materials or structural materials used for the same, an industrial machine such as construction equipment or a machine tool, or other machines or fastening members constituting the same, or consumables such as a blade or a maintaining member, or members used in various places, for example, a component such as a spring, a bearing or a linear guide, a variety of transportation such as a rocket, an aircraft, a submarine, a vessel, a subway train, a bus, a truck, a car, a motorcycle, a bicycle and an elevator, office or home appliances, and disposable products, and a method of forming a conduction path for patterning in such members, and moreover a sensor structure to detect a deformation of such members. Further, the embodiments relate to a method of forming a conduction path for patterning in such members.

### Background Art

Currently, various types of members are used at various places such as an edifice that forms a space such as a building, a house, a housing complex, or a hall, a construction such as a bridge, a dam, a caisson, a wave dissipating block, or a sluice gate (hereinafter, the edifice and the construction are referred to as the construction), a variety of transportation including a vehicle such as a car, a bicycle or a railroad, machine equipment, an electric device, a power generation facility, and a chemical plant. Further, various materials are used therefor, for example, iron, resin, rubber, stone, concrete, asphalt, wood, paper, ceramics, and glass.

For example, there exist various constructions related to social infrastructures such as a house, an apartment, a school building, a station building, an air terminal, a hospital, a local office building, a bridge and a tunnel. Shapes of the constructions are maintained by various structural materials such as columns, roof beams or floors, ceilings, bolts, nuts and reinforced concrete. Further, it is not limited to the structural materials, and a variety of equipment or members such as windows or doors are used and have various shapes and structures using a number of materials.

The structural materials are assumed to be used for a long time. However, the structural materials are exposed to a thermal extension and contraction by temperature, a degradation over time, or an external force by a vibration or an impact such as an earthquake disaster, and thus may not avoid aging. When aging is neglected, artificial disasters may occur.

Further, a disaster such as a typhoon, a tornado or an earthquake expected to become more powerful in the future applies an excessive stress or load even to windows, and the windows may be cracked, or a portion of the windows may be pulled out. Neglecting them leads to breakup of the windows and may hurt people.

Thus, in the future, national resilience is important to implement reduction/prevention of disasters by monitoring and maintaining various members such as construction materials quantitatively and extensively to prevent accidents or disasters in advance.

### Disclosure of Invention

### Technical Goals

However, now there are an enormous number of constructions. It is practically impossible to determine a structural material to be intensively maintained in one of the constructions while putting a priority on a construction material for which maintenance is to be performed.

Even now, for example, bridge maintenance inspection record cards are filled to maintain bridges, and persons in charge at local areas regularly inspect the bridges. However, such inspections are performed mainly by an appearance check with naked eyes of human. Thus, the results are different from person to person and lack objectivity, and the inspections may not be performed in real time, and thus the results may not be used to determine radical maintenance.

Various members other than the structural materials are generally repaired/replaced after broken or damaged. Thus, it is difficult to prevent an accident or a financial loss resulting therefrom.

Meanwhile, there exists a strain sensor device that is referred to as a strain gauge. The strain gauge is attached to a measurement target using an adhesive to indirectly measure a stress or a torsion generated in the measurement target. However, this method may require a difficult installation task to the measurement target using an adhesive, and may not distinguish between an extension of the adhesive and an extension of the measurement target. Since the measurement target may deteriorate or be peeled due to temperature or humidity, a thermal effect, a different coefficient of thermal expansion, a fatigue strength by repeated expansions and contractions, or an issue of weather resistance or durability, it is essentially impossible to obtain an accurate result of measuring the torsion occurring in the measurement target for a long time.

Further, since the existing strain gauge has a limited detection sensitivity, it is very difficult to detect, for example, a locally diminutive deformation or vibrational movement occurring throughout a huge structure.

More specifically, the existing strain gauge is provided in a structure in which a resistance wiring reciprocating in the shape of bellows is formed with high accuracy in a small detection region. The strain gauge is attached to a measurement target to sense a deformation level thereof. As a result, a detection region by a single strain gauge is extremely small. Thus, for example, when it is desired to sense, using the strain gauge, a deformation which may occur at any position not determined in advance in a huge structure, an enormous number of strain gauges need to be attached to the structure, which is not practical in an aspect of productivity or manufacturing cost.

As a result of keen research performed by the present inventor(s) in view of the above issue, the present invention is directed to objectively measuring circumstances of various members, thereby determining a maintenance time of the whole of a construction, or clarifying a construction or a portion requiring a preferential maintenance, or connecting to a more excellent design, or measuring in real time a factory building, equipment in the factory, particularly, production equipment or industrial machines, devices, or consumables used therefor, or verifying a resulting state, or verifying states of various types of movable objects or vehicles such as an airplane, a vessel, a railroad or railroad vehicle, and an automobile, or preventing accidents resulting therefrom.

### Technical Solutions

According to an aspect of the present invention, there is provided a sensor structure including a plurality of high resistance partial conducting sections formed of a first conductive material, and disposed with intervals therebetween, and a plurality of low resistance partial conducting sections formed of a second conductive material having a small electric resistivity when compared with the first conductive material, disposed to respectively connect the corresponding high resistance partial conducting sections, and disposed with intervals therebetween, wherein a physical phenomenon is detected due to a change in electric resistance value in a range including both the high resistance partial conducting sections and the low resistance partial conducting sections.

In relation to the sensor structure, the high resistance partial conducting sections and the low resistance partial conducting sections have planar shapes, and the high resistance partial conducting sections and the low resistance partial conducting sections overlap and are in surface contact with each other.

In relation to the sensor structure, the sensor structure includes auxiliary conducting sections formed of a conductive material having a great electric resistivity when compared with the second conductive material, and disposed to respectively connect the corresponding high resistance partial conducting sections.

In relation to the sensor structure, the sensor structure includes a base path formed of the first conductive material, wherein the plurality of low resistance partial conducting sections is arranged to contact a surface of the base path with intervals therebetween, at least a portion of regions, corresponding to the intervals between the plurality of low resistance partial conducting sections, in the base path correspond to the high resistance partial conducting sections, and regions contacting the low resistance partial conducting sections in the base path correspond to the auxiliary conducting sections.

According to an aspect of the present invention, there is provided a sensor-structure-attached-member in which the sensor structure is disposed on the entirety or a portion of a member being a measurement target.

In relation to the sensor-structure-attached-member, the high resistance partial conducting sections or the low resistance partial conducting sections are formed directly on a surface of the member.

In relation to the sensor-structure-attached-member, a plurality of sensor structures is arranged at different positions on the surface of the member.

In relation to the sensor-structure-attached-member, the sensor structure is disposed over the entire region from a vicinity of one end to a vicinity of the other end on the surface of the member.

In relation to the sensor-structure-attached-member, the sensor structure being a single conduction path is disposed over the entire region from a vicinity of one end to a vicinity of the other end on the surface of the member.

In relation to the sensor-structure-attached-member, the member is formed of a conductive material and serves as the high resistance conducting sections, and the sensor structure is formed by arranging the low resistance partial conducting sections with intervals therebetween on the surface of the member.

According to an aspect of the present invention, there is provided a sensor structure including a base path formed of a first conductive material, and a plurality of low resistance partial conducting sections arranged to contact a surface of the base path, the low resistance partial conducting sections formed of a conductive material having a small electric resistivity when compared with the first conductive material, wherein a physical phenomenon is detected due to a change in electric resistance value in a range including both the base path and the low resistance partial conducting sections.

In relation to the sensor structure, the plurality of low resistance partial conducting sections is arranged on at least one surface of the base path.

In relation to the sensor structure, the change in electric resistance value resulting from a deformation of the base path is detected.

In relation to the sensor structure, the sensor structure includes a plurality of parallel conduction portions configured to branch and join between both ends to which a voltage is applied, wherein the base path and the plurality of low resistance partial conducting sections are arranged in each of the plurality of parallel conduction portions.

In relation to the sensor structure, the sensor structure includes a pair of terminals which are adjacent to each other and to which a voltage is applied, and a conduction path configured to separate from one of the terminals and return to the other of the terminals, wherein the base path and the plurality of low resistance partial conducting sections are arranged in the middle of the conduction path.

In relation to the sensor structure, a layer thickness of the base path is greater than a layer thickness of the low resistance partial conducting sections.

According to an aspect of the present invention, there is provided a sensor-structure-attached-member in which the sensor structure is disposed on the entirety or a portion of a member being a measurement target.

In relation to the sensor-structure-attached-member, the base path or the low resistance partial conducting sections are formed directly on a surface of the member.

In relation to the sensor-structure-attached-member, a plurality of sensor structures is arranged at different positions on a surface of the member.

In relation to the sensor-structure-attached-member, the member is formed of a conductive material and serves as the base path, and the sensor structure is formed by arranging the low resistance partial conducting sections on a surface of the member.

According to an aspect of the present invention, there is provided a patterning method for forming a sensor structure including a plurality of high resistance partial conducting sections disposed with intervals therebetween and a plurality of low resistance partial conducting sections arranged to connect the high resistance partial conducting sections on a surface of a measurement target, and sensorizing the measurement target by combining the sensor structure with the measurement target, the patterning method including a high resistance partial conducting section masking layer forming step of forming a high resistance partial conducting section masking layer to cover a vicinity of at least a plurality of high resistance partial conducting section formation regions such that the high resistance partial conducting section formation regions are exposed, a high resistance partial conducting section conductive layer forming step performed later than the high resistance partial conducting section masking layer forming step, the high resistance partial conducting section conductive layer forming step of forming a high resistance partial conducting section conductive layer using a high resistance partial conducting section conductive material, with respect to a range including the plurality of high resistance partial conducting section formation regions, a low resistance partial conducting section masking layer forming step of forming a low resistance partial conducting section masking layer to cover a vicinity of a plurality of low resistance partial conducting section formation regions, and exposing the plurality of low resistance partial conducting section formation regions, a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to a range including the plurality of low resistance partial conducting section formation regions, a high resistance partial conducting section masking layer removing step performed later than the high resistance partial conducting section conductive layer forming step, the high resistance partial conducting section masking layer removing step of forming the plurality of high resistance partial conducting sections through the high resistance partial conducting section conductive layer by removing the high resistance partial conducting section masking layer, and a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer.

In relation to the patterning method, the high resistance partial conducting sections and the low resistance partial conducting sections are formed such that at least a portion thereof overlap each other.

According to an aspect of the present invention, there is provided a patterning method for forming a sensor structure including a base path and a plurality of low resistance partial conducting sections arranged to contact the base path on a surface of a measurement target, and sensorizing the measurement target by combining the sensor structure with the measurement target, the patterning method including a base path forming step of forming a base path using a base path conductive material, with respect to the surface of the measurement target, a low resistance partial conducting section masking layer forming step performed later than the base path forming step, the low resistance partial conducting section masking layer forming step of forming a low resistance partial conducting section masking layer to cover a vicinity of a plurality of low resistance partial conducting section formation regions, with respect to the base path including the plurality of low resistance partial conducting section formation regions, and exposing the plurality of low resistance partial conducting section formation regions, a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to the base path in a range including the plurality of low resistance partial conducting section formation regions, and a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer.

According to an aspect of the present invention, there is provided a patterning method for forming a sensor structure including a base path and a plurality of low resistance partial conducting sections arranged to contact the base path on a surface of a measurement target, and sensorizing the measurement target by combining the sensor structure with the measurement target, the patterning method including a base path masking layer forming step of forming a base path masking layer to cover a vicinity of a base path formation region, with respect to the surface of the measurement target including the base path formation region, and exposing the base path formation region, a base path conductive layer forming step performed later than the base path masking layer forming step, the base path conductive layer forming step of forming a base path conductive layer using a base path conductive material with respect to the surface of the measurement target in a range including the base path formation region, a low resistance partial conducting section masking layer forming step performed later than the base path conductive layer forming step, the low resistance partial conducting section masking layer forming step of forming a low resistance partial conducting section masking layer to cover a vicinity of a plurality of low resistance partial conducting section formation regions, with respect to the base path conductive layer including the plurality of low resistance partial conducting section formation regions in a range of the base path formation region, and exposing the plurality of low resistance partial conducting section formation regions, a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to the base path conductive layer in a range including the plurality of low resistance partial conducting section formation regions, a base path masking layer removing step performed later than the base path conductive layer forming step, the base path masking layer removing step of forming the base path through the base path conductive layer by removing the base path masking layer, and a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer.

In relation to the patterning method, the patterning method includes an insulating layer forming step performed earlier than the base path conductive layer forming step, the insulating layer forming step of forming an insulating layer in the base path formation region with respect to the surface of the measurement target.

According to an aspect of the present invention, there is provided a patterning method for forming a sensor structure including a base path and a plurality of low resistance partial conducting sections arranged to contact the base path on a surface of a measurement target, and sensorizing the measurement target by combining the sensor structure with the measurement target, the patterning method including a low resistance partial conducting section masking layer forming step of forming a low resistance partial conducting section masking layer to cover a vicinity of a plurality of low resistance partial conducting section formation regions, with respect to the surface of the measurement target including the plurality of low resistance partial conducting section formation regions, and exposing the plurality of low resistance partial conducting section formation regions, a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to the surface of the measurement target in a range including the plurality of low resistance partial conducting section formation regions, a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer, a base path masking layer forming step performed later than the low resistance partial conducting section masking layer removing step, the base path masking layer forming step of forming a base path masking layer to cover a vicinity of a base path formation region overlapping the plurality of low resistance partial conducting section formation regions, with respect to the surface of the measurement target including the base path formation region, and exposing the base path formation region, a base path conductive layer forming step performed later than the base path masking layer forming step, the base path conductive layer forming step of forming a base path conductive layer using a base path conductive material with respect to the surface of the measurement target in a range including the base path formation region, and a base path masking layer removing step performed later than the base path conductive layer forming step, the base path masking layer removing step of forming the base path through the base path conductive layer by removing the base path masking layer.

In relation to the patterning method, the patterning method includes an insulating layer forming step performed earlier than the low resistance partial conducting section masking layer forming step, the insulating layer forming step of forming an insulating layer in the base path formation region with respect to the surface of the measurement target.

According to an aspect of the present invention, there is provided a patterning method for forming a sensor structure including a base path and a plurality of low resistance partial conducting sections arranged to contact the base path on a surface of a measurement target, and sensorizing the measurement target by combining the sensor structure with the measurement target, the patterning method including a low resistance partial conducting section masking layer forming step of forming a low resistance partial conducting section masking layer to cover a vicinity of a plurality of low resistance partial conducting section formation regions, with respect to the surface of the measurement target serving as the base path, and exposing the plurality of low resistance partial conducting section formation regions, a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to the surface of the measurement target in a range including the plurality of low resistance partial conducting section formation regions, and a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer.

According to an aspect of the present invention, there is provided a patterning method for forming a sensor structure including a base path and a plurality of low resistance partial conducting sections arranged to contact the base path on a surface of a measurement target, and sensorizing the measurement target by combining the sensor structure with the measurement target, the patterning method including a base path conductive layer forming step of forming a base path conductive layer using a base path conductive material with respect to the surface of the measurement target in a range including a base path formation region, a base path masking layer forming step of forming a base path masking layer to cover the base path formation region, with respect to the base path conductive layer, and exposing a region other than the base path formation region, a base path conductive material removing step of forming the base path by removing the region other than the base path formation region from the base path conductive layer, a low resistance partial conducting section conductive layer forming step performed later than the base path conductive material removing step, the low resistance partial conducting section conductive layer forming step of forming a low resistance partial conducting section conductive layer using a low resistance partial conducting section conductive material, with respect to a range including a plurality of low resistance partial conducting section formation regions overlapping the base path, a low resistance partial conducting section masking layer forming step of forming a low resistance partial conducting section masking layer to cover the plurality of low resistance partial conducting section formation regions, with respect to the low resistance partial conducting section conductive layer, and exposing a region other than the plurality of low resistance partial conducting section formation regions, and a low resistance partial conducting section conductive material removing step of forming the plurality of low resistance partial conducting sections by removing the region other than the low resistance partial conducting section formation regions from the low resistance partial conducting section conductive layer.

According to an aspect of the present invention, there is provided a patterning method for forming a sensor structure including a base path and a plurality of low resistance partial conducting sections arranged to contact the base path on a surface of a measurement target, and sensorizing the measurement target by combining the sensor structure with the measurement target, the patterning method including a low resistance partial conducting section conductive layer forming step of forming a low resistance partial conducting section conductive layer using a low resistance partial conducting section conductive material with respect to the surface of the measurement target in a range including low resistance partial conducting section formation regions, a low resistance partial conducting section masking layer forming step of forming a low resistance partial conducting section masking layer to cover the plurality of low resistance partial conducting section formation regions with respect to the low resistance partial conducting section conductive layer, and exposing a region other than the plurality of low resistance partial conducting section formation regions, a low resistance partial conducting section conductive material removing step of forming the plurality of low resistance partial conducting sections by removing the region other than the low resistance partial conducting section formation regions from the low resistance partial conducting section conductive layer, a base path conductive layer forming step performed later than the low resistance partial conducting section conductive material removing step, the base path conductive layer forming step of forming a base path conductive layer using a base path conductive material with respect to a range including a base path formation region overlapping the plurality of low resistance partial conducting sections, a base path masking layer forming step of forming a base path masking layer to cover the base path formation region, with respective to the base path conductive layer, and exposing a region other than the base path formation region, and a base path conductive material removing step of forming the base path by removing the region other than the base path formation region from the base path conductive layer.

According to an aspect of the present invention, there is provided a patterning method for forming a sensor structure including a base path and a plurality of low resistance partial conducting sections arranged to contact the base path on a surface of a measurement target, and sensorizing the measurement target by combining the sensor structure with the measurement target, the patterning method including a low resistance partial conducting section conductive layer forming step of forming a low resistance partial conducting section conductive layer using a low resistance partial conducting section conductive material to include low resistance partial conducting section formation regions, with respect to the surface of the measurement target serving as the base path, a low resistance partial conducting section masking layer forming step of forming a low resistance partial conducting section masking layer to cover the plurality of low resistance partial conducting section formation regions, with respect to the low resistance partial conducting section conductive layer, and exposing a region other than the plurality of low resistance partial conducting section formation regions, and a low resistance partial conducting section conductive material removing step of forming the plurality of low resistance partial conducting sections by removing the region other than the low resistance partial conducting section formation regions from the low resistance partial conducting section conductive layer.

### Effects

According to embodiments, a change in physical shape such as a deformation or torsion occurring in a member, a temperature condition, or a minute crack and/or a change in chemical state such as a material surface state such as rust or corrosion, or a change in physical, chemical environment surrounding the member may be objectively verified at a remarkably low cost, and a wide range of targets may be objectively and remotely monitored through mass production. Further, the embodiments may also be applied to various types of, diverse, and a large quantity of members at a remarkably low cost.

### Brief Description of Drawings

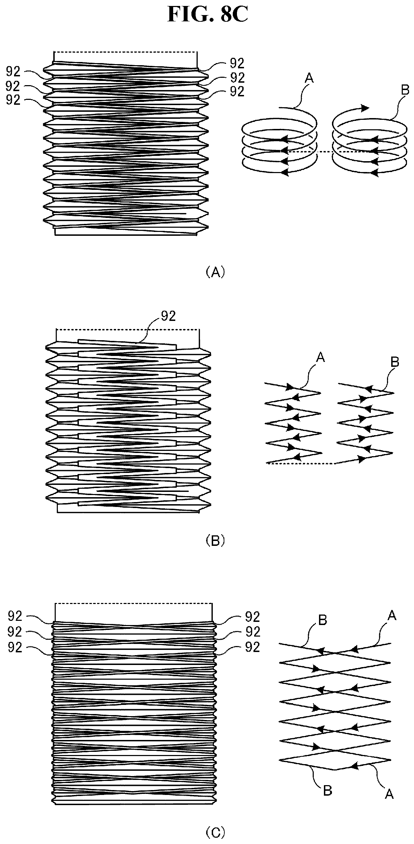

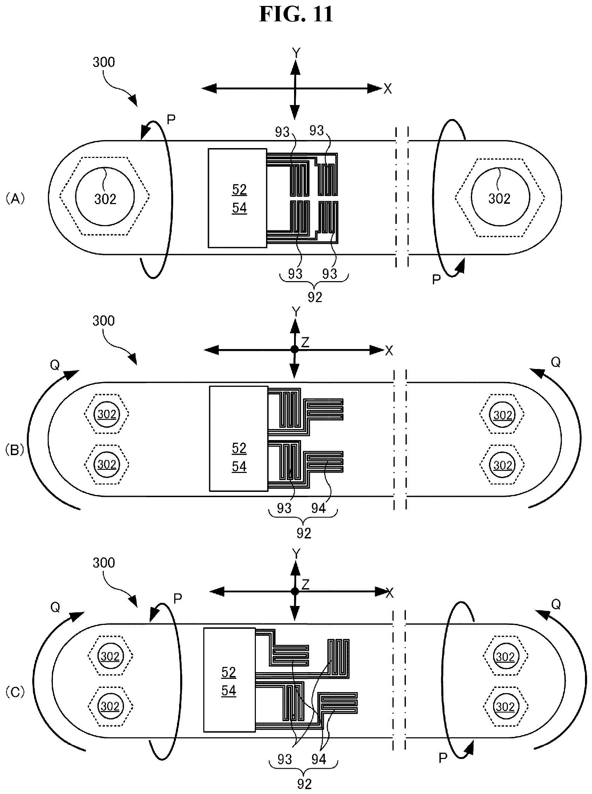

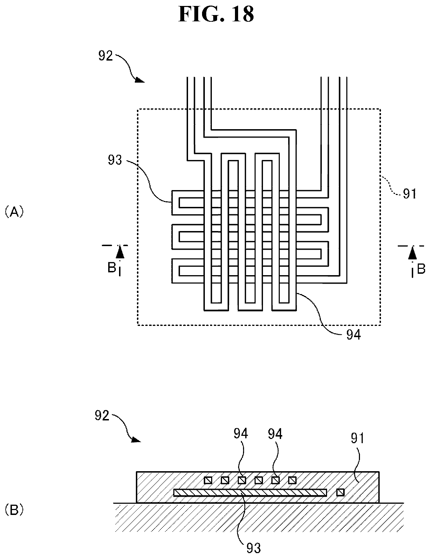

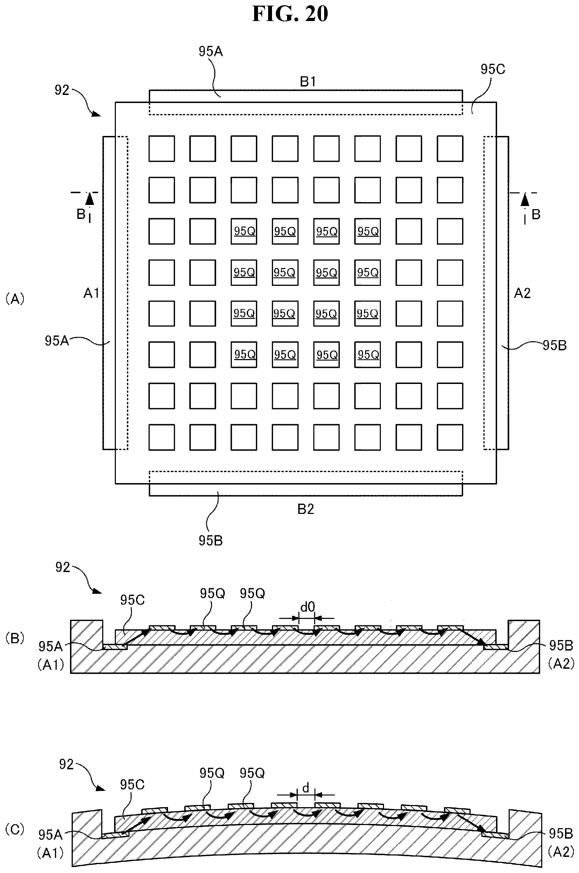

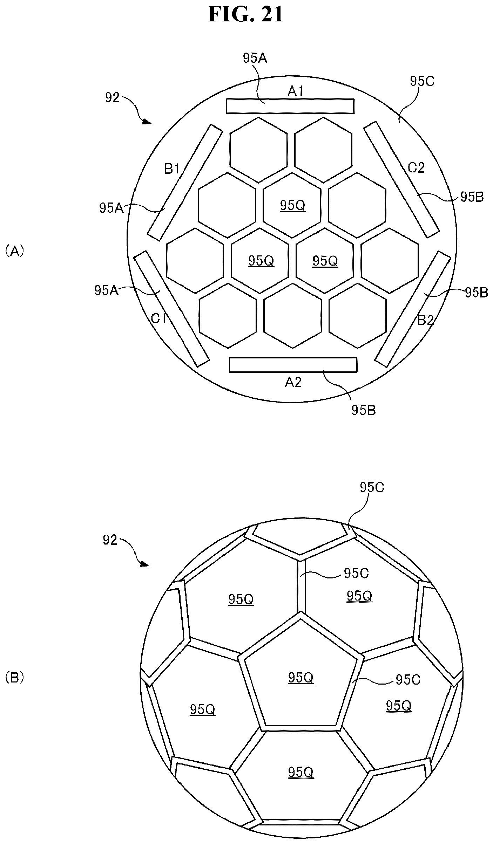

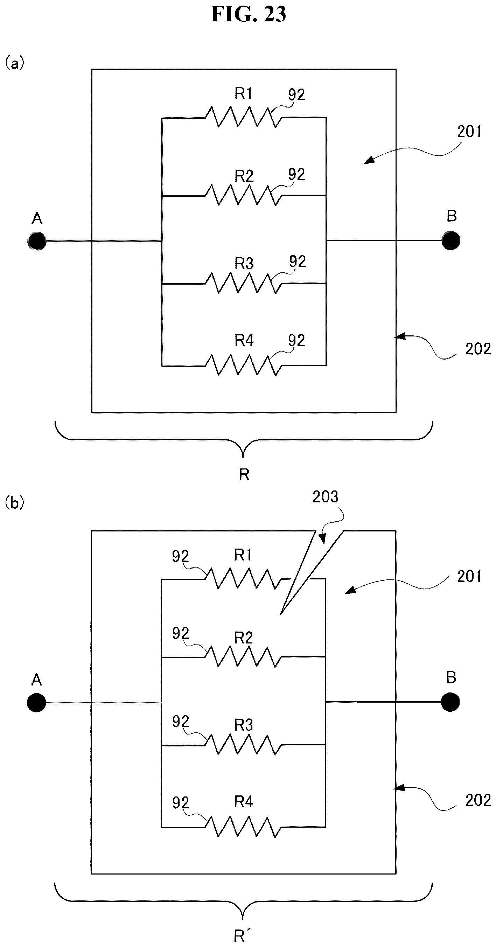

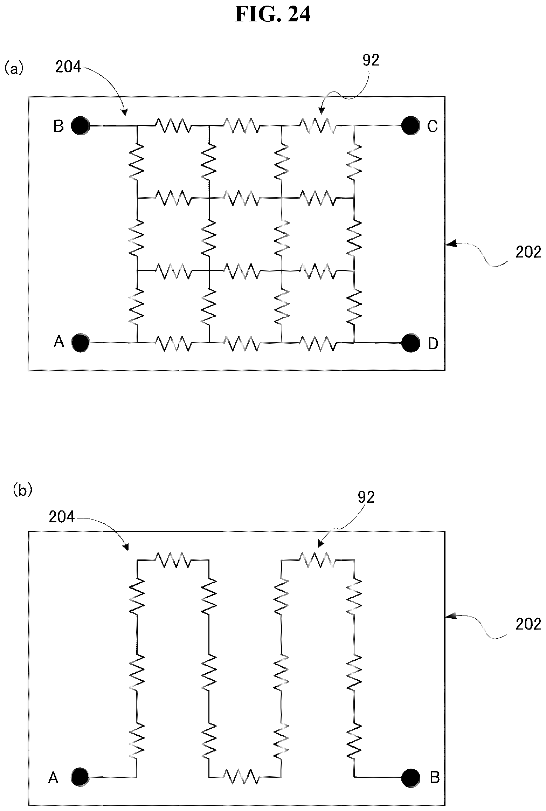

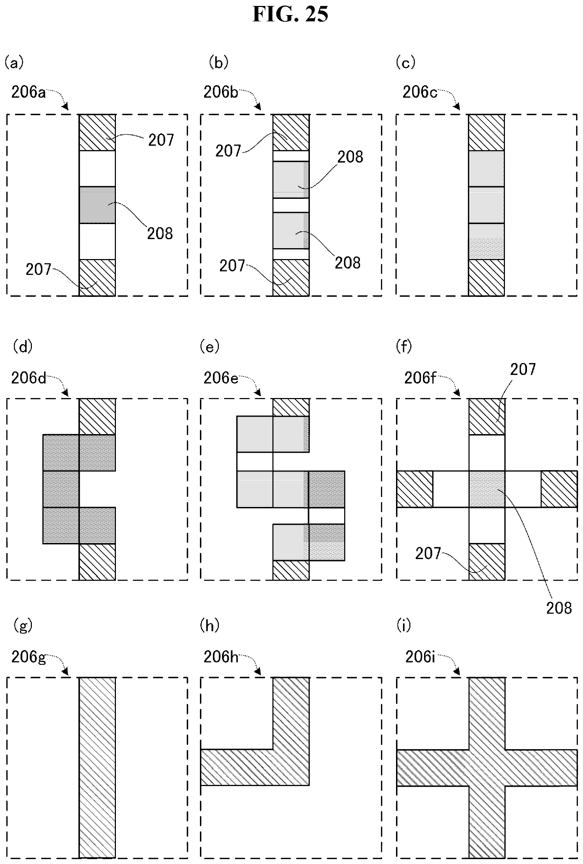

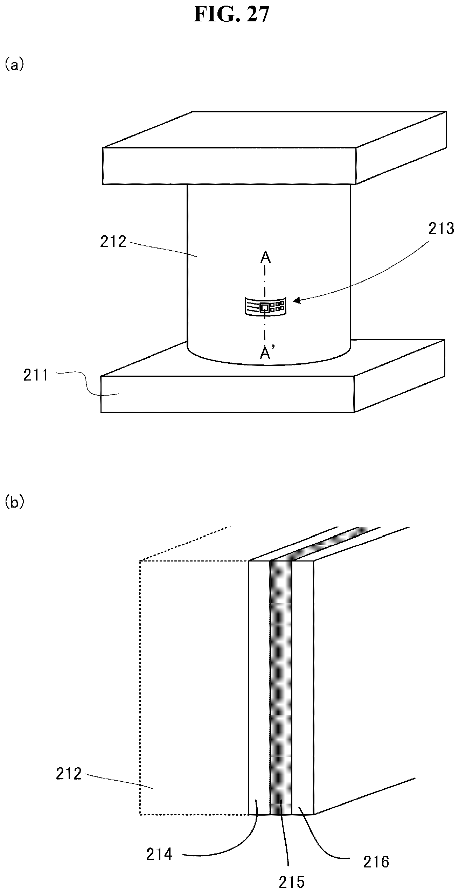

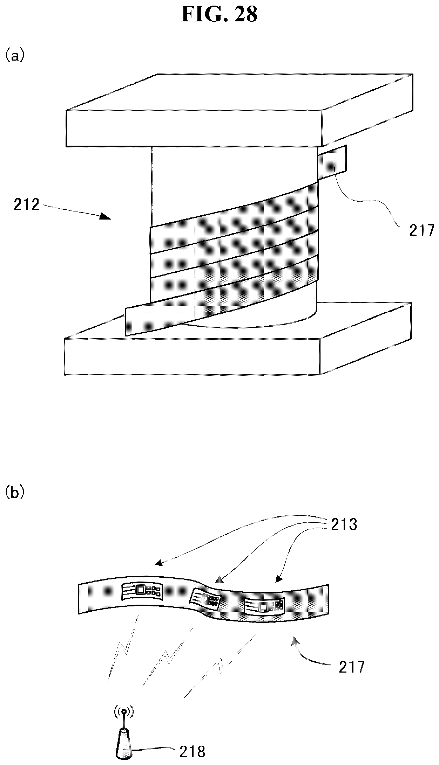

FIG. 1A illustrates an overall configuration of a measuring system of a structure using a sensor-structure-attached-member according to an embodiment of the present invention.
FIG. 1B illustrates a sensor structure according to an embodiment of the present invention, in detail, (A) is a plan view thereof, (B) is a cross-sectional view thereof cut along an arrow B-B of the plan view, (C) is a cross-sectional view illustrating an internal structure thereof, and (D) and (E) are cross-sectional views illustrating states thereof when deformed.
FIG. 1C is a plan view illustrating a sensor structure applied to a parent material according to an embodiment of the present invention.
FIG. 1D is a plan view illustrating a sensor structure applied to a parent material according to an embodiment of the present invention.
FIG. 1E illustrates another example of a sensor structure according to an embodiment of the present invention, in detail, (A) is a plan view thereof, and (B) is a cross-sectional view thereof cut along an arrow B-B of the plan view.
FIG. 1F is a cross-sectional view illustrating another example of a sensor structure according to an embodiment of the present invention.
FIG. 1G is a cross-sectional view illustrating another example of a sensor structure according to an embodiment of the present invention.
FIG. 1H is a perspective view illustrating a sensor structure applied to a rod-shaped parent material according to an embodiment of the present invention.
FIG. 1I is a plan view illustrating another example of a sensor structure according to an embodiment of the present invention.
FIG. 2 is an enlarged perspective view illustrating a construction to which a sensor-structure-attached-member is applied.
FIG. 3 illustrates a male screw body which is an example of a sensor-structure-attached-member used as the same measuring system, in detail, (A) is a top view thereof, (B) is a front view thereof, (C) is a rear view thereof, and (D) is a cross-sectional view thereof cut along an arrow D-D in (B) of FIG. 3.
FIG. 4A is an enlarged perspective view of a portion of the same sensor-structure-attached-member.
FIG. 4B is an enlarged front view of a portion of the same sensor-structure-attached-member, in detail, (B) and (C) are cross-sectional views thereof cut along an arrow B-B of (A) of FIG. 4B.
FIG. 4C illustrates a modified example of the same sensor-structure-attached-member, in detail, (A) is a front view thereof, (B) is a cross-sectional view thereof, and (C) is a development view illustrating only the sensor structure.
FIG. 5A illustrates a modified example of the same male screw body, in detail, (A) is a top view thereof, (B) is a front view thereof, and (C) is a bottom view thereof.
FIG. 5B illustrates a modified example of the same male screw body, in detail, (A) is an enlarged perspective view illustrating a portion thereof, (B) is a partial cross-sectional view thereof, and (C) through (I) are partial cross-sectional views illustrating a stacking process.
FIG. 5C illustrates a modified example of the same male screw body, in detail, (A) is a front view thereof, and (B) is a cross-sectional front view thereof.
FIG. 5D illustrates a modified example of the same male screw body, in detail, (A) is a front view thereof, and (B) is a cross-sectional view cut along an arrow B-B of (A) of FIG. 5D.
FIG. 5E illustrates a modified example of the same male screw body, in detail, (A) is a front view thereof, and (B) is a cross-sectional view cut along an arrow B-B of (A) of FIG. 5E.
FIG. 6A is a block diagram illustrating a configuration of a substrate built in the same male screw body.
   (A) through (D) of FIG. 6B are circuit diagrams illustrating configurations of a bridge circuit applied to a conduction path of the same male screw body.
   (A) and (B) of FIG. 6C are circuit diagrams illustrating configurations of a bridge circuit applied to a conduction path of the same male screw body.
   (A) of FIG. 7 is a block diagram illustrating a hardware configuration of an information collection device of the same measuring system, and (B) of FIG. 7 is a block diagram illustrating a functional configuration of the information collection device.

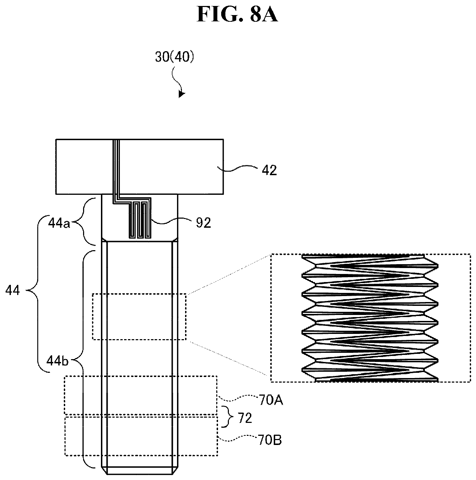

FIG. 8A is a front view illustrating a loosening preventing structure of a threaded part which is a modified example of the same male screw body.

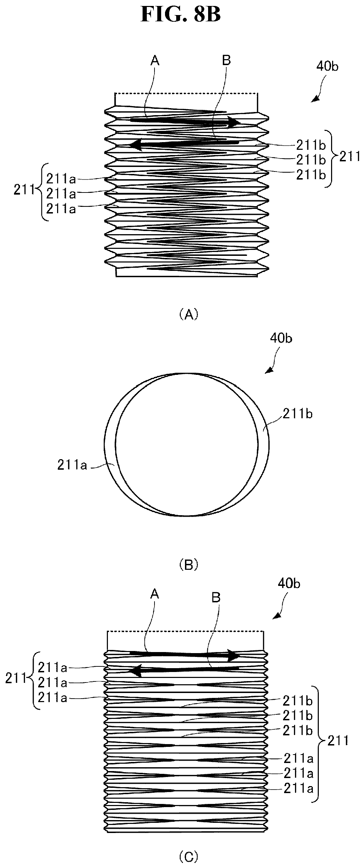

FIG. 8B illustrates the same threaded part being enlarged, in detail, (A) is a front view thereof, (B) is a bottom view thereof, and (C) is a side view thereof.
   (A) through (C) of FIG. 8C are front views illustrating conduction paths being formed in the same threaded part.

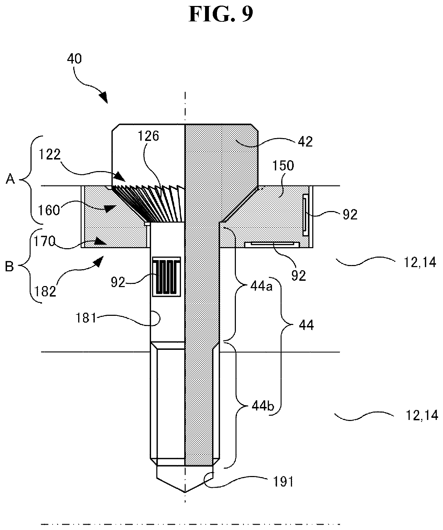

FIG. 9 is a front view illustrating an example of a loosening preventing structure of a threaded part of the same male screw body.

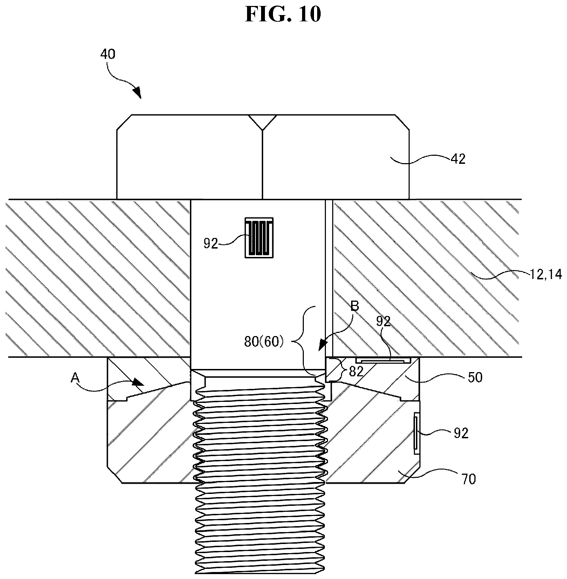

FIG. 10 is a front view illustrating an example of a loosening preventing structure of a threaded part of the same male screw body.
   (A) through (C) of FIG. 11 are front views illustrating modified examples of the same sensor-structure-attached-member.

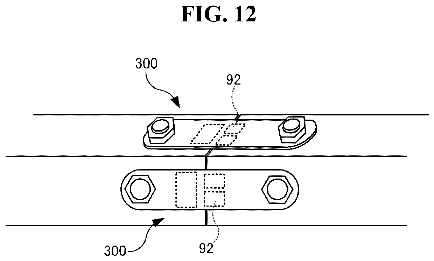

FIG. 12 is an enlarged perspective view illustrating a construction to which the same sensor-structure-attached-member is applied.

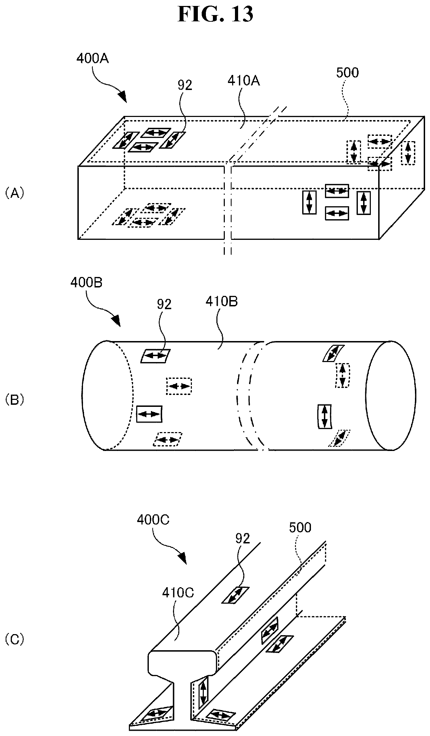

FIG. 13 illustrates a modified example of the same sensor-structure-attached-member.

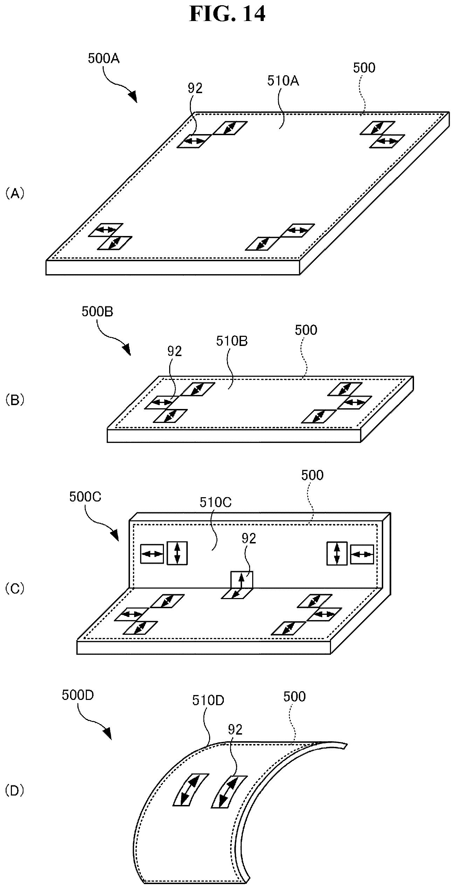

FIG. 14 illustrates a modified example of the same sensor-structure-attached-member.

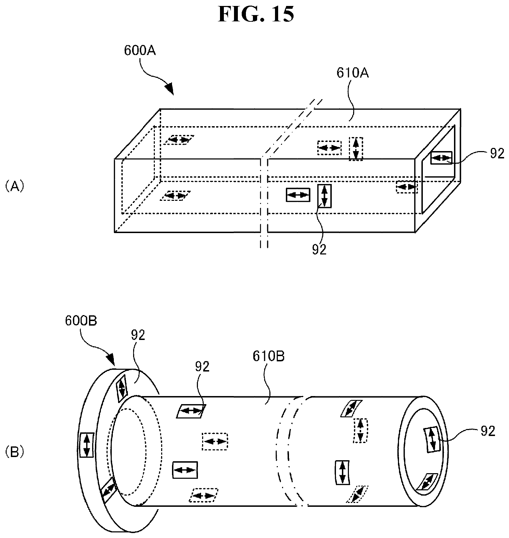

FIG. 15 illustrates a modified example of the same sensor-structure-attached-member.

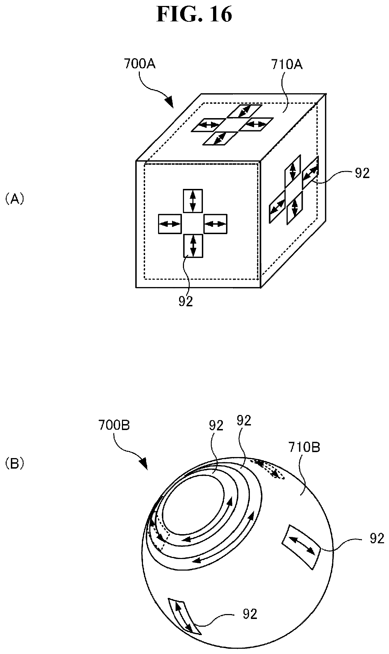

FIG. 16 illustrates a modified example of the same sensor-structure-attached-member.

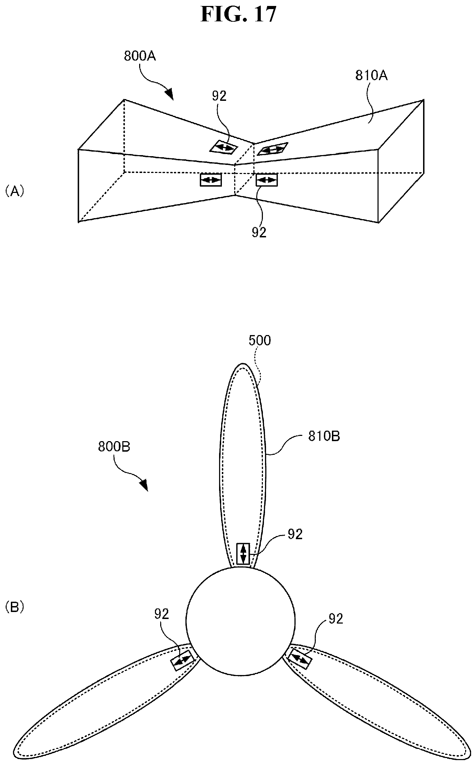

FIG. 17 illustrates a modified example of the same sensor-structure-attached-member.
   (A) of FIG. 18 illustrates a modified example of a conduction path of the same sensor-structure-attached-member, and (B) of FIG. 18 is a cross-sectional view thereof cut along an arrow B-B of (A) of FIG. 18.

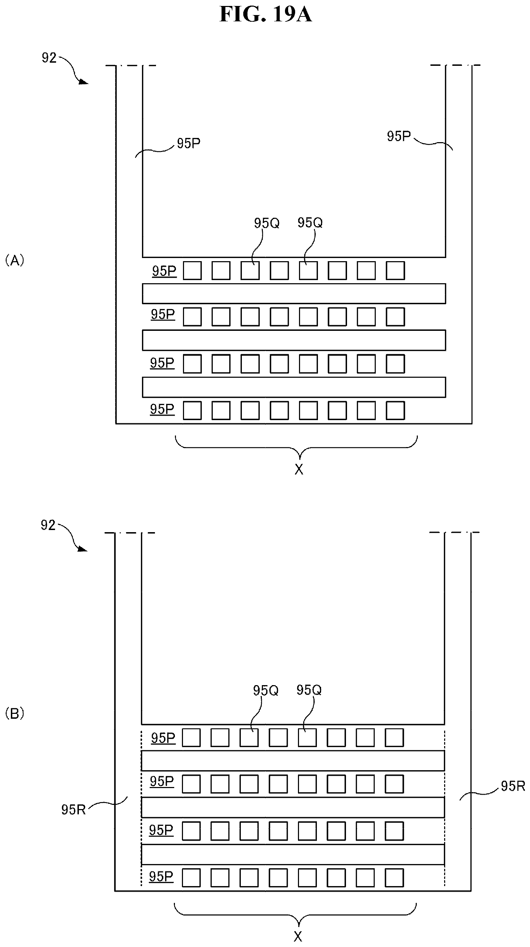

FIG. 19A illustrates a modified example of the same sensor-structure-attached-member.

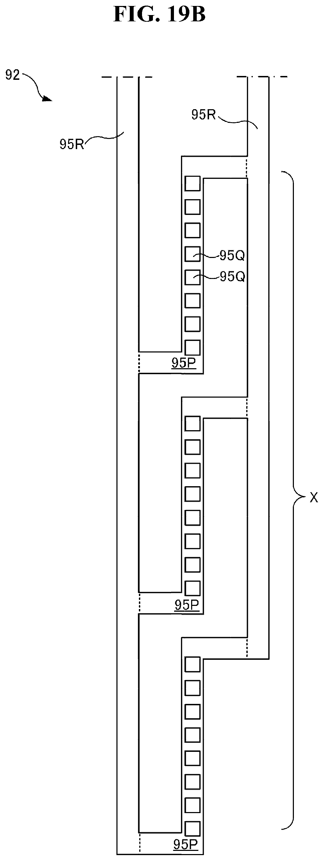

FIG. 19B illustrates a modified example of the same sensor-structure-attached-member.

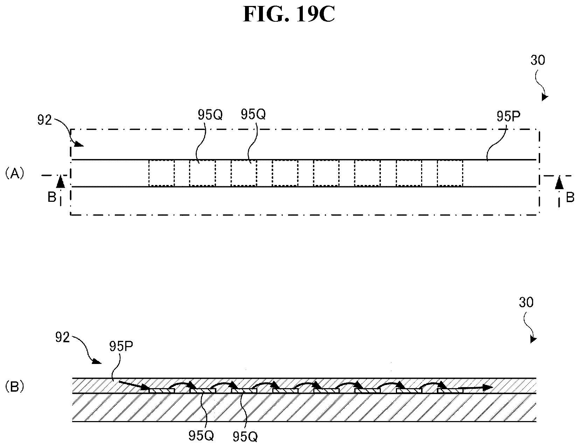

FIG. 19C illustrates a modified example of the same sensor-structure-attached-member.

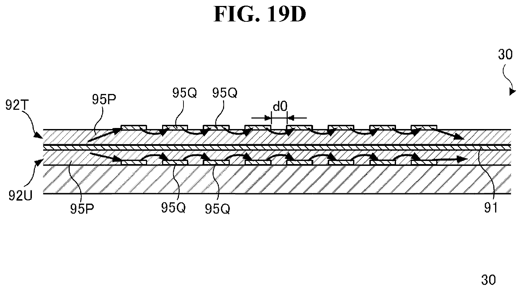

FIG. 19D illustrates a conduction path of a multi-layer structure in the same sensor-structure-attached-member.

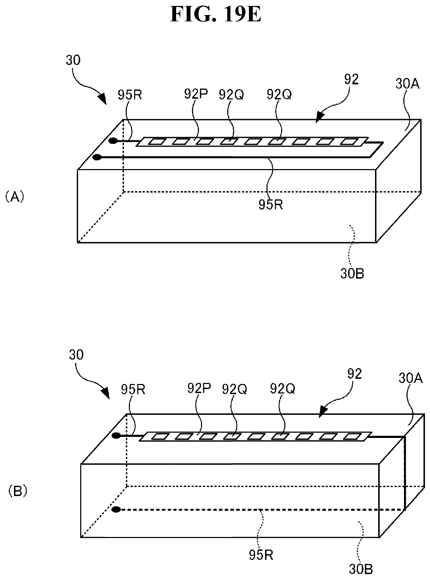

FIG. 19E illustrates an arrangement example of a power supply wiring in the same sensor-structure-attached-member.

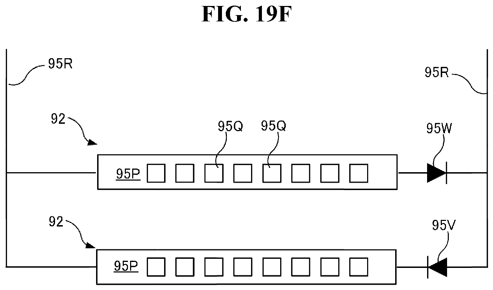

FIG. 19F illustrates an arrangement example of a power supply wiring in the same sensor-structure-attached-member.

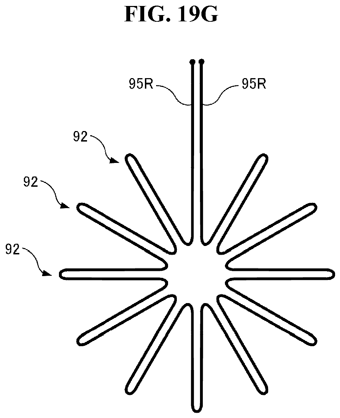

FIG. 19G illustrates a modified example of the same sensor-structure-attached-member.
   (A) of FIG. 20 illustrates a modified example of a conduction path of the same sensor-structure-attached-member, and (B) and (C) of FIG. 20 are cross-sectional views thereof cut along an arrow B-B of (A) of FIG. 20.
   (A) and (B) of FIG. 21 illustrate modified examples of a conduction path of the same sensor-structure-attached-member.

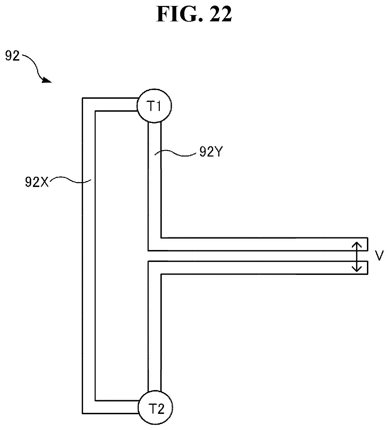

FIG. 22 illustrates a modified example of a conduction path of the same sensor-structure-attached-member.
   (a) and (b) of FIG. 23 illustrate a conduction circuit including a plurality of conduction paths.
   (a) and (b) of FIG. 24 illustrate conduction circuits provided in a shape of two-dimensional (2D) matrices.
   (a) through (i) of FIG. 25 illustrate pattern information to be used to form the same conduction circuit.

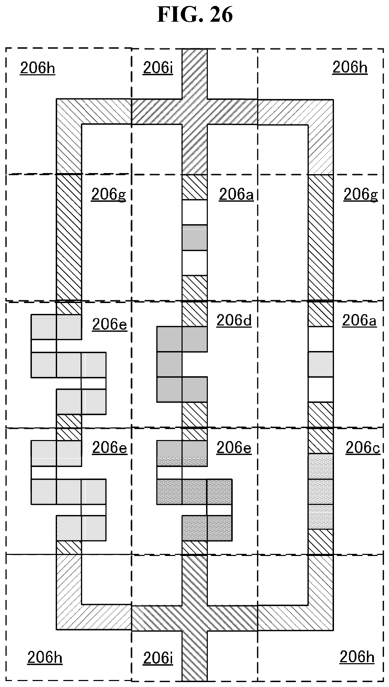

FIG. 26 illustrates a conduction circuit pattern obtained by combining the same pattern information.
   (a) of FIG. 27 is a perspective view illustrating a modified example of the same sensor-structure-attached-member, and (b) of FIG. 27 is a partial cross-sectional view illustrating a conduction circuit of the same sensor-structure-attached-member.
   (a) and (b) of FIG. 28 are perspective views illustrating a belt-shaped sensor-structure-attached-member being used, and (b) of FIG. 28 further illustrates an example of detection of the same sensor-structure-attached-member.

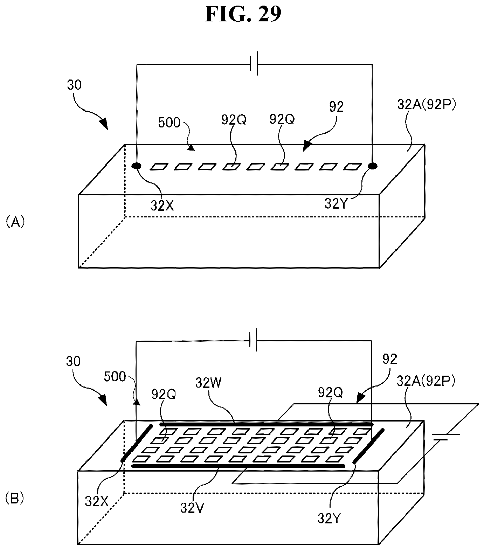

FIG. 29 is a perspective view illustrating an example of using a parent material of a sensor-structure-attached-member as a base path.

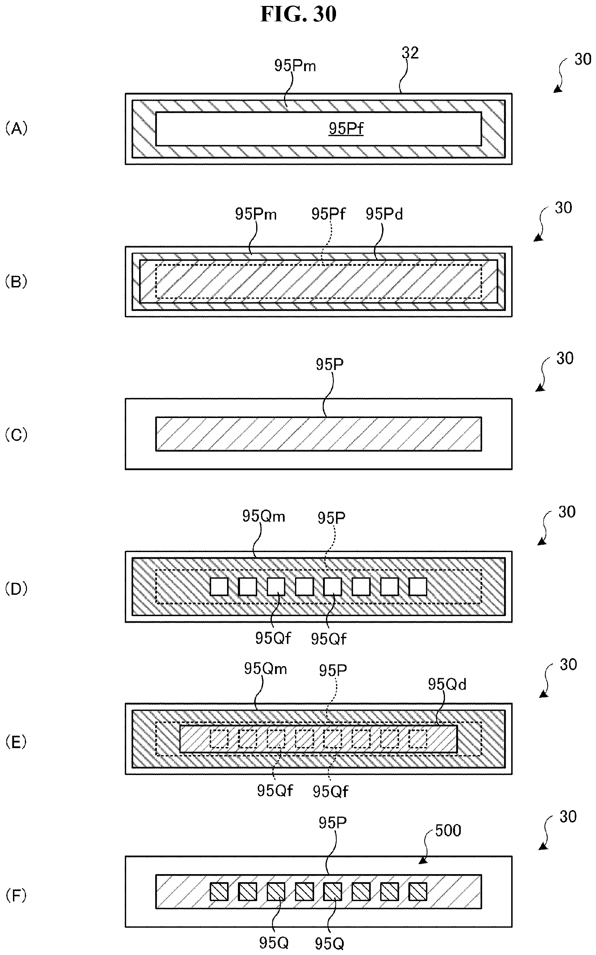

FIG. 30 is a plan view illustrating a process example of a patterning method for a sensor structure according to an embodiment of the present invention.

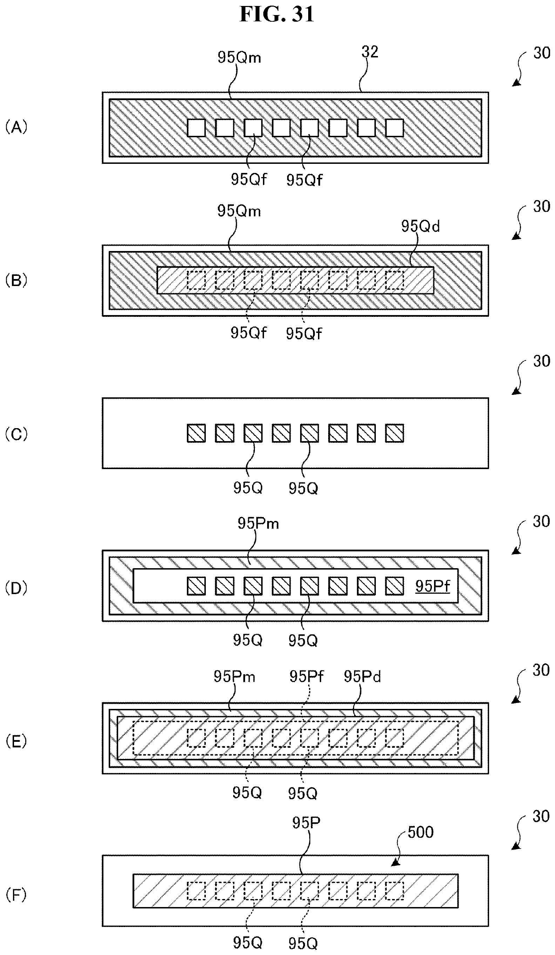

FIG. 31 is a plan view illustrating another process example of the same patterning method.

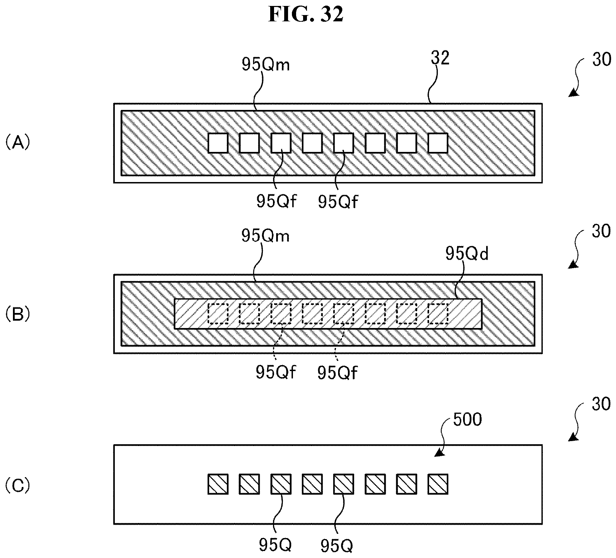

FIG. 32 is a plan view illustrating another process example of the same patterning method.

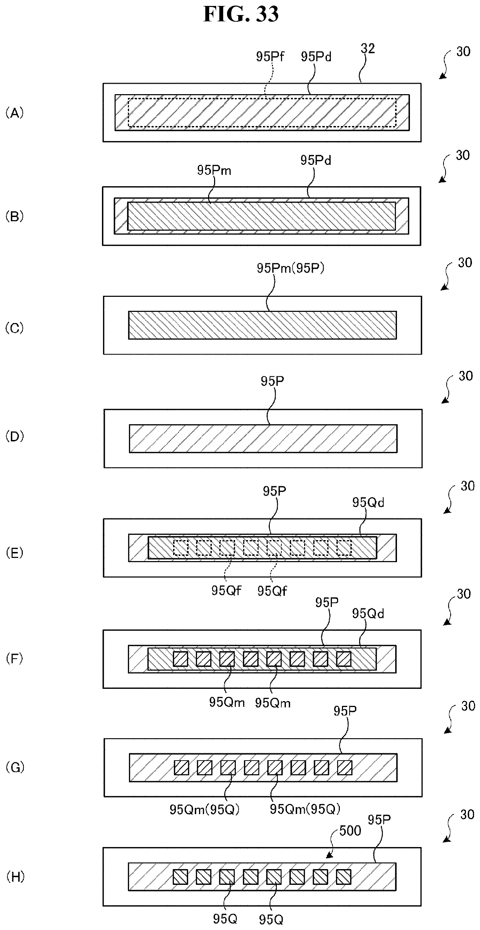

FIG. 33 is a plan view illustrating another process example of the same patterning method.

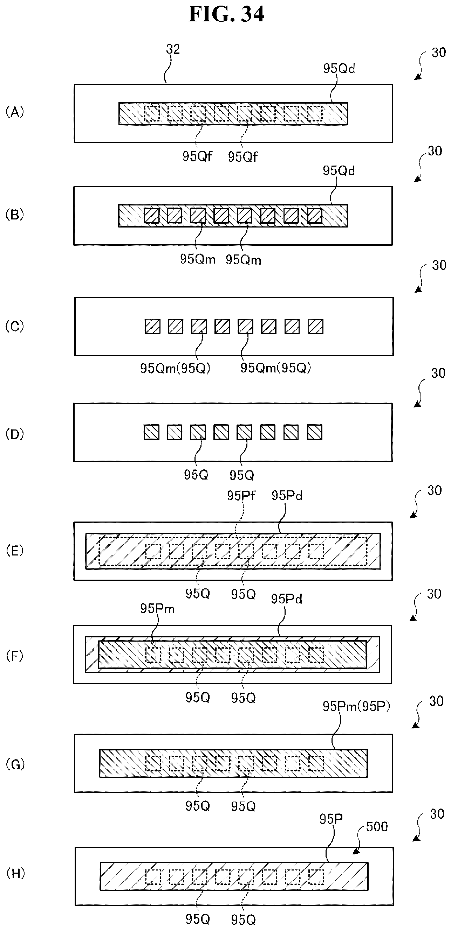

FIG. 34 is a plan view illustrating another process example of the same patterning method.

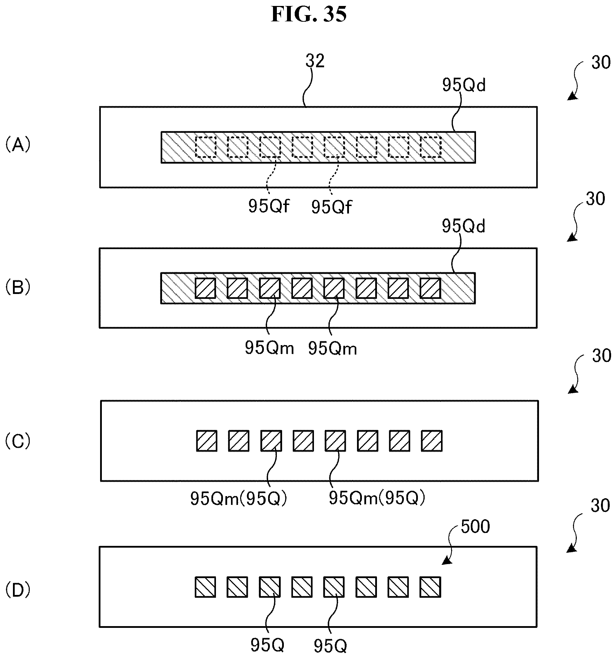

FIG. 35 is a plan view illustrating another process example of the same patterning method.

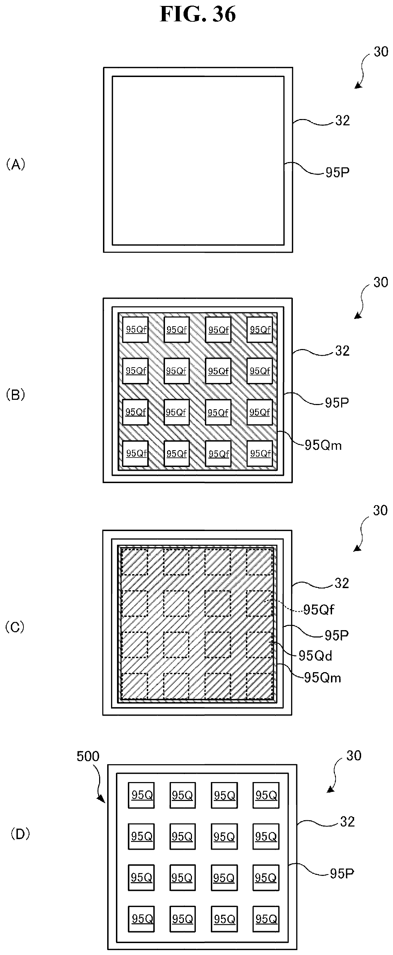

FIG. 36 is a plan view illustrating another process example of the same patterning method.

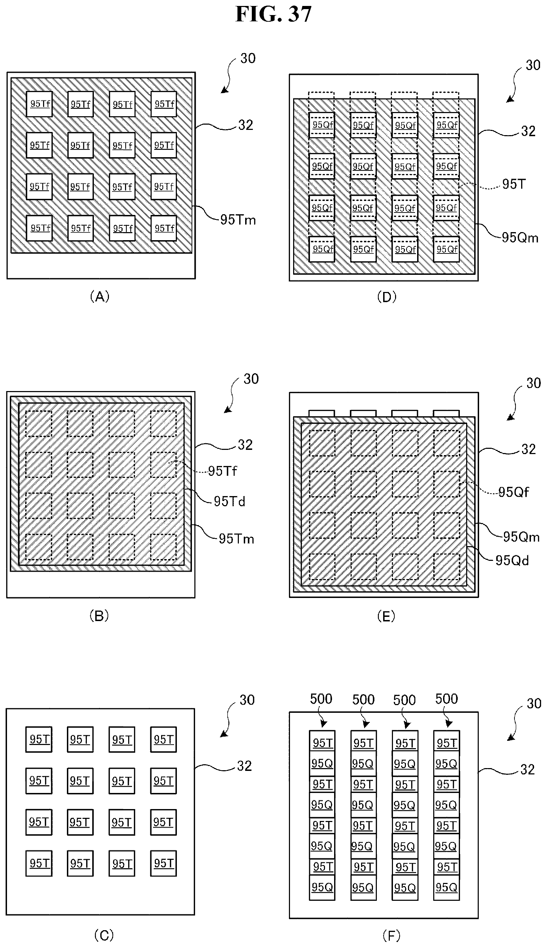

FIG. 37 is a plan view illustrating another process example of the same patterning method.

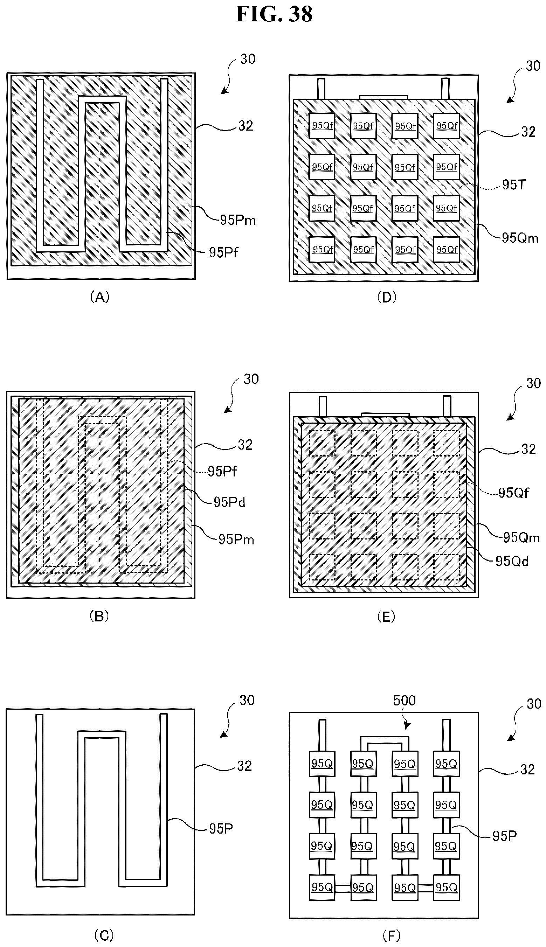

FIG. 38 is a plan view illustrating another process example of the same patterning method.

### Best Mode for Carrying Out the Invention

Hereinafter, embodiments will be described in detail with reference to the accompanying drawings.

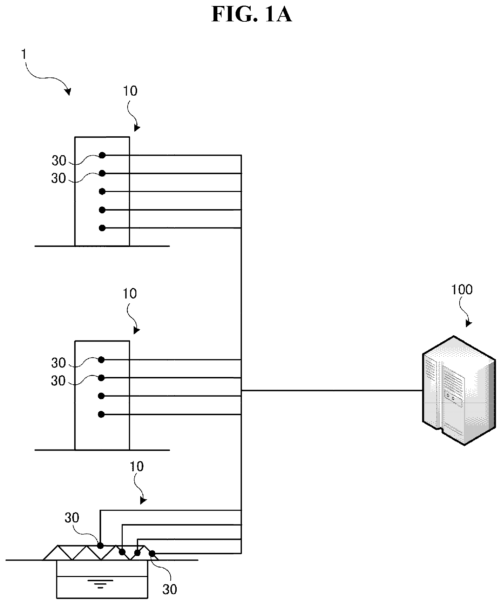

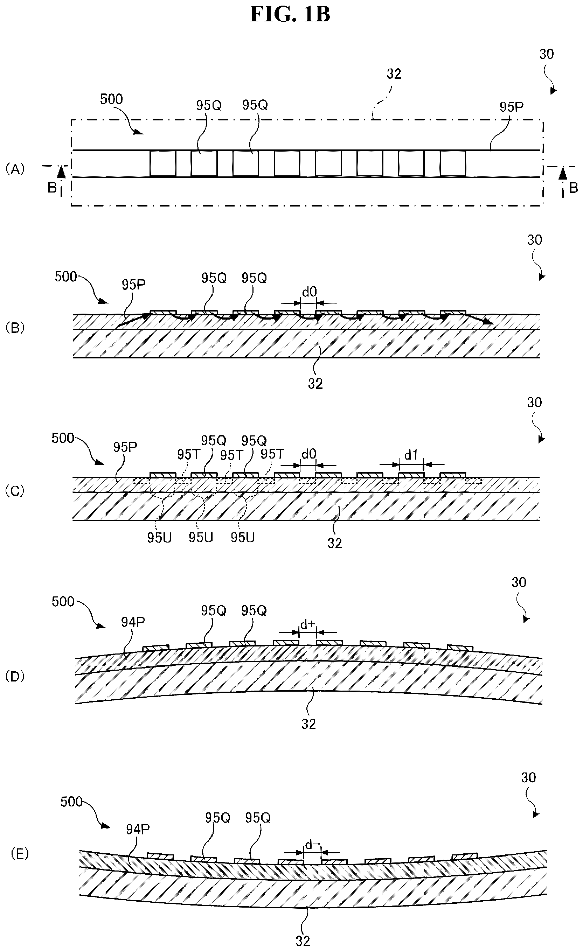

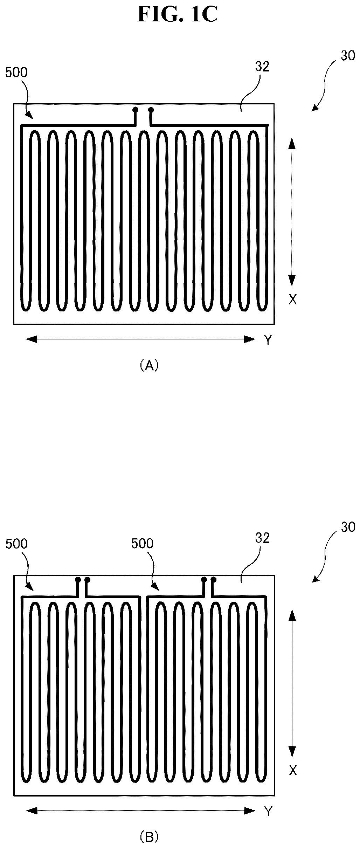

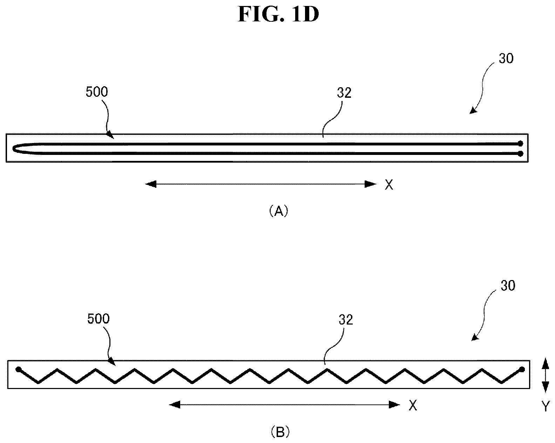

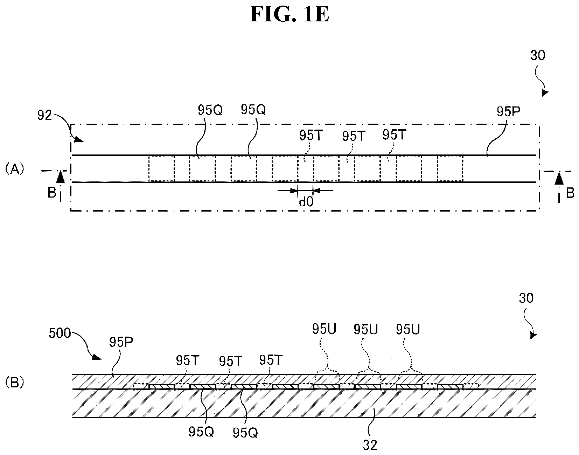

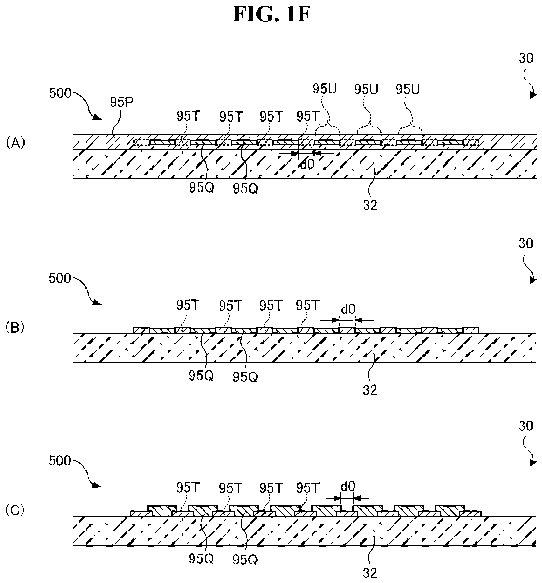

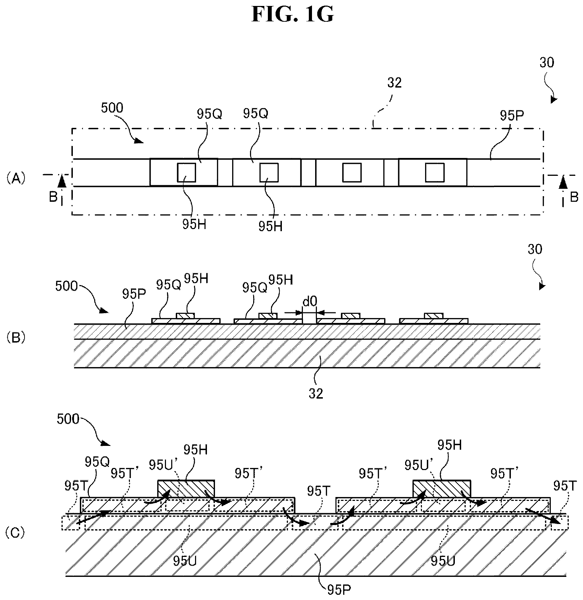

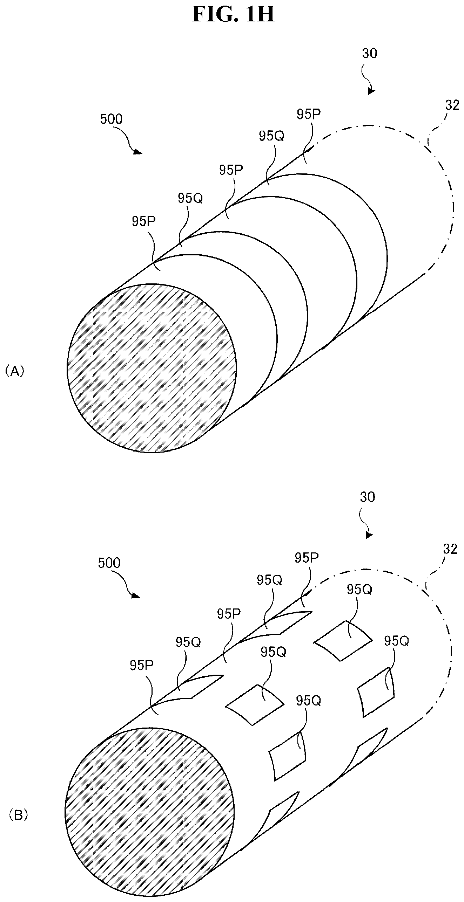

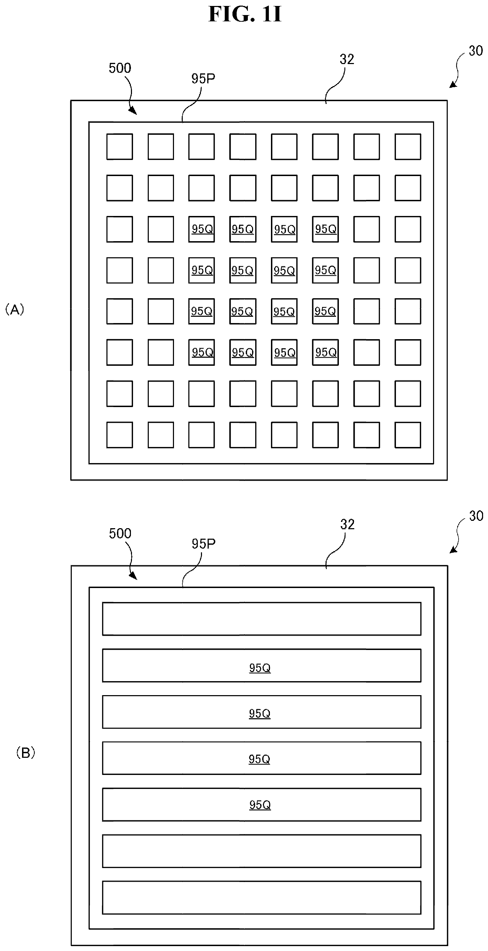

FIG. 1 illustrates a measuring system 1 of a construction using a sensor-structure-attached-member according to an embodiment of the present invention. The measuring system 1 includes a plurality of constructions 10 such as buildings, bridges, rails of railroads, roads or overpasses, a sensor-structure-attached-member 30 (for example, a structural material such as H-shaped steel, C-shaped steel, T-shaped steel, I-shaped steel or tubular steel of round or square shape, a screw fastening member, a fastening member such as a rivet, a wall material, or a concrete material) used as a member to determine a structure when building the constructions 10, and an information collection device 100 to be connected to the sensor-structure-attached-member 30 through wire or wireless communication.
(A) of FIG. 1B illustrates a sensor structure 500 applied to a parent material 32 of the sensor-structure-attached-member 30. The sensor structure 500 includes a plurality of low resistance partial conducting sections (conducting pieces) 95Q disposed on a surface of a belt-shaped base path 95P formed of a conductive material. Herein, a plurality of square (of course, not necessarily limited to the square shape, and to be provided intermittently as conduction portions with a relatively good conductivity) low resistance partial conducting sections 95Q is disposed with intervals therebetween to widen in a belt length direction on one surface of the base path 95P. Further, the base path 95P is formed of a conductive material with a relatively high resistance value (high resistivity). Meanwhile, the low resistance partial conducting sections 95Q correspond to a conductor (good conductor) with a low resistance value (low resistivity) when compared with the material of the base path 95P. Further, although not shown, an insulating layer is formed on a lower layer of the base path 95P. Here, a layer thickness of the base path 95P is set to be great, but not particularly limited, whereby a deformation of the base path 95P with respect to a torsion of the parent material 32 may increase, and a detection sensitivity may improve. However, when a layer thickness of the base path 95P is overly great, the base path 95P is easy to be greatly affected by a thermal expansion or thermal contraction. Thus, the base path 95P may be set not to be overly thick, for example, may be set to be thick, when compared with the thickness of the low resistance partial conducting sections 95Q. Further, the layer thickness of the low resistance partial conducting sections 95Q may be set to be less than or equal to 1 mm, and may be less than or equal to hundreds of µm, preferably 0.1 µm to tens of µm, when a productivity, an amount of material used, a thermal contraction, a thermal expansion, or a conformability to the deformation of the parent material 32 is added. Of course, if the base path 95P is overly thin, the base path 95P may be set by increasing a thermal insulation or a resistance value thereof.

When a voltage is applied to both ends of the base path 95P, it is assumed electrons flow while selecting a position of as low resistance as possible, as indicated by an arrow of (B) of FIG. 1B. In detail, at positions at which the low resistance partial conducting sections 95Q are absent (that is, regions of intervals d0 of the low resistance partial conducting sections 95Q), electric charges (electrons and the like) move in the base path 95P. Further, at positions at which the low resistance partial conducting sections 95Q are present, electrons move in the low resistance partial conducting sections 95Q or in a vicinity of a boundary between the base path 95P and the low resistance partial conducting sections 95Q.

Describing the sensor structure 500 in another aspect, in the base path 95P, a plurality of high resistance partial conducting sections 95T formed of a conductive material with a high resistivity is disposed with intervals of d1 therebetween, as shown in (C) of FIG. 1B. The intervals d1 correspond to a range in which the low resistance partial conducting sections 95Q are present. Further, the low resistance partial conducting sections 95Q formed of a conductive material with a low resistivity are disposed to connect adjacent high resistance partial conducting sections being paired. At the same time, the plurality of low resistance partial conducting sections 95Q is disposed with intervals of d0 therebetween on the high resistance partial conducting sections 95T. The intervals d0 correspond to a range in which the high resistance partial conducting sections 95T are present. Through the configuration as described above, the high resistance partial conducting sections 95T and the low resistance partial conducting sections 95Q are alternately connected such that it is assumed, when a voltage is applied to both ends, electrons move while alternately selecting the high resistance partial conducting sections 95T and the low resistance partial conducting sections 95Q.

In the base path 95P, the regions in which the high resistance partial conducting sections 95T are absent are defined as auxiliary conducting sections 95U. The auxiliary conducting sections 95U are arranged in parallel with the low resistance partial conducting sections 95Q, and also formed of a material with a high resistivity (here, a conductive material the same as that of the low resistance partial conducting sections 95Q), when compared with the conductive material of the low resistance partial conducting sections 95Q. The auxiliary conducting sections 95U or, virtually, adjacent high resistance partial conducting sections 95T being paired are electrically connected. However, since the low resistance partial conducting sections 95Q are parallel therewith, electrons move on the low resistance partial conducting sections 95Q side. That is, it is assumed that the auxiliary conducting sections 95U function as a wiring which does not bring a dominant electrical conduction, although there is a possibility of some currents flowing therein.

Consequently, the regions corresponding to the intervals d0 of the plurality of low resistance partial conducting sections 95Q in the base path 95P correspond to the high resistance partial conducting sections 95T, and at least a portion of the regions contacting the low resistance partial conducting sections 95Q in the base path 95P correspond to the auxiliary conducting sections 95U.

When the sensor structure 500 configured as described above is curved in one direction such that the surface of the parent material 32 is convex and the base path 95P extends in a longitudinal direction, as shown in (D) of FIG. 1B, the distance between adjacent low resistance partial conducting sections 95Q increases from d0 to d+. As a result of verification performed by the inventor(s) of the present invention, when the base path 95P extends, a resistance value between both ends thereof increases, and a convexly curved state of the parent material 32 may be detected.

When the sensor structure 500 is curved in the other direction such that the surface of the parent material 32 is concave and the base path 95P contracts in the longitudinal direction, as shown in (E) of FIG. 1B, the distance between adjacent low resistance partial conducting sections 95Q decreases from d0 to d-. As a result of verification performed by the inventor(s) of the present invention, in this example, the resistance value between both ends of the base path 95P decreases, and a concavely curved state of the parent material 32 may be detected. That is, by the sensor structure 500 of the present structure, physical phenomena such as a flexion and an extension and contraction in the longitudinal direction may be detected with a good sensitivity due to a change in resistance value. Further, in this example, by setting the thickness of the base path 95P with a high resistance value to be great, when compared with that of the low resistance partial conducting sections 95Q, the base path 95P may be configured to be greatly deformed with respect to the torsion of the parent material 32, when compared with an example of setting the thickness to be small.

The sensor structure 500 may be formed relatively simply and easily, and thus may be formed extensively with respect to a number of parent materials 32 to detect physical phenomena of the parent material 32. For example, as shown in (A) of FIG. 1C, in a case of the parent material 32 having extensive planes such as a wall surface, a floor, a ceiling, and a pillar, the sensor structure 500 being a single circuit is formed to extend over the entire region from a vicinity of one end to a vicinity of the other end in one direction X on a plane. In this example, the single circuit reciprocates a number of times and widens in the shape of bellows over the entire region from the vicinity of one end to the vicinity of the other end in the other direction Y perpendicular to the predetermined direction X. That is, the single circuit is structured to be disposed on the entire region from the vicinity of one end to the vicinity of the other end in both of the direction X and the direction Y. In addition, as shown in (B) of FIG. 1C, a plurality of sensor structures 500 widening over the entire region from from the vicinity of one end to the vicinity of the other end in one direction X may be disposed in the direction Y to detect physical phenomena of the entire plane.

For example, as shown in (A) of FIG. 1D, in a case of the parent material 32 having a belt-shaped surface elongated in one direction, such as a rail of a railroad or a frame such as a roof beam, the sensor structure 500 being a single circuit is formed to extend over the entire region from the vicinity of one end to the vicinity of the other end in the longitudinal direction X thereof. In addition, in the present example, the single circuit reciprocates one time in a longitudinal direction Z. Further, as shown in (B) of FIG. 1D, the sensor structure 500 widening over the entire region from the vicinity of one end to the vicinity of the other end in one direction X may meander in a direction Y to detect physical phenomena of the entire plane.

Next, an example of another configuration of the sensor structure will be described. In the sensor structure 500 of (A) and (B) of FIG. 1E, the low resistance partial conducting sections 95Q may be a lower layer side (the parent material 32 side), and the base path 95P may be an upper layer. That is, the low resistance partial conducting sections 95Q are formed on a rear surface of the base path 95P. In this example, it is also possible to obtain substantially the same output as that of the sensor structure 500 of FIG. 1A. Further, in the case of the present structure, the low resistance partial conducting sections 95Q may be formed first, and then the base path 95P may be formed to cover the entirety of the low resistance partial conducting sections 95Q. As a result, spaces of the intervals of d0 of the plurality of low resistance partial conducting sections 95Q are charged with the conductive material of the base path 95P, and thus the spaces correspond to the high resistance partial conducting sections 95T.

Further, the sensor structure 500 of (A) of FIG. 1F is provided in a structure in which the low resistance partial conducting sections 95Q are buried in the base path 95P (in the present embodiment, in an inner portion of a depthwise direction). In this structure, portions corresponding to the intervals d0 of the plurality of low resistance partial conducting sections 95Q correspond to the high resistance partial conducting sections 95T.

Further, the sensor structure 500 of (B) of FIG. 1F does not include a series of base paths 95P, and is formed as if the high resistance partial conducting sections 95T and the low resistance partial conducting sections 95Q are alternately arranged. In this example, edges of the high resistance partial conducting sections 95T and the low resistance partial conducting sections 95Q are electrically connected, and electrons alternately flow in the high resistance partial conducting sections 95T and the low resistance partial conducting sections 95Q. As this application, as shown in (C) of FIG. 1F, the high resistance partial conducting sections 95T and the low resistance partial conducting sections 95Q may have planar shapes, and the high resistance partial conducting sections 95T and the low resistance partial conducting sections 95Q may overlap such that (not end portions thereof) planes thereof may be in surface contact with each other. Here, a layer thickness of the high resistance partial conducting sections 95T may be set to be great, but not particularly limited, whereby a deformation of the high resistance partial conducting sections 95T with respect to a torsion of the parent material 32 may increase, and a detection sensitivity may improve. However, when the layer thickness of the high resistance partial conducting sections 95T is overly great, the high resistance partial conducting sections 95T are easy to be greatly affected by a thermal expansion or thermal contraction. Thus, the high resistance partial conducting sections 95T may be set not to be overly thick, for example, may be set to be thick, when compared with the thickness of the low resistance partial conducting sections 95Q. Further, the layer thickness of the low resistance partial conducting sections 95Q may be set to be less than or equal to 1 mm, and may be less than or equal to hundreds of µm, preferably, 0.1 µm to tens of µm, when a productivity, an amount of material used, a thermal contraction, a thermal expansion, or a conformability to the deformation of the parent material 32 is added. Of course, if the low resistance partial conducting sections 95Q are overly thin, the base path 95P may be set by increasing a thermal insulation or a resistance value thereof.

As shown in (A) through (C) of FIG. 1G, the sensor structure 500 may be multi-layered. In detail, in the base path 95P, the plurality of high resistance partial conducting sections 95T formed of a conductive material with a high resistivity are disposed with intervals therebetween. By the low resistance partial conducting sections 95Q stacked on the surface of the base path 95P, the corresponding high resistance partial conducting sections 95T may be electrically connected. Further, regions in which the high resistance partial conducting sections 95T are absent in the base path 95P correspond to the auxiliary conducting sections 95U. On the surface of the low resistance partial conducting sections 95Q, second low resistance partial conducting sections 95H are formed as a part thereof. The second low resistance partial conducting sections 95H are formed of a conductive material with a one-layer lower resistivity, when compared with the low resistance partial conducting sections 95Q. Thus, as shown in (C) of FIG. 1G, electrons moving in the low resistance partial conducting sections 95Q move further toward the second low resistance partial conducting sections 95H in the meantime and return to the low resistance partial conducting sections 95Q.

That is, focusing only on the low resistance partial conducting sections 95Q and the second low resistance partial conducting sections 95H, the low resistance partial conducting sections 95Q correspond to a so-called base path and include at least one pair of high resistance partial conducting sections 95T' and an auxiliary conducting section 95U' disposed therebetween. The second low resistance partial conducting sections 95H are provided to electrically connect high resistance partial conducting sections 95T' being paired. As a result, in the sensor structure 500 of the present example, high resistance partial conducting sections with a relatively high resistance and low resistance partial conducting sections with a relatively low resistance are formed in a multi-layered state, and thus the sensitivity may further improve.

Of course, in the sensor structure 500, when the low resistance partial conducting sections 95Q and the second low resistance partial conducting sections 95H are taken as an integral body and defined as low resistance partial conducting sections as a whole, the sensor structure 500 may be considered substantially the same as the sensor structure 500 of FIG. 1B.

Further, as shown in (A) of FIG. 1H, when the parent material 32 is a rod-shaped member (of which a cross-sectional shape is not limited to a circle, and may be a rectangular column), annular high resistance partial conducting sections 95T extending in a circumferential direction and annular low resistance partial conducting sections Q extending in the circumferential direction may be disposed alternately in an axial direction. When a voltage is applied to both ends of the axial direction, it is possible to detect movements such as a flexion, a torsion, and a tension of a parent material being a rod-shaped member with high precision. Further, as shown in (B) of FIG. 1H, a plurality of high resistance partial conducting sections 95T may be disposed with predetermined intervals therebetween in a circumferential direction.

Further, as shown in (A) of FIG. 1I, in the parent material 32 having a surface (a flat surface or a curved surface), a planar base path 95P may be formed to widen to the entire surface, and the plurality of low resistance partial conducting sections 95Q may be disposed on a surface of the base path 95C. In the present example, a plurality of square (not necessarily limited to the square shape, and conducting sections with a relatively good resistance value may be provided intermittently) low resistance partial conducting sections 95Q may be disposed with intervals therebetween to widen in a surface direction (for example, in a shape of matrices, a shape of a honeycomb, or a random shape). In the sensor structure 500, when a voltage is applied from two separate positions, it is possible to detect a deformation of the parent material 32. When a planar wiring is built, concern about disconnection is alleviated, and long-term stable sensing is achieved. Further, examples are not limited to the low resistance partial conducting sections 95Q disposed in the shape of matrices. As shown in (B) of FIG. 1I, a plurality of belt-shaped low resistance partial conducting sections 95Q may be disposed with intervals therebetween in a belt width direction, whereby sensing on the entire surface may be achieved.

Hereinafter, an example of applying the sensor structure 500 to a screw body will be described.

The sensor-structure-attached-member 30 is herein a male screw body or a female screw body, and may be used as a basic structure material of the constructions 10.

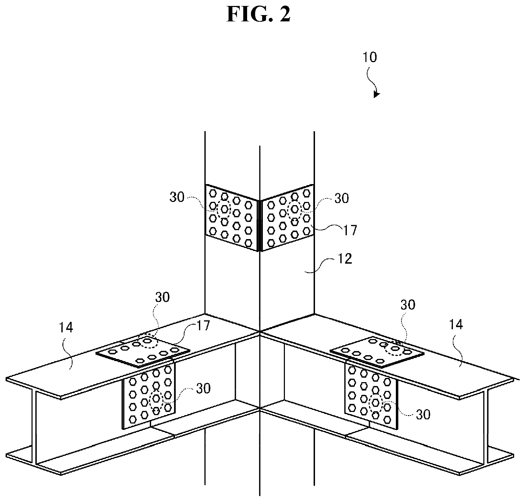

In detail, as shown in FIG. 2, the sensor-structure-attached-member 30 which is a screw fastening member is fastened using a connecting plate 17 at a plurality of positions of a joining portion to connect a column 12 which is a rectangular columnar steel material extending in a vertical direction of the constructions 10, or a joining portion to connect a roof beam 14 which is an H-steel material, so-called H-shaped steel, extending in a horizontal direction from the column 12. The sensor-structure-attached-member 30 is a portion to fasten structural materials of the constructions 10. As described above, the sensor-structure-attached-member 30 is involved in fastening between the structural materials, and thus may indirectly receive an internal stress generated in the structural materials. The column 12 or the roof beam 14, and the connecting plate 17 are also structural materials.

As shown in FIG. 2, places having different axial directions (fastening directions) may be selected in a plurality of sensor-structure-attached-members 30. In doing so, stress states applied back and forth, left and right, and up and down to the structural materials of the constructions 10 may be measured three-dimensionally and verified.

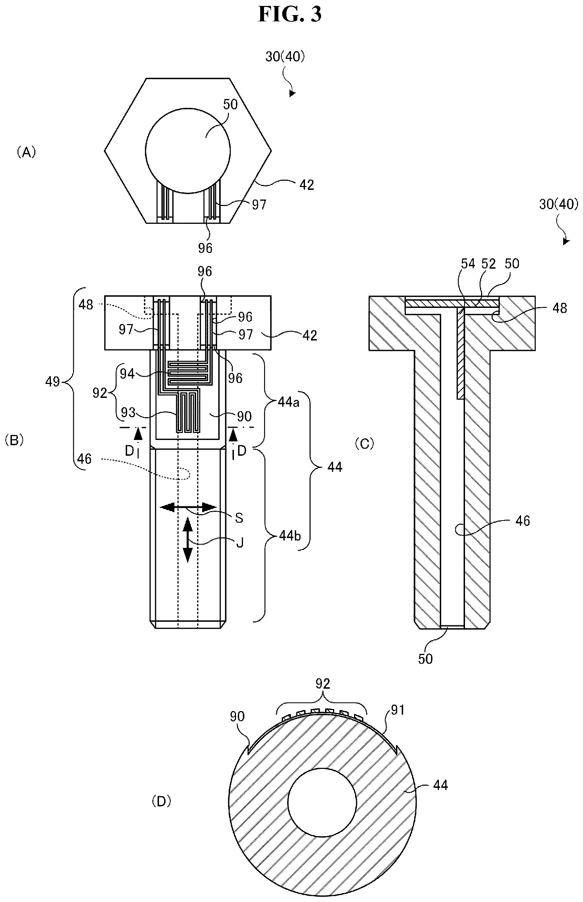

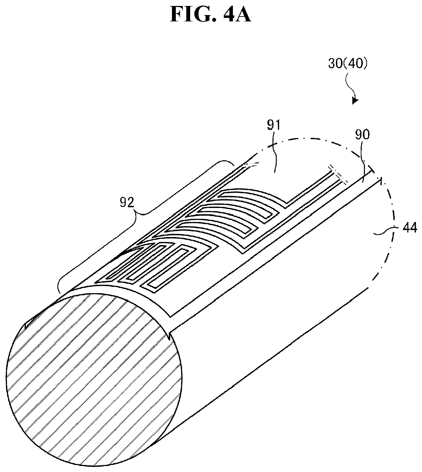

FIGS. 3 and 4A illustrate a basic structure of a case in which a male screw body 40 is employed as the sensor-structure-attached-member 30. The male screw body 40 is a so-called bolt, and includes a head part 42 and a shaft part 44. The shaft part 44 includes a cylindrical part 44a and a threaded part 44b. The cylindrical part 44a is not essential.

A head part receiving space 48 is formed in the head part 42, and a shaft part receiving space 46 extending in an axial direction is formed in the shaft part 44. The head part receiving space 48 and the shaft part receiving space 46 communicate, and have a structure in which the head part receiving space 48 extends more in a diameter direction than the shaft part receiving space 46. Herein, the head part receiving space 48 and the shaft part receiving space 46 are collectively referred to as an internal space 49.

A recess 90 is formed on an outer circumferential surface of the cylindrical part 44a, and a conduction path 92 for measuring a torsion is formed on a cylindrical bottom surface of the recess 90. The conduction path 92 includes a metallic material, and is deformed as the sensor-structure-attached-member 30 is deformed. When the conduction path 92 is deformed, an electrical characteristic such as a resistance thereof changes, and thus the conduction path 92 outputs a torsion state generated in the sensor-structure-attached-member 30. An electrically insulating layer 91 is formed directly on the bottom surface of the recess 90, and the conduction path 92 is formed directly on the electrically insulating layer 91.

The electrically insulating layer 91 may employ, for example, stacking printing, pad printing, coating, plating, and inkjet printing. Further, the electrically insulating layer 91 employs various schemes, for example, film forming by sputtering an insulating material while disposing a predetermined mask, applying a silica material and heating, or applying an organic insulating material such as a polyimide-based material, an epoxy-based material, a urethane-based material, or a silicon-based material. Further, in a case in which a parent material forming the conduction path 92 has an electrical conductivity, the electrically insulating layer 91 is formed through oxide coating by oxidizing a surface of the parent material. In a case in which the parent material is an aluminium-based material, the electrically insulating layer 91 may also be installed by alumite processing. However, the electrically insulating layer 91 is not limited thereto.

The conduction path 92 includes a first conduction path 93 and a second conduction path 94 that are independently established in parallel. The first conduction path 93 extends to reciprocate in an axial direction J which is a first direction, and detects a deformation of a surface of the sensor-structure-attached-member 30 in the first direction. The second conduction path 94 extends to reciprocate in a circumferential direction S which is a second direction perpendicular to the first direction, and detects a deformation of the surface of the sensor-structure-attached-member 30 in the second direction. Although a case of disposing a single first conduction path 93 is illustrated herein, a plurality of first conduction paths 93 may be disposed at positions having a predetermined phase difference (for example, 90° or 180°) in the circumferential direction, or may be disposed with intervals therebetween in the axial direction. The same is applicable to the second conduction path 94. The conduction path 92 is formed directly in the recess 90 or on the electrically insulating layer 91 by stacking printing using a conductive paste, pad printing, coating, plating, inkjet printing, or sputtering. A shape of a wiring may be set through etching by installing a mask corresponding to a shape of the conduction path 92. By directly forming the conduction path 92 as described above, the conduction path 92 is not stripped for a long time. In addition, when a so-called, existing strain gauge is provided in a measurement target using an adhesive layer formed of an adhesive, an error corresponding to a thickness of the adhesive occurs, or a great error occurs due to an installation direction or an installation angle with respect to the measurement target, and thus such installation is irrational. Since it is impossible to measure an accurate torsion due to a deterioration of the adhesive over time, a strain gauge may be formed directly as in the embodiment. Meanwhile, when the sensor structure is formed of a detachable (rotatable) material by the form of seal, an adhesiveness may be provided on a lower layer, and a peelable sheet layer may be provided on a surface thereof.

Outer surfaces of the first conduction path 93 and the second conduction path 94 are set to not protrude from the recess 90. That is, a depth of the recess 90 is set to be at least equal to a thickness of a wiring of the first conduction path 93 and the second conduction path 94. In doing so, the first conduction path 93 and the second conduction path 94 may not be damaged as being in contact with another member. Further, the first conduction path 93 and the second conduction path 94 may also be protected by forming cover layers on the outer surfaces of the first conduction path 93 and the second conduction path 94. The cover layers also include an insulating material. In addition, barrier layers with high oil resistance, water resistance, heat resistance, steam resistance, and weather resistances may also be installed.

A recess 96 is also formed on a seat surface 42A and a peripheral surface 42B of the head part 42. A wiring 97 is formed in the recess 46 to supply electricity from a battery 52 to the conduction path 92. Thus, when the connecting plate 17 is fastened by the seat surface 42A, the wiring 97 may not be in contact with the connecting plate 17. Further, when the head part 42 is rotated by a tool such as a wrench, the wiring 97 may not be in contact with the tool.

A substrate 54 to which the wiring 97 is connected and the battery 52 configured to supply power to the substrate 54 are received in the internal space 49. However, a short-range wireless communication tag does not necessarily need a type of battery or condenser. Further, although a case of building the battery 52 therein is illustrated herein, a battery box may be disposed outside and power may be supplied from the battery box to the sensor-structure-attached-member 30 in a wired and/or wireless manner. In addition, a case of operating the male screw body 40 using the battery 52 is illustrated herein. However, for example, in a case in which power is supplied from an outside by a power wiring using wires, the battery may be omitted. Further, in a case of a passive structure, such as an RFID, in which radio waves are received as energy from an external reader and the energy is used as power for operation, the battery 52 may also be omitted.

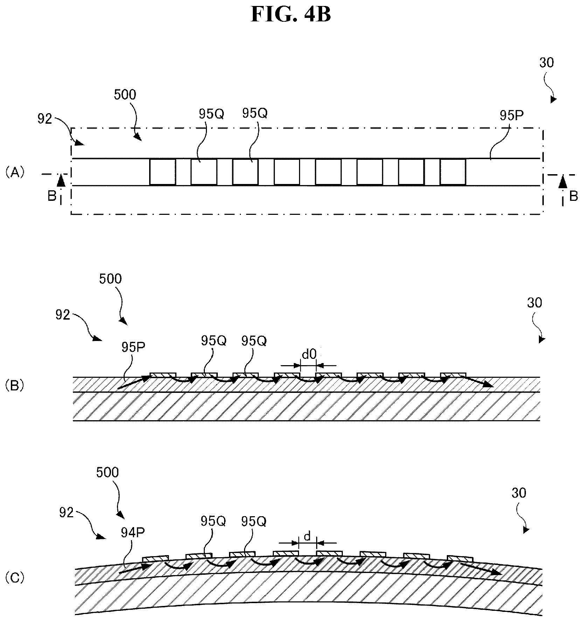

Further, to prevent an inflow of a foreign substance or moisture into the internal space 49, a cap 50 is installed at an opening portion of the internal space 49. By removing the cap 50 from the head part receiving space 48, the battery 52 may be replaced or the substrate 54 may be maintained without separating the male screw body 40 from the constructions 10. Rather than blocking using the cap 50, embedding using resin, rubber, or an adhesive may also be possible.
(A) of FIG. 4B illustrates an enlarged structure of the conduction path 92 (the first conduction path 93 and the second conduction path 94). The sensor structure 500 is formed in the conduction path 92. The sensor structure 500 is configured by disposing the plurality of low resistance partial conducting sections (conducting pieces) 95Q on the surface of the belt-shaped base path 95P formed of a conductive material. Herein, a plurality of square (of course, not necessarily limited to the square shape, and to be provided intermittently as conduction portions with a relatively good conductivity) low resistance partial conducting sections 95Q is disposed with intervals therebetween to widen in a belt length direction on one surface of the base path 95P. Further, the base path 95P corresponds to a conductor of a material with a relatively high resistance value, and the low resistance partial conducting sections 95Q correspond to a conductor (good conductor) with a relatively low resistance value. Further, although not shown particularly herein, an insulating layer is formed on a lower layer of the base path 95P.

When a voltage is applied to both ends of the base path 95P, electrons move and currents flow in the base path 95P and one surface layer of the base path 95P between the low resistance partial conducting sections 95Q adjacent at a distance d0. Thus, it is possible to allow currents to flow limitedly in one surface layer of the base path 95P.

Thus, when the conduction path 92 is curved in one direction such that one surface of the base path 95P extends as shown in (C) of FIG. 4B, a distance between adjacent low resistance partial conducting sections 95Q increases from d0 to d. As a result of verification performed by the inventor(s) of the present invention, a resistance value between both ends of the base path 95P increases, and thus a curved state may be detected. That is, by the conduction path 92 of the present structure, it is possible to increase a sensitivity to a change in resistance value by a flexion, an extension and contraction (in particular, an extension) in a longitudinal direction. In particular, when the surface (that is, a top surface in the present figure) of the low resistance partial conducting sections 95Q side of the base path 95P is curved to be convex, the low resistance partial conducting sections 95Q side extends in a longitudinal direction, and thus the resistance value between both ends of the base path 95P is easy to increase.

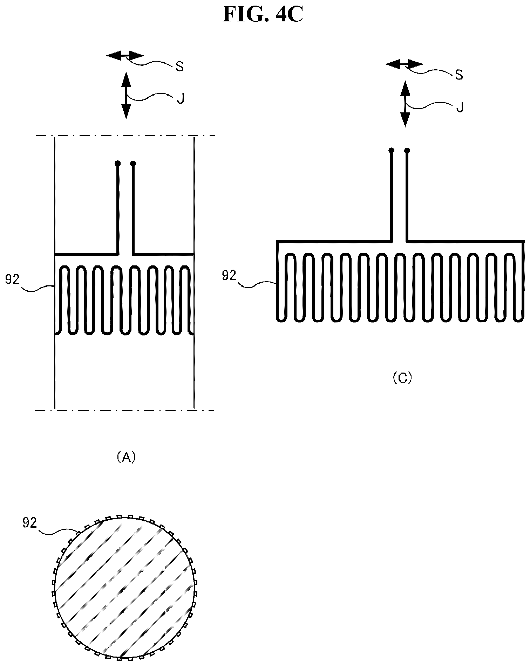

Further, FIG. 4B illustrates an example in which the first conduction path 93 is formed to widen in a partial range of a circumferential direction S, while extending and reciprocating in an axial direction J being a first direction. However, the embodiment is not limited thereto. For example, as shown in FIG. 4C, the conduction path 92 (the first conduction path 93) may be formed over approximately the entire circumference in the circumferential direction S, while extending and reciprocating in the axial direction J being the first direction. In doing so, even when the sensor-structure-attached-member 30 vibrates (is axially misaligned) or rotates in many directions, such a movement may be detected using the single conduction path 93.

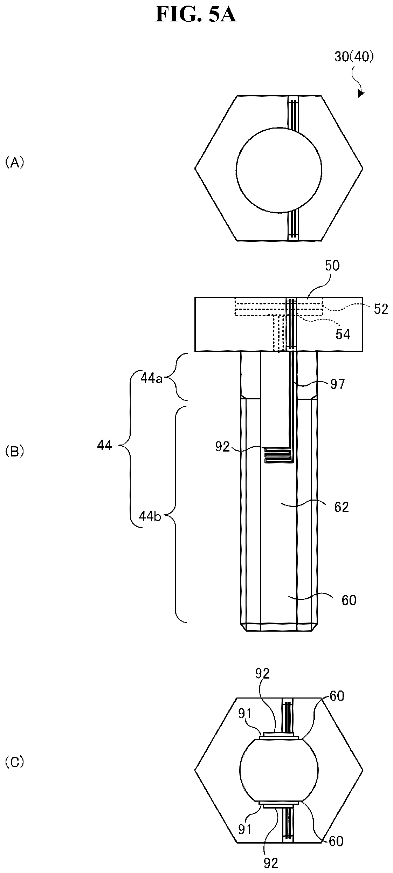

FIG. 5A illustrates another configuration of the male screw body 40. A recess (plane) 60 having a non-circular cross section is formed on the outer circumferential surface of the shaft part 44 of the male screw body 40 formed of an electrically insulating material. The recess (plane) 60 extends in an axial direction, and the conduction path 92 is formed directly therein. However, when an outer surface of the material of the male screw body 40 has a conductivity, an electrically insulating layer may be interposed. The recess 60 is disposed on both sides of a center axis line in a diameter direction. In doing so, for example, when a flexion moment is applied to the shaft part 44 of the male screw body 40, a compressive force is applied to the conduction path 92 of one axial direction and a tensile force is applied to the conduction path 92 of the other direction, and thus there may be a difference between resistances. Based on the difference, a change in the flexion moment applied to the male screw body 40 may be detected. Further, although a case of forming the plane 60 on the whole region of the axial direction of the shaft part 44 is illustrated, the recess (plane) 60 may also be formed restrictively in a region of the cylindrical part 44a.

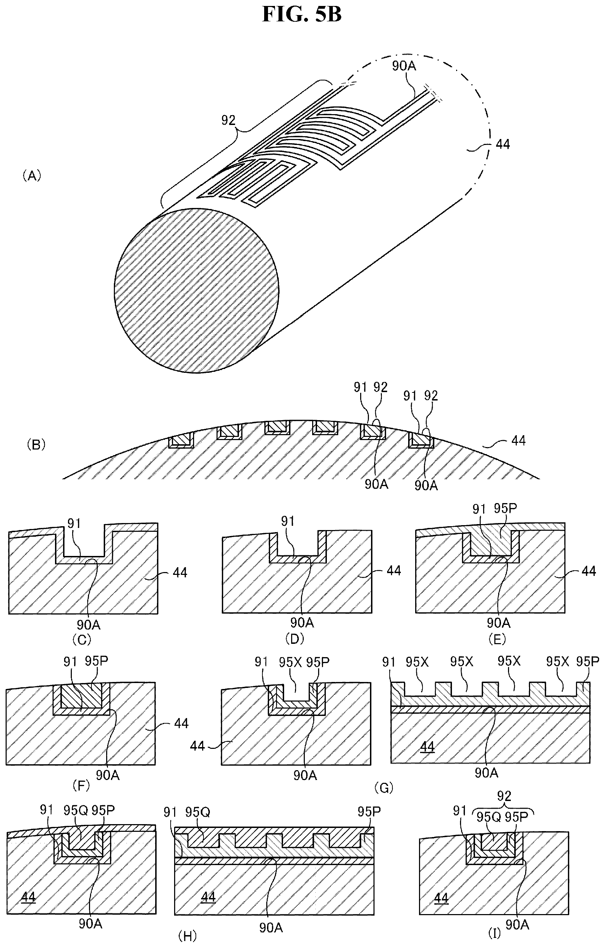

FIG. 5B illustrates still another configuration of the male screw body 40. A dent (recess) 90A configured to define the conduction path 92 is formed on the outer circumferential surface of the shaft part 44 of the male screw body 40. As shown in (B) of FIG. 5B, the electrically insulating layer 91 being a ground layer is formed on an inner circumferential surface of the dent 90A, and the conduction path 92 is formed directly on the electrically insulating layer 91. Thus, the conduction path 92 ends without being in contact with an external member, whereby a disconnection or peeling of the conduction path 92 may be restrained, and a deformation of the male screw body 40 being a target member may be directly measured.

The conduction path 92 is formed in the following order. First, as shown in (C) of FIG. 5B, the electrically insulating layer 91 is formed on the whole of the outer circumferential surface of the shaft part 44 by coating. As shown in (D) of FIG. 5B, a portion of the electrically insulating layer 91 out of the dent 90A is removed. As shown in (E) of FIG. 5B, a high-resistance value conductive material used as the base path 95P is formed on the whole of the outer circumferential surface of the shaft part 44 by coating. After that, as shown in (F) of FIG. 5B, a portion of the base path 95P out of the dent 90A is removed. At the same time, as shown in (G) of FIG. 5B, minute recesses 90X are consecutively formed with intervals therebetween in a longitudinal direction by etching, in the base path 95P. Then, as shown in (H) of FIG. 5B, a low-resistance conductive material used for the low resistance partial conducting sections 95Q is formed by coating to include an inside of the minute recesses 90X. After that, as shown in (I) of FIG. 5B, by removing a portion of the low-resistance conductive material out of the minute recesses 90X, the low resistance partial conducting sections 95Q are formed in the minute recesses 90X. Hence, the electrically insulating layer 91 and the conduction path 92 are formed in the dent 90A.

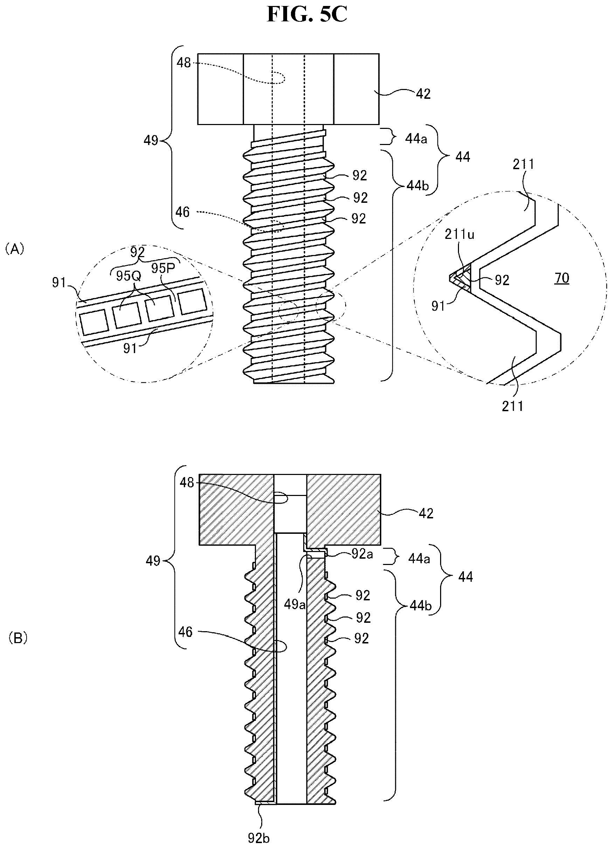

FIG. 5C illustrates a further configuration of the male screw body 40. The male screw body 40 includes the conduction path 92 formed in the threaded part 44b of the shaft part 44. In detail, as shown in a partially enlarged view (A) of FIG. 5C, the electrically insulating layer 91 and the conduction path 92 are spirally formed along a bottom portion (valley bottom) 211u of a thread groove between adj acent threads 211. There is a gap between the bottom portion 211u and a thread of a female screw body 70 to be screwed therewith. Thus, when the electrically insulating layer 91 and the conduction path 92 are formed using the gap efficiently, the male screw body 40 does not interfere with the female screw body 70. Further, the conduction path 92 is configured by disposing the plurality of low resistance partial conducting sections (conducting pieces) 95Q on the surface of the base path 95P. The bottom portion 211u of the thread groove may also be set deeper to form the conduction path 92. The conduction path 92 may also be formed on a flank side. In particular, when the conduction path 92 is formed in a recess that is recessed from a surface of the flank side, the conduction path 92 may not be disconnected by repeated detachments or frictions, and measurement may be stably performed for a long time. Further, when an overcoat with a high durability is installed on the surface of the conduction path 92, the durability of the male screw body 40 may improve.

When the conduction path is spirally formed along the thread groove, one end 92a of the conduction path 92 is positioned at the head part 42, and the other end 92b thereof is positioned at an end of the shaft part 44. Thus, as shown in (B) of FIG. 5C, the one end 92a of the conduction path 92 extends to the internal space 49 via a through-hole 49a formed in the head part 42 or the shaft part 44. The other end 92b extends to the internal space 49 via the shaft part receiving space 46.

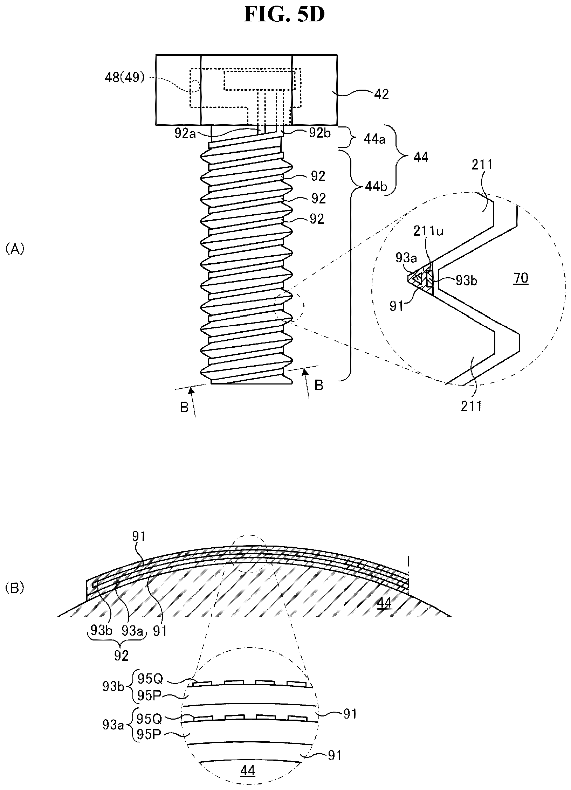

FIG. 5D illustrates a still another configuration of the male screw body 40. The male screw body 40 includes a pair of conduction paths 92 formed in the threaded part 44b of the shaft part 44. In detail, as shown in a partially enlarged view (A) of FIG. 5D, the electrically insulating layer 91 and a pair of conduction paths 93a and 93b are spirally formed along a bottom portion (valley bottom) 211u of a thread groove between adjacent threads 211. The pair of conduction paths 93a and 93b is formed to be separate from each other by the intervening electrically insulating layer 91.

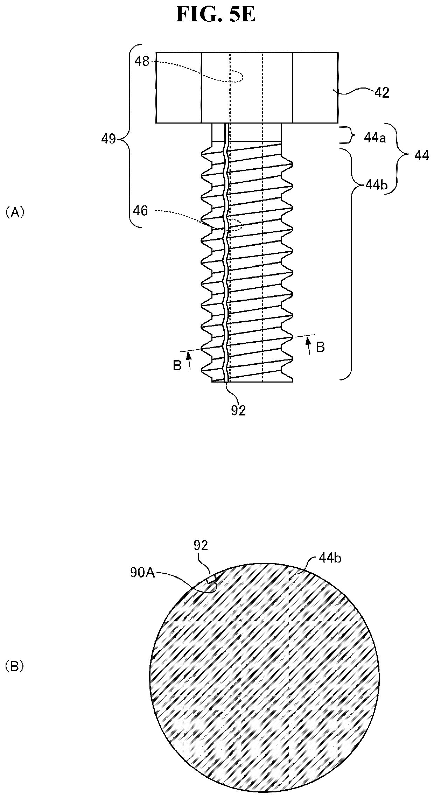

As shown in (B) of FIG. 5D, ends of an axial direction in the pair of conduction paths 93a and 93b are electrically connected. Thus, the pair of conduction paths 93a and 93b constitutes a single conduction path 92 that spirally reciprocates. Accordingly, the one end 92a and the other end 92b of the conduction path 92 are concentrated on the head part 42. Hence, the both ends 92a and 92b extend to the internal space 49 via the through-hole 49a formed in the head part 42 or the shaft part 44. The both ends 92a and 92b may also be concentrated at the end of the shaft part 44. The pair of conduction paths 93a and 93b is configured by disposing the plurality of low resistance partial conducting sections (conducting pieces) 95Q on the surface of the base path 95P.
(A) of FIG. 5E illustrates yet another configuration of the male screw body 40. The male screw body 40 includes the conduction path 92 formed in a longitudinal direction, in the threaded part 44b of the shaft part 44. In detail, as shown in an enlarged cross-sectional view (B) of FIG. 5E, the dent (recess) 90A is formed to extend in a longitudinal direction with respect to the threaded part 44b, and the conduction path 92 is formed directly on an electrically insulating layer being a ground layer on an inner circumferential surface of the dent 90A. The conduction path 92 is formed in the dent (recess) 90A although the conduction path 92 extends over a thread of the threaded part 44b, and thus inference may be prevented when being screwed with a female screw.

### <Suggestion of schemes of forming electrically insulating layer or conduction path>

There exist various schemes of forming the electrically insulating layer 91 or the conduction path 92. The schemes broadly include film forming (of course, forming a conduction path by masking other portions except for the conduction path, coating, film forming of a conductive layer, and removing the masking, or conversely forming an electrically insulating layer in a conduction path by film forming of an insulating layer in the conduction path may also be referred to as pattern forming.) and pattern forming. Representative examples of the film forming are gas phase film forming and liquid phase film forming. Further, representative examples of the pattern forming are printing (for example, screen printing, transferring, or ink spraying), writing with a pen, and foil stamping.

The gas phase film forming includes vacuum deposition (for example, resistor heating vacuum deposition, electron beam evaporation/cluster beam deposition, or flash evaporation), ion plating (for example, high frequency exciting ion plating or activation reactive deposition), sputtering (for example, direct current (DC) sputtering, radio frequency (RF) sputtering, flat magnetron sputtering, or dual ion beam sputtering), molecular beam epitaxy (MBE), physical vapor deposition (PVD) such as pulse laser deposition, thermal chemical vapor deposition (CVD), plasma-enhanced CVD (PECVD), metalorganic chemical vapor deposition (MOCVD), chloride CVD, photo-induced (chemical reaction) CVD, laser CVD, and CVD such as atomic layer epitaxy (ALE).

The liquid phase film forming includes plating, coating, a sol-gel process, and spin coating.

Further, in a case in which it is impossible to form a pattern using such film forming, patterning using a resist may also be possible. For example, when patterning is performed by a photoresist (photo lithography) or screen printing, a high precision, high density pattern may be formed. The resist may be selected appropriately based on a type of film forming. For example, the resist includes an etching resist, a solder resist, and a plating resist. When removing the resist, electrolysis is used.

In addition, although not shown particularly herein, the outer surface of the conduction path 92 may further be covered with a cover layer. The cover layer may be formed using the same scheme as the electrically insulating layer.

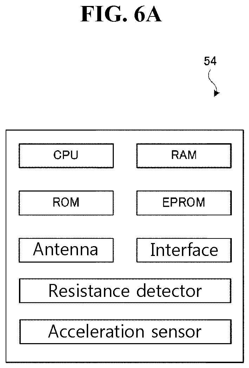

FIG. 6A illustrates a configuration of the substrate 54. The substrate 54 is a so-called radio frequency identification (RFID), and is configured as an analog circuit and/or an integrated circuit (IC) chip. The substrate 54 includes a central processing unit (CPU) configured to control all processes, a random-access memory (RAM) configured to read and write temporary data, a read-only memory (ROM) used to store a program, an erasable programmable read-only memory (EPROM) configured to store data, an interface configured to control communication between the substrate and an external device, an antenna configured to wirelessly communicate with an external device or to supply power using an external radio wave, and a resistance detector. In addition, an acceleration sensor is also installed in the substrate 54.

The resistance detector is connected to the wiring 97. The resistance detector simultaneously detects a resistance of the conduction path 92 by measuring a voltage value and/or a current value, converts the resistance into digital information (may also process the resistance into an analog signal), and provides the digital information to the CPU. Hence, resistance data is stored in the EPROM.

The acceleration sensor detects a vibration or a displacement and/or deformation of the substrate 54, and calculates displacement data of the male screw body 40. By this, a movement of a structure of the constructions 10 such as being bent, shaken, or deformed may be verified. The displacement data is stored in the EPROM. In a case in which the conduction path is utilized as a strain gauge, information that may be obtained from the conducting path as the strain gauge may be associated with time information to generate acceleration or speed data. Further, the acceleration sensor includes various types of acceleration sensors, such as generally known vibration-type sensors, optical sensors, and semiconductor-type sensors such as capacitive sensors, piezoresistive sensors, and gas temperature distribution-type sensors.

The resistance data or the displacement data stored in the EPROM is transmitted to an external device (information collection device 100) through the antenna at an occasional timing at which a manager collects information, or at a regular timing or an irregular timing. Of course, a variety of obtained data is transmitted irrespective of a wired manner or a wireless manner, and may be transmitted using analog signaling or digital signaling.

Information to identify an entity of the male screw body 40 (entity identification information) is stored in the ROM or the EPROM, and a location (address) of the constructions 10, a name thereof, and an installation location of the structure corresponding to the entity identification information are registered in the information collection device 100. By this, each male screw body 40 may be separately managed. Further, although a portion of the substrate 54 employs so-called RFID technology using an IC chip, the embodiment is not limited thereto, and other technologies may also be used.

### <Configuration of bridge circuit>

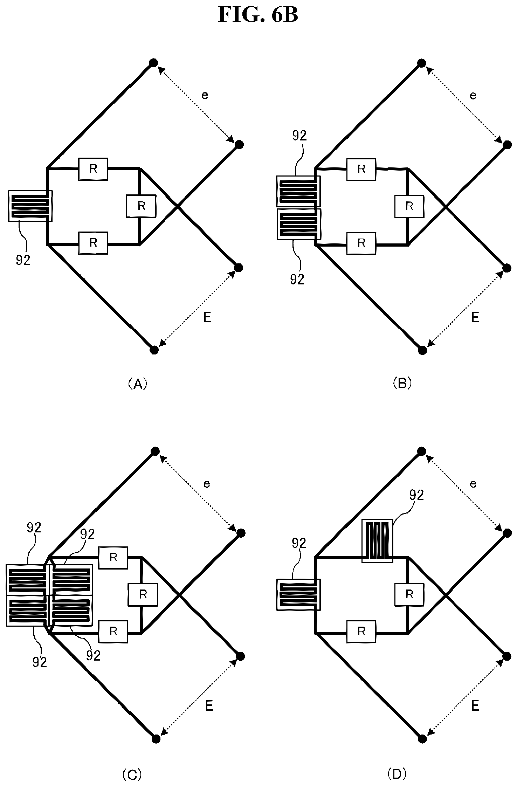

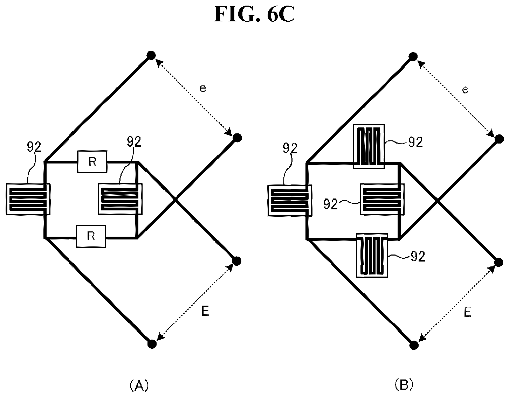

As shown in FIGS. 6B and 6C, a bridge circuit is used for a connection of the conduction path 92, which is not essential though. A wiring or a resistor R of the bridge circuit may be provided in the middle of the wiring 97 and/or the substrate 54. E denotes an input voltage, and e denotes an output voltage. A strain may be calculated from a variation in the output voltage. The bridge circuit may also be patterned directly with respect to the sensor-structure-attached-member being a measurement target.
(A) of FIG. 6B illustrates a bridge circuit of a 1-gauge scheme using a single conduction path 92. (B) of FIG. 6B illustrates a bridge circuit of a 2-series 1-gauge scheme using two conduction paths 92 disposed in series as a single gauge. The two conduction paths 92 may be disposed inside and outside a member in the same direction, and used to measure a tensile/compressive component while removing a bending component. (C) of FIG. 6B illustrates a bridge circuit of a 4-gauge scheme using two sets, each including two conduction paths 92 disposed in series, disposed in parallel. For example, four conduction paths 92 may be disposed at four positions with equal intervals in a circumferential direction of a columnar member in an axial direction to detect a tensile/compressive component. (D) of FIG. 6B illustrates a bridge circuit of a 2-gauge scheme using two conduction paths 92. The 2-gauge scheme may include a 2-gauge 2-active scheme of setting different measurement directions (extension and contraction directions) of the two conduction paths 92 and measuring respective stresses, or a 2-gauge 1-active 1-dummy scheme of setting the same measurement directions (extension and contraction directions) of the two conduction paths 92 and using one as a dummy.
(A) of FIG. 6C illustrates a bridge circuit of an opposite 2-gauge scheme of connecting two conduction paths 92 on opposite sides of a bridge. For example, the two conduction paths 92 may be disposed inside and outside a member in the same direction, and used to measure a tensile/compressive component while removing a bending component. (B) of FIG. 6C illustrates a bridge circuit of a 4-gauge scheme of connecting four conduction paths 92 on respective edges of a bridge. Two of the four conduction paths 92 may be disposed in a circumferential direction of a cylindrical member, and the other two thereof may be disposed in an axial direction, whereby the four conduction paths 92 may be used to measure an axial force. The 4-gauge scheme may also be used to measure a torque or a bending.

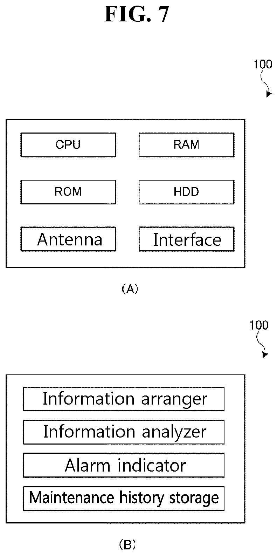

Further, although a Wheatstone bridge circuit is illustrated herein, other bridge circuits may also be used, for example, a Wien bridge oscillation circuit, a Maxwell bridge alternating current (AC) circuit, a Heaviside bridge AC circuit, a Sobel network bridge high frequency circuit, a Schering bridge circuit, a Kale Foster bridge AC circuit, and an Anderson bridge circuit. However, the Wheatstone bridge circuit may be selected to be used as a DC circuit.
(A) of FIG. 7 illustrates a hardware configuration of the information collection device 100. The information collection device 100 is a so-called server, and includes a CPU, a RAM configured to read and write temporary data, a ROM used to store a mainboard program, an erasable hard disk drive (HDD) configured to store data, an interface configured to control communication with an external device, and an antenna configured to wirelessly communicate with the male screw body 40. Further, the antenna is not limited to one disposed in a server constituting hardware of the information collection device 100. The antenna may also be a relay antenna disposed in a vicinity of the male screw body 40 of each construction 10.
(B) of FIG. 7 illustrates a program configuration of the information collection device 100. The information collection device 100 includes an information arranger, an information analyzer, an alarm indicator, and a maintenance history storage. The information arranger accumulates resistance data and displacement data collected from each male screw body 40 in a time series, in addition to names of the constructions 10, addresses thereof, locations (addresses) thereof, detailed installation locations, installation directions, a size of the sensor-structure-attached-member 30, and a manager (contact) corresponding to the entity identification information of the male screw body 40 described above.

The information analyzer interprets the collected resistance data and the movement data, and determines an abnormality. The abnormality may be determined by interpreting/determining, for example, whether an abnormal value appears with a lapse of time, or whether an overall mechanical balance of the constructions 10 is lost based on data collected from a plurality of sensor-structure-attached-members 30. The alarm indicator may be configured to perform processing of outputting (reporting using a screen, a character, an illumination, or a sound) a maintenance alarm or an alert to an operator when the information analyzer determines that abnormal data is included in an analysis result. The maintenance history storage may be configured to store a maintenance history of the constructions 10.

In particular, the information analyzer may periodically measure output values of a plurality of conduction paths 92 included in a single male screw body 40, thereby verifying, for example, a disablement of a portion of the conduction paths 92.

As described above, by arranging a plurality of sensor-structure-attached-members 30 in the structure of the constructions 10, a torsion and/or a displacement (a variety of information of data to be converted from torsion information) occurring in the sensor-structure-attached-members 30 may be detected. A result of the detection may be accessed in a wired and/or wireless manner and collected by the information collection device 100, and thus utilized as objective data. In addition, for example, the data collection may be automated, and simultaneously observation/collection may be performed approximately in real time. When an earthquake occurs, an amount of deformation or torsion or a change in an internal stress of the constructions 10 may be verified. Based on this circumstance, a priority of maintenance or a significant position may also be determined. Further, unlike information obtained from various sensors such as an acceleration sensor or a vibration gauge, acquisition of torsion data or stress data based on an electric resistance of the conduction path may enable a current state of a measuring target object to be verified more accurately from current value information of torsion (including a residual torsion) or torsion history information even in a stop state after an accelerative displacement or a vibration of the measuring target object disappears.

In particular, since the conduction path 92 is formed directly by printing, the sensor-structure-attached-member 30 may not be peeled easily, and an internal stress thereof may be verified stably for a long time (for example, for decades). In addition, since a plurality of conduction paths 92 is formed with respect to a single sensor-structure-attached-member 30, it may be determined that a corresponding position of the sensor-structure-attached-member 30 is damaged or broken, one of the conduction paths 92 is disconnected, or a portion of the conduction paths 92 are damaged or disabled in a case in which it is impossible to obtain outputs of a plurality of conduction paths 92 disposed in the same direction (which will be described further later). Hence, a position to be checked may be specified easily, and a matter to be checked may be clarified or a preparatory measure may be reviewed, and thus the maintenance may be performed quickly. Further, while one of the conduction paths 92 is disabled, a torsion may be detected through another one of the conduction paths 92, and thus a measurement may be continued stably for a long time by this multi-structure.

Further, the electrically insulating layer 91 is also formed directly on a surface of a member by printing or sputtering, and thus may not be peeled or exfoliated easily for a long time (for example, for decades). Hence, an internal stress thereof may be verified stably by the conduction path 92 formed directly on the outer surface of the electrically insulating layer 91.

Further, since the sensor-structure-attached-member 30 includes the first conduction path 93 and the second conduction path 94, torsions or stresses applied in multiple directions may be measured simultaneously. Thus, external forces, stresses, or stress distributions applied to the structures 10 may be verified and analyzed more precisely.

Further, although the male screw body 40 is employed as the sensor-structure-attached-member 30, various fastening methods may be used. In view of an objective of the measuring system 1, the male screw body 40 may need to be provided in a structure that is not loosened at all.

As an example of this structure, FIG. 8A illustrates an example of building the sensor-structure-attached-member 30 that is completely not loosened by forming two types of male screw spiral grooves in a threaded part 40b of the male screw body 40 and screwing, with the male screw body 40, a first female screw body 70A to be screwed with the spiral groove of one direction and a second female screw body 70B to be screwed with the spiral groove of the other direction, and simultaneously inserting a device configured to prevent a relative rotation therebetween. The conduction path 92 may be formed in the cylindrical part 44a of the male screw body 40.

As shown in (A) of FIG. 8B or (C) of FIG. 8B, the threaded part 40b of the male screw body 40 may include threads 211 that form an approximate diamond shape in a state of being unfolded into a plane, the threads 211 formed alternately at a phase difference of 180° in an axial direction. Further, conduction paths of different directions may be stacked through an intervening insulating layer.

As shown in (B) of FIG. 8B, the approximately diamond-shaped threads 211 include alternately a thread 211a that forms one axial direction line, and another thread 211b that forms an axial direction line at a phase difference of 180° therefrom. As shown in (B) of FIG. 8B, the threads 211 is provided by forming a ridge line part that is highest at a center in a circumferential direction and low at both ends of the circumferential direction. Thus, the threads 211 of the threaded part 40b are approximately crescentic threads and/or a valley that extends in the circumferential direction, in a surface direction perpendicular to a center of axis (screw axis), and are disposed alternately on one side (the left side of the drawing) and the other side (the right side of the drawing). This circumferential structure is a structure in which a first spiral groove indicated using an arrow A overlaps a second spiral groove indicated using an arrow B, the second spiral groove having an opposite lead direction to that of the first spiral groove. Hence, the threaded part 40b is freely screwed with both the first female screw body 70A including right-handed threads and the second female screw body 70B including left-handed threads.

As described above, in a case of employing a structure of the threaded part 40b of the male screw body 40 of FIG. 8B, the conduction path 92 may be formed in one spiral groove and another spiral groove as shown in (A) of FIG. 8C. In doing so, the conduction path 92 may proceed along the one spiral groove in one direction of the axial direction (see an arrow A), and proceed along the other spiral groove in another direction of the axial direction (see an arrow B), whereby reciprocation in the axial direction may be enabled by the single continuous conduction path 92. Hence, both ends of the conduction path 92 may be concentrated on the head part or at the shaft end.

Further, as shown in (B) of FIG. 8C, the conduction path 92 may be formed such that a boundary between the one thread 211a and the other thread 211b may form a zigzag. In this example, by a zigzag conduction path A positioned on a boundary on a face side of (B) of FIG. 8C, and a zigzag conduction path B positioned on a boundary on a back side of the same figure, the conduction path 92 may reciprocate in the axial direction.

Further, as shown in (C) of FIG. 8C, the conduction path 92 may be formed to progress in zigzags in a vicinity of an approximately diamond shape of the one thread 211a arranged in the axial direction. In doing so, one zigzag conduction path 92 may enable progress in one direction of the axial direction (see an arrow A), and another zigzag conduction path 92 may enable progress in another direction of the axial direction (see an arrow B), whereby reciprocation in the axial direction may be enabled by the single continuous conduction path 92. This conduction path 92 is provided in a structure in which a figure-of-eight conduction path 92 is continuous in the axial direction.

In another example, as shown in FIG. 9, a scheme of performing loosening prevention using a washer 150 may be employed. For example, a screw-body-side seat part 122 is formed at a part corresponding to a lower portion or a root of the head part 42 of the male screw body 40, a first receiving part 160 is formed on one side (surface side of FIG. 9) of the washer 150, and a first engaging mechanism A is provided therebetween. The first engaging mechanism A is a ratchet device. When the male screw body 40 is rotated in a loosening direction, the first receiving part 160 and the screw-body-side seat part 122 engage each other, and the first engaging mechanism A prevents a relative rotation of the first receiving part 160 and the screw-body-side seat part 122 in the corresponding rotating direction.

A second receiving part 170 is formed on another side (lower surface side of FIG. 9) of the washer 150. The second receiving part 170 faces the structure (the column 12 or the roof beam 14) of the constructions 10. A member-side seat part 182 facing the second receiving part 170 of the washer 150 is formed as a hole in the structure 12 or 14. A second engaging mechanism B is provided between the member-side seat part 182 and the second receiving part 170 of the washer 150. In detail, the shape of the member-side seat part 182 and the second receiving part 17 is a non-circular shape with respect to a center of axis. When the washer 150 rotates in the loosening direction, the second receiving part 170 and the member-side seat part 182 engage each other, and the second engaging mechanism B prevents a relative rotation of the second receiving part 170 and the member-side seat part 182 in the corresponding rotating direction. In response to the operations of the first engaging mechanism A and the second engaging mechanism B, a relative rotation of the male screw body 40 and the structure 12 or 14 is restricted by the intervening washer 150 when the male screw body 40 rotates in the loosening direction.

In this example, the conduction path 92 may be formed in the cylindrical part of the male screw body 40, in the second receiving part 170 of the washer 150, or on an outer circumferential surface of the washer 150.

Further, as shown in FIG. 10, loosening prevention may also be performed using the washer 50 as the female screw body 70. Amale-screw-side cooperation area 80 having a non-circular cross section when viewed from the axial direction is formed in the shaft part 44 of the male screw body 40. The male-screw-side cooperation area 80 may also act as the plane 60 described above.

The first engaging mechanism A is provided on a plane on which the washer 50 and the female screw body 70 face each other. The first engaging mechanism A is, for example, a ratchet device. When the female screw body 70 rotates in a loosening direction with respect to the male screw body 40 to be screwed therewith, the male screw body 40 and the washer 50 engage each other, and the first engaging mechanism A prevents a relative rotation of the male screw body 40 and the washer 50 in the corresponding rotating direction. Another side of the washer 50 faces the sensor-structure-attached-member 12 or 14.

A through-hole 82 of the male screw body in the washer 50 has a non-circular shape when viewed from the axial direction. Thus, the through-hole 82 engages the male-screw-side cooperation area 80 of the male screw body 40 in a circumferential direction (which is defined as an assistant engaging mechanism B).

As described above, by the first engaging mechanism A and the assistant engaging mechanism B, the female screw body 70 may be provided in a structure that is not loosened.

In this example, the conduction path 92 may be formed in the shaft part 44 of the male screw body 40, on the outer circumferential surface of the female screw body 70, in a groove of a female threaded part, or on a seat surface of the washer 150.

Further, in the above embodiment, a case of forming the conduction path 92 in the male screw body 40 being a member is illustrated. However, the embodiment is not limited thereto. For example, the conduction path 92 may also be formed on a plate material 300 including metal or reinforced resin as shown in (A) of FIG. 11. Engaging parts 302 to be fastened to a counterpart member are formed at two or more positions on the plate material 300 using bolts or rivets or by welding. Thus, the plate material 300 extends, contracts, or is distorted in response to a deformation of the counterpart member. A plurality of (here, four) first conduction paths 93 that reciprocate in a first direction X are disposed on the plate material 300 in a shape of matrices. In detail, the first conduction paths 93 are disposed in a shape of grids configured by a plurality of positions spaced apart in the first direction and a plurality of positions spaced apart in a second direction Y which is perpendicular to the first direction X. When the first conduction paths 93 are disposed in the shape of matrices as described above, detection may also be performed with respect to a torsion (see an arrow P) with an axis corresponding to the first direction X of the plate material 300 from a difference of an output of each first conduction path 93. In addition, a stress in the first direction X may be detected using another first conduction path 93 although a portion of the first conduction paths 93 are disabled.

For example, as shown in the plate material 300 of (B) of FIG. 11, a plurality of (here, two) first conduction paths 93 that reciprocate in the first direction X, and a plurality of (here, two) second conduction paths 94 that reciprocate in the second direction Y may be disposed in a shape of matrices. One pair of the first conduction paths 93 is disposed at positions spaced apart from each other in the second direction Y. One pair of the second conduction paths 94 is disposed at positions spaced apart from each other in the second direction Y, further at positions spaced apart from the first conduction paths 93 in the first direction X. One pair of engaging holes 302 is formed in a vicinity of both ends of the plate material 300 at positions spaced apart from each other in the second direction Y. In doing so, in addition to the extension and contraction in the first direction X, extension and contraction in the second direction Y may also be detected. Further, a flexion moment (see an arrow Q) of a rotation in a third direction Z which is perpendicular to both the first direction X and the second direction Y may also be detected.

In another example, as shown in the plate material 300 of (C) of FIG. 11, a plurality of (here, two) first conduction paths 93 that reciprocate in the first direction X, and a plurality of (here, two) second conduction paths 94 that reciprocate in the second direction Y may be disposed in a shape of zigzag matrices. In detail, one pair of the first conduction paths 93 is disposed at positions spaced apart from each other in the first direction X and the second direction Y. One pair of the second conduction paths 94 is also disposed at positions spaced apart from each other in the first direction X and the second direction Y. In doing so, various stresses such as the extension and contraction in the first direction X, the extension and contraction in the second direction Y, a torsion (see an arrow P) with an axis corresponding to the first direction X, a torsion (not shown) with an axis corresponding to the second direction Y, and a flexion moment (see an arrow Q) of a rotation in the third direction Z which is perpendicular to both the first direction X and the second direction Y may be detected.

For example, as shown in FIG. 12, the sensor-structure-attached-member (the plate material 300) may be utilized as a connecting plate when fastened to a steel material by bolts. Thus, more various stresses may be measured by disposing a plurality of such plate materials 300 in various directions.

Further, the sensor-structure-attached-member is not limited to the member in the above embodiments. Hereinafter, the member to which the present invention is applicable will be suggested in various aspects. In addition, it is obvious that the application of the present invention is not limited to the member suggested herein, and the present invention is also applicable other members.

### <Suggestion of member in aspect of material>

A material of the member includes metal and non-metal. The metal includes pure substances, such as aluminium, copper, silver, gold, iron, nickel, tungsten, titan, and zinc, or compounds or mixtures thereof, for example, alloys such as brass, stainless steel, and a magnesium alloy. The non-metal includes wood, plastic, paper, flame-retarded wood, plywood, glass, ceramics, pottery, porcelain, rubber, natural resin, synthetic resin, concrete, and asphalt, and composite materials thereof.

Ferrous metal includes steel (carbon content<0.02%) and cast iron (carbon content>2.14%). The steel includes common steel such as rolled steel for general structures (SS), rolled steel for welding structures (SM), or cold rolled steel (SPCC), and special steel such as alloy steel for machine structural use, tool steel, or special purpose steel. The alloy steel for machine structural use includes alloy steel such as chrome steel (SCr) or nickel chrome steel (SNC). The tool steel includes carbon tool steel (SK), alloy tool steel (SKD), and high speed tool steel (SKH). The special purpose steel includes low alloy spring steel (SUP), bearing steel (SUJ), free-cutting steel (SUM), high alloy stainless steel (SUS), heat resistant steel (SUH), and high manganese steel. The cast iron includes gray cast iron (FC) and nodular graphite cast iron (FCD).

Nonferrous metal includes light metal such as aluminium, magnesium, sodium, potassium, calcium or lithium titanium, base metal such as copper, tin, zinc or lead, rare metal such as nickel, chromium, manganese, molybdenum, tungsten, bismuth, cadmium or cobalt, a rare earth element such as cerium, neodymium or praseodymium, precious metal such as gold, silver or platinum, and radioactive metal such as uranium or plutonium, and alloys thereof.

The wood includes camellia wood, tunnoki wood, camphor wood, fir wood, spruce wood, wood from other evergreens, maple wood, cherry tree wood, larch wood, beech wood, Mongolian oak wood, and wood from other deciduous trees, and further includes plywood, laminated wood, resin composite wood, and wood specially designed by resin reinforcement or flame retardance.

The plastic (synthetic resin) includes thermosetting resin such as phenolic resin (PF), epoxy resin (EP), melamine resin (MF), urea resin (UF), unsaturated polyester resin (UP), Alkyd resin, polyurethane (PUR), or thermosetting polyimide (PI), thermoplastic resion (general purpose plastic) such as polyethylene (PE), high density polyethylene (HDPE), medium density polyethylene (MDPE), low density polyethylene (LDPE), polypropylene (PP), polyvinyl chloride (PVC), polyvinylidene chloride, polystyrene (PS), polyvinyl acetate (PVAc), polyurethane (PUR), Teflon (registered trademark) (polytetrafluoroethylene (PTFE)), acrylonitrile butadiene styrene (ABS) resin, acrylonitrile-styrene (AS) resin or acrylic resin (PMMA), thermoplastic resin (engineering plastic) such as various types of nylon, that is, polyamide (PA), polyacetal (POM), polycarbonate (PC), modified polyphenylene ether (m-PPE, modified PPE, PPO), polyethylene terephthalate (PET), glass fiber reinforced polyethylene terephthalate (GF-PET), polyester including polybutylene terephthalate (PBT), or cyclic polyolefin (COP), and thermoplastic resin (super high-performance plastic) such as polyphenylene sulfide (PPS), polysulfone (PSF), polyether sulfone (PES), amorphous polyarylate (PAR), liquid crystal polymer (LCP), polyether ether ether ketone (PEEK), thermoplastic polyimide (PI) or polyamide imide (PAI), and polymer alloys being composites thereof, and so-called fiber-reinforced plastic (FRP) made by mixing reinforcing materials such as glass fiber, carbon fiber, silicon fiber, aramid fiber and metal fiber or various types of reinforcing materials.

The paper includes paper made of cannabis sativa, tapa-cloth-tree, gampi tree, paper mulberry, spindle tree, paper bush, bamboo, straw (rice straw or wheat straw), flax, cotton, Indian sugarcane, Manila flax, kenaf, banana, oil palm or other non-timber raw paper materials, paper made of broadleaf tree, needleleaf tree, wood chip, waste paper, recycled paper or other wood raw paper materials, and paper specially designed by resin reinforcement or flame retardance.

Flame-retarded materials include flame-retarded wood, flame-retarded plywood, a flame-retarded fiberboard, and a flame-retarded plastic plate. The plywood includes plywood for structure, plywood for concrete mold (concrete panel), common plywood, flame-retarded plywood, fancy plywood, and curved plywood.

The glass includes soda lime glass, potassium glass, crystal glass, quartz glass, polarizing glass, double glazing (eco glass), tempered glass, laminated glass, heat-resistant glass/borosilicate glass, bulletproof glass, glass fiber, so-called photocatalytic cleaning glass including a material formed by providing a titanium oxide layer on a surface or forming an ultrafine asperity structure or water glass, uranium glass, acrylic glass, dichromic glass, gold stone/red gold stone/bronze gold stone/blue gold stone, glass ceramics, low melting point glass, metallic glass, Saphiret, phase separation glass, porous glass, liquid glass, hybrid glass, organic glass, and lead glass.

The ceramics include element-based ceramics such as oxide-based ceramics, hydroxide-based ceramics, carbide-based ceramics, carbonate-based ceramics, nitride-based ceramics, halide-based ceramics or phosphate-based ceramics, and fine ceramics such as barium titanate, high-temperature superconducting ceramics, boron nitride, ferrite, lead zirconate titanate, aluminium oxide, silicon carbide, silicon nitride, steatite, zinc oxide or zirconium oxide.

The pottery includes earthenware, stoneware (for example, semiporcelain or high-fired unglazed ceramics), chinaware, porcelain.

Synthetic rubber includes an R-group (except for natural rubber) such as butadiene rubber (BR), styrene/butadiene rubber (SBR), chloroprene rubber (CR), nitrile rubber (NBR) or polyisobutylene (butyl rubber IIR), an M-group such as ethylene propylene rubber (EPM or EPDM), chlorosulfonated polyethylene (CSM), acrylic rubber (ACM) or fluororubber (FKM), an O-group such as epichlorohydrin rubber (CO or ECO), a U-group such as urethane rubber (U), and a Q-group such as silicone rubber.

The concrete includes normal concrete, high strength concrete, early strength concrete, shielding concrete, light weight concrete, greening concrete, watertight concrete, and reinforced concrete. The reinforced concrete includes reinforced concrete, bamboo-reinforced concrete, concrete filled tube (CFT), steel fiber reinforced concrete (SFRC), Glass fiber reinforced concrete (GFRC or GRC), carbon fiber reinforced carbon (CFRC), and so-called ancient concrete represented by Roman concrete.

The asphalt includes straight asphalt, blown asphalt, asphalt for waterproofing construction, and modified asphalt for paving.

### <Suggestion of member in aspect of purpose>

Purposes of the member include a vehicle (means of transportation), a construction (edifice), and machinery such as home appliance, an agricultural machine, a construction machine (including a general construction machine or a special construction machine) or a machine tool.

The vehicle or a moving object includes a manned or unmanned moving object, and includes a multiwheel vehicle and a wheelless vehicle to be used on land. The multiwheel vehicle with at least four wheels includes a truck, a bus, a fire truck, a ladder truck, a pump car, a trailer, a tank lorry, a mixer car, a crane car, a road sweeper, a vacuum car, a towing car, a truck with a snowplow, a train, a monorail, Shinkansen, a tram, a locomotive, a cable car, an armored car, and a tank. A four-wheeled vehicle includes a car, a patrol car, an ambulance, and a camper van. A three-wheeled vehicle includes a tricycle and a motorized tricycle. A two-wheeled vehicle includes a motorcycle, a scooter, a bicycle, an electric assist bicycle, a wheelchair, a stroller, and a rickshaw. A one-wheeled vehicle includes a one-wheeled car. The wheelless vehicle includes a linear motor car, a hovercraft, an elevator, an escalator, a lift, a gondola, a ropeway, a Ferris wheel, a merry-go-round, a swing, and a seesaw. Other vehicles with wheels include a wheel loader, a tire roller, a road roller, a grader, an asphalt finisher, a motor sweeper, a dump truck, a wheel crane, a forklift, a straddle carrier, a turret type interior carrier, an agricultural tractor, an agrochemical spraying car, a reaping and threshing car, a rice planting machine, a combine, an excavator, a backhoe, a loading shovel, a snowmobile, roller skaters, roller shoes, a skateboard, a kickboard, skis, a snowboard, and skate shoes. A flight vehicle or a moving object includes, irrespective of a manned flight or an unmanned flight, a light aircraft such as a balloon or an airship, and a heavy aircraft such as an airplane, a rotary wing airplane, a glider, a helicopter, a drone, a rocket or a vertical takeoff and landing machine. A marine vehicle includes a ship, a boat, a yacht, a ferry, a passenger ship, a cargo-passenger ship, a cargo ship, an oil tanker, a fishing boat, a warship, and a submarine. Further, components used for the vehicle include a monocoque, a body shell, a bonnet, a door, a tailgate, a front fender, a radiator grill, a bumper, a meter, a heater, a windshield glass, a door window glass, an engine, a radiator, a muffler, a brake pedal, an accelerator pedal, a clutch pedal, a seat, an exhaust pipe, a tail lamp, a headlamp, a wheel, a tire, a track, a propeller, a tank, a cylinder, a piston, an actuator, a damper, a linear guide, a bearing, a chassis, and a shaft.

The construction includes a structure and a civil engineering construction (workpiece). The structure includes housing, a commercial facility, a public facility, a cultural facility, an educational facility, a medical facility, an entertainment facility, a transportation facility, an industrial facility, a religious facility, a military facility, and a plant facility. The structure also includes a detached house, an attached house (terrace house), an apartment, a multi-unit dwelling, a share house, an office building, a church, a monastery, a temple, a shrine, a castle, a palace, an imperial palace, a garden, a park, a hospital, a clinic, a station, a station building, an airport, a public lodging house, a public office building, a police station, a fire station, a precinct station, a stadium, a ballpark, a schoolyard, a swimming pool, a school, a gymnasium, a theater, a cinema, a performance hall, an art center, a concert hall, a public hall, an meeting hall, a hotel, an inn, a factory, a storehouse, a warehouse, a boarding house, a dormitory, a child welfare facility, a midwifery office, a disabled person rehabilitation support facility, a mentally disabled person social rehabilitation facility, a protection facility, a women's protection facility, an intellectually handicapped person support facility, a senior citizen welfare facility, a pay nursing home, a special support nursing home, a day service center, a maternal and child health facility, a cinema, a museum, an art gallery, a library, a public restroom, a sport practice ground, a bowling alley, a sky resort, a department, a supermarket, a general store, an exhibition hall, a cabaret, a café, a nightclub, a bar, a dancing hall, a playground, a public bathhouse, a waiting room, a restaurant, a bistro, a shop, a garage, a car repair shop, a movie studio, and a television studio.

The civil engineering construction (workpiece) includes a bridge, a metal structure, a railroad, a road, a harbor, a coast, a river, a power generation facility or generating unit, a dam, a tunnel, a land improvement construction, a disaster prevention construction, and an agricultural civil engineering construction. The bridge includes a girder bridge, a cable-stayed bridge, a truss bridge, an arch bridge, a rigid frame bridge, and a suspension bridge. The metal structure includes a tower-like structure, a storage structure, a sluice/floodgate, a hydraulic iron pipe, a composite structure, a water supply facility, sewerage, and various types of pipelines including an object to be delivered such as gas or petroleum. The railroad includes a track, a track structure, a roadbed, a railroad station, a signaling/security/communication facility, a high-speed railway, a special railway, a cableway, and a city railroad. The road includes a roadbed, a pavement, an asphalt pavement, a concrete pavement, a gravel road, and a dustproof road. The harbor includes an anchorage, a breakwater, a revetment, a jetty, a wharf, a quay, a pier, a shed, a cargo handling/land facility, a ship and car communication facility, a fishing port, and a navigation aid. The coast includes a coastal structure. The river includes an embankment/revetment, a sand arrestation, a river structure, and a canal. The power generation facility or generating unit includes a water intake facility, a reservoir, a regulating reservoir, a nuclear power plant, a thermal power plant, a hydroelectric power plant, a tidal power generation, a geothermal power generation, a wave power generation, and a wind power generation. The dam includes a gravity dam, a fill-type dam, and an arch dam. The tunnel includes a tunnel structure. The land improvement construction includes a land formation, a reclamation, a dredging, an irrigation, a drainage, a reclamation, and mixing of soils.

Further, members used for the construction include stone including natural stone, artificial stone, and crushed stone, wood, a precut material, natural wood, machine grade wood, visual grade wood, ungraded wood, a class-A structural material, a class-B structural material, laminated wood, engineering wood, structural laminated wood, plywood, a wooden product, a resin product, a steel product, a steel material, a steel sheet, a steel frame, an organic material, a coating material, a waterproof material, a cement paste, slag, mortar, concrete, a tile, a porcelain tile, a stoneware tile, a pottery tile, a tatami mat, lightweight aerated concrete, a concrete panel, water resistant plywood, a gypsum board, a fireproof board, a calcium silicate board, a thermal insulation material, glass wool, rock wool, rigid urethane foam, Styrofoam, phenol foam, polystyrene foam, cellulose fiber, prestressed concrete, precast concrete, underwater concrete, polymer concrete, resin concrete, mass concrete, expanded concrete, low shrinkage concrete, and shrinkage-free concrete.

Parts of the construction include a structural material, a fastening member, a finishing material, a groundsill, an interior material, an exterior material, a facing material, a thermal insulation material, a base, a foundation, a wall, a pillar (column), a tubular column, a corner post, a splash post, a major pillar, a roof beam, a dragon beam, a round beam, an ascending beam, a roof, a ceiling, a floor, stairs, a puncheon, a vertical roof puncheon, a window, window glass, a window frame, a door, a door frame, a front door, a shelf, a baseboard, a doorcase, an upper frame of doorcase, a decorative pillar, an alcove, a decorated rail of alcove, a floor board of alcove, an alcove post, a transom, a lintel, an attached lintel, a girth, a dragon beam, a braced frame, a crosspiece, a stud, a puncheon, an eaves, an eaves soffit, a ceiling joist, an awning, a gutter, a flooring, a carpet, a cushion floor, cloth, wallpaper, a sliding door, door paper, a siding, an expansion joint, a roof tile, a cement roof tile, a slate roof tile, a colonial, a corrugated steel plate, and a handrail.

An architecture that implements each member of the construction includes masonry, a brick structure, a wooden structure, a wood structure, a soil structure, a steel structure (S structure), a light gauge steel (LGS) structure, a heavy steel structure, a plain concrete structure, a reinforced concrete (RC) structure, a steel frame reinforced concrete (SRC) structure, a concrete filled steel tube structure, a cement block (CB) structure, a reinforced CB structure, a steel concrete composite structure, a prestressed concrete (PC) structure, a membrane structure, a wall structure, a frame structure, a masonry structure, a pneumatic structure (single-layer film), a pneumatic structure (dual-layer film), a pneumatic structure (air beam), a pure rigid frame structure, a walled rigid frame, a streaked rigid frame, a brace structure, a core structure, a tube structure, a truss structure, a bolt structure, a shell structure, a cable (hanging) structure, a pin structure, a space frame, an arch, a dome shell, an earthquake resistant structure, a base isolation structure, a vibration damping structure, a rigid structure, a flexible structure, and an earthquake-proof structure.

Method of constructing the construction include a masonry type method, a framework type method, a panel type method, a wood panel constructing method, a suspended type method, a framework structure constructing method, a log group constructing method, a heavy steel frame structure, a lightweight steel frame structure, a planar truss, and a cubic truss.

Forms of the construction include a one-story house, a low-rise house, a middle-rise house, a high-rise house, a super-high-rise house, and a tower.

The home appliances include video equipment (displaying device) such as a television or a projector, video equipment (recording/replaying device) such as a video tape recorder, a digital video disc (DVD) recorder, a Blu-ray disc recorder, a hard disk drive (HDD) recorder, a DVD player or a Blu-ray disc player, video equipment (capturing device) such as a video camera or a digital camera, acoustic equipment (recording/replaying device) such as a wire recorder, a tape recorder, a minidisc recorder, a radio cassette player or an IC recorder, acoustic equipment (replaying device) such as an analog player, a compact disk (CD) player, an amplifier or a radio, acoustic equipment (reproducing device) such as a speaker or a headphone, white goods (refrigerator and washing machine), and information appliances.

Electronic products including the so-called white goods (refrigerator and washing machine) include a washing machine, a cleaner an iron, a sewing machine, a blanket dryer, a pill remover, a cloth dryer, a hanger steamer, a pants presser, a shoes dryer, a towel heater, a sewing iron, an oven range/microwave oven, a cooker, a mixer/food processor, a gas table/cooking stove, a toaster, an IH cooker, a hot plate/grill pot, a home bakery/baking tool, a table cooking utensil, a water heater, a fryer, an electric pressure cooker/electric boiling pot, a fish roaster, a steam cooker, a soup maker, a soy milk maker, a rice cake machine, a dehydrated food maker, a fridge/freezer, a kettle/pot, a coffee maker, a water purifier, a dish washer, a dish dryer, a carbonated water maker, a water purifier, a tea maker, a household waste processor, a capsule tea machine, a towel steamer/heating cabinet, a heater, an air cleaner, an air conditioner, a humidifier, a dehumidifier, an electric fan, an iron generator, a circulator, a bathroom dryer, a cool air fan, a dryer, a hair iron, an electric hair trimmer, an electric shaver, a hair iron, an electric facial device, a microscope, an electric tooth brush, an oral cleaner, a stain cleaner, an alcohol checker, a breath checker, an epilator, a light epilator, a laser epilator, a high frequency epilator, an electric keratin remover, a desk lamp, a porch lamp, a ceiling lighting, an interior lamp, a spotlight, a slide lighting, a ceiling fan, a chandelier, a facility/outdoor lighting, a bathroom lighting, a down light, a black light, a bracket light, a foot light, a garden light, a leading light, massaging equipment, a health care/measurement, a warm water washing toilet seat, an electric/low-frequency therapeutic device, a hearing aid, an electronic cigarette, an inhaler, a nose cleaner, an oxygen air charger, a home ultraviolet therapeutic device, a bulb/fluorescent lamp, an LED bulb, a straight tube fluorescent lamp, a bulb type fluorescent lamp, an incandescent lamp, a fluorescent circle lamp (FCL), an LED fluorescent lamp, a round slim fluorescent lamp (FHC), a compact fluorescent lamp, a halogen bulb, a starter lamp (glow ball)), a dual round fluorescent lamp (FHD), a miniature light bulb, an electronic starter lamp, a high-intensity discharge (HID) lamp, a light bulb base mold, a slim fluorescent lamp (EFC), a rectangular slim fluorescent lamp (FHG), a warming lamp, a telephone/facsimile, a telephone, a facsimile, a multifunction facsimile, an expansion cordless handset, an LED lamp with a motion sensor, and a general lamp (LED lamp).

The information appliances include a personal computer, a display, a keyboard, a mouse, a printer, a three-dimensional (3D) printer, a tablet, a universal serial bus (USB) memory, a removable HDD, a card reader, a facsimile, a mobile phone, a smart phone, a portable game console, a home game console, and an educational toy.

The agricultural machine includes a general purpose agricultural machine such as a tractor, an agricultural machine used for cultivation/soil preparation such as a plough, a harrow, a roller, a rotary cultivator, a puddling machine, a land roller, a leveler, a ridger or a slitting machine, an agricultural machine used for cultivation/formation/improvement such as a rooting machine, a pan breaker, a grooving machine, a mold rina (culvert drilling machine), a digger or a backhoe, a machine used for fertilization such as a manure spreader (compost fertilizer distributor), a slurry spreader, a lime sower (lime distributor), a planter (seeder) or a drill seeder with fertilizer, an agricultural machine used for sowing/transplanting such as a rice transplanter, a vegetable transplanter, a transplanter (transplanting machine) or a broadcaster, an agricultural machine used for control and management such as a sprayer a motor sprayer, a mist machine, a duster, a motor duster, a granule applicator, a motor granule applicator, a haze machine, an aerial sprayer/helicopter (air control), a soil sterilizer, a brush cutter, a farm master, a speed sprayer, a frost damage protection machine, a medium cultivating and weeding machine, a thinner (thinning machine), a motor pump or a sprinkler (irrigator), an agricultural machine used for harvest such as a binder, a combine, a vegetable reaping machine, a mower, a hay baler, a roll baler, a windrower, a thresher, a bean cutter (bean harvester), a corn harvester, a corn sheller, a potato harvester, a beet harvester, a sweet potato digging machine, a sweet potato vine cutter, a sugarcane harvester, a peanut harvester, a flax harvester, an onion digging machine, a chestnut thresher, a peanut thresher, a plucker, a mulberry shoot reaping machine, a special purpose crop digging machine, a vibrating harvester or a hop flower thinning machine, an agricultural machine used for drying and preparing crops such as a drying machine, a rice harvester (rice huller), a sorting machine, a rice milling machine, a grass dryer, a chicken droplet dryer, a special purpose crop dryer, a grain milling machine, a disc mower, a mower conditioner, a tedder, a rake, a forage harvester, a hay baler, a hay press, a road wagon, a hay loader, a bale loader, a feed cutter, a forage blower, a silage unloader, a feed grinder, a feed chopper, a root cutter, a feed compounder or a feed molding machine, an agricultural machine used for managing livestock such as an automatic feeder, a milker, a milk cooler, a waterer, a water heater, a slurry spreader, a barn cleaner, a sludge separator, an excretion processing device, a warmer, an egg lifter, a sorting machine for cleaned eggs or a barn sterilizer, an agricultural machine used for rearing silkworms such as a young silkworm co-rearing temperature control device, a power mulberry feeder, an automatic rearing machine for young silkworms, an automatic rearing machine for grown silkworms, a delimbing machine, a cocoon harvesting machine or a floss removing machine, an agricultural machine used for vegetable/fruit growing such as a mulcher, a crucific cultivating machine, a house heater, a vegetable washer, a deep placement fertilizer applicator, a motor trimmer, a tree tower, a rotary cutter for orchard, a fruit sorting machine, a container in arboricultural land or a power tiller, an agricultural machine used for tea production such as a tea steaming machine, a primary drying tea roller, a freshly-picked-tea-leaves rolling machine, a secondary drying tea roller or a final drying tea roller, an agricultural machine used for flowering/special purpose crop such as a pruning machine, a ramie peeler, a rush classifier, a tulip classifier or a peanut peeler, an agricultural machine used for forestry such as a bush cutter, a chain saw or a yader, and an agricultural machine used for transporting/conveyance such as a trailer, a grain conveyor or a front loader.

The general construction machine includes a bulldozer/scraper such as a bulldozer, a ripper bulldozer (bulldozer with rip saw), a scraper bulldozer, a towed scraper or a motor scraper, a backhoe/mucking shovel such as a hydraulic shovel (Yunbo), a backhoe, a power shovel, a dragline, a clamshell, an on-mud excavator, a tractor shovel, a wheel loader, a trencher or a bucket wheel excavator, a conveying machine such as a truck, a dump truck, a truck with a crane device, a trailer, a locomotive, a muck car, a shuttle car, a rough terrain hauler (special equipment hauler), a shovel loader, a fork loader, an all wheel drive vehicle, a belt conveyor or a bucket wheel excavator, a crane/unloading machine such as a crawler crane, a truck crane, a wheel crane (all terrain crane), a rough terrain crane, a tower crane, a jib crane, a railroad crane, a floating crane, a pipe layer, a construction lift, an elevator, a portal crane, a fork lift, a straddle carrier, a container carrier, a top lifter, a clamp lift, an aerial vehicle (lift vehicle), a concrete floor finishing robot, a slinging excluding robot or an unloader, a foundation work machine such as a pile driver, a diesel hammer, a hydraulic hammer, a vibratory hammer, a water jet (water jet cutter), an earth auger, an inner excavator of earth auger, a drop hammer, a hydraulic steel pipe press-in and drawing machine, a sand pile driver, a powder injection agitator, an all casing backhoe, a hole digging and pole standing car, an earth drill, a reverse circulation drill, an underground continuous wall construction machine, a mud wastewater treatment facility (alkaline water neutralizer), a sludge suction and discharge vehicle (including vacuum car), a grout pump, a grout mixer (including mortar plant), pneumatic caisson construction equipment, a deep mixing processing machine, a ground improvement machine for high pressure injection stirring, chemical liquid injection and construction equipment, a caisson pile machine (rotary sprayer or underwater cutter) or a pile extractor, a perforator/tunnel construction machine such as a boring machine, a down-the-hole hammer, a rock borer (hand hammer, leg hammer, drifter, pick hammer, baby hammer, riveting hammer, chipping hammer, caulking hammer, scaling hammer, sand rammer, concrete breaker or large breaker), a drill jumbo, a crawler drill, a tunnel backhoe/cutter, a grab hopper, a grab lifter, tunnel construction equipment or shield construction equipment, a motor grader/sub-basics machine such as a motor grader, a stabilizer, a mixing plant or a mixing machine for super soft ground, compacting equipment such as a road roller (macadam roller or tandem roller), a tire roller, a tamping roller, a vibrating roller, a tamper, a rammer or a vibrating compactor, a concrete plant, a truck mixer (agitator body truck), a concrete pump car, a concrete pump, a concrete presser, a screw cleat, an agitator car or a concrete crusher, a paving machine such as an asphalt plant, a recycle plant, an asphalt finisher, an asphalt kettle, a distributor, a chip spreader, an asphalt cooker, a concrete spreader, a concrete finisher, a concrete leveler (concrete vertical finishing machine), a concrete simple finishing machine, a concrete lateral yarding machine, a vibrating joint cutting machine, a concrete cutter, an inner vibrator, an asphalt engine sprayer, an asphalt curbing machine, a joint sealer, a play susceptor, slip form paper or food preservation treatment machine, a pavement maintaining machine such as a road heater, a joint cleaner, a road cleaning car, a line maker, a dissolving tank, a lane marker removal machine, a road surface cutting machine, a road surface layer regenerating machine, a guardrail cleaning car, a road surface safety groove cutting machine (grooving machine), a sprinkler truck, a guardrail pole drive machine, a compartment line construction machine, a slab upper surface thickening machine, a micro surface machine or a drainage pavement function recovery machine, an air compressor/air blower such as an air compressor (pressure) or an air blower (fan), a pump such as a small spiral pump, a small multistage centrifugal pump (turbine pump), a underwater motor pump for deep well, a vacuum pump, an underwater motor pump for construction (diving pump), an underwater sand pump (underwater pump for construction with stirring device) or a slurry pump, an electric device such as a transformer, a switch in high pressure air, a cubicle type high □ voltage substation facility or a motor generator, a winch such as a winch, a hoist or a chain block, test measurement equipment such as a track scale, a gauge, a core collector (core boring machine), a California bearing ratio (CBR) tester, a flat loading test apparatus, a grout flux/pressure measuring device, a gas detector, a noise meter, vibration measuring equipment, settling/inclination measuring equipment, a dust monitor, a nephelometer, an automatic surveying instrument or a light wave measuring device, a temporary facilities apparatus for installing a steel bridge/PC bridge such as an erected girder, a bentgrass, a door type crane, a hoist, a chain block, a geared trolley, a winch, a jack, a hydraulic pump, a bogie for heavy weight, a delivery device, an steel tower, a carrier, a saddle, a back stay adjusting device, a cable anchoring device, a turn buckle, a rope hanger, an unreeler, a delivery device, a lateral yarding machine, a falling device, a traveler crane, a girder hanging device, a girder hanging gate preparation moving device, a turn table, a moving timber or a working car of ground cover and handrail, and other general land construction machines such as a concrete mixer, an aggregate measuring instrument, a concrete bucket, a concrete vibrator, a concrete crusher, a jaw crusher, an impact crusher, a welder, a welding rod dryer, a hydraulic jack, a drop hammer, a rail, a turn table, a mortar concrete spray machine, a concrete spray machine, an accelerating agent supply device, a seed spray machine, a Bentonite mixer, a water tank, a bush cutter, a lawn mower, a chain saw, a float, a construction signal, a construction high pressure washer, a chemical applicator, a hay collector, a jet heater, a garbage truck, a self-propelled crusher, a self-propelled soil improver or a self-propelled wood crusher.

Further, the present invention is also applicable to a special construction machine, and the special construction machine includes a harbor/river/coast construction machine such as a main working ship, an auxiliary working ship, an auxiliary facility for working ship or auxiliary equipment for harbor construction, a dam construction machine such as a concrete production facility, a concrete conveyance facility, a concrete cooling facility, an aggregate production facility, a cement conveyance/storage facility, a watering facility, a pollution prevention facility or other dam construction machines, a snow removal machine such as a snowmobile, a snow removal device, a snow removal attachment or a salt truck, a sewerage construction machine such as a propulsion construction machine, and a mine clearing machine.

The machine tool includes a lathe such as a general purpose or NC turret lathe, a milling machine using a milling cutter or an end mill, a shaping machine using a bite, a planing machine using a bite, a drilling machine using a drill, a reamer or a tap, a boring machine using a bite, an electric discharge machine such as a wire cut electric discharge machine or an engraving electric discharge machine, a broaching machine using a broach, a gear hobbing machine (hob), a gear cutting machine such as a gear shaper (rack cutter or pinion cutter), a grinder using whetstone, a contour machine, a band sawing machine, a machining center, a water jet processor, a laser processor, an electronic beam processor, a honing machine, an electrochemical machine, a deburring chamfering machine, an electrochemical deburring machining, a cutting machine, a forging machine, and a forming device such as a nut former or a part former. Further, the machine tool also includes various types of machining tools such as a drill, an end mill, a bite, a tip, a tap, toothed tools, a die and a mold, and a tool holder.

In addition, general purposes of the member include a structural material of a building, a structural material of an edifice, an exterior material, an interior material, a propeller of wind power generation, a solar-cell panel, a cylinder, a piston, an actuator, a damper, a linear guide, a bearing, an engine block, a chassis, a shaft, a rod, an L-shaped metal fitting, a curtain, a roll curtain, a banister/grid/chassis of veranda/balcony/bay window, a handrail of a corridor, a passage, stairs, a bed side, or an inner wall of a bathroom, a chair, a desk, a bookcase, a cupboard, a bed, a bathtub, a toilet seat, and a toilet.

### <Suggestion of member in aspect of shape>

The member is provided in various shapes. For example, the steel material includes octagonal bar steel, hexagonal bar steel, flat steel, square steel, round steel, a wiring rod, unequal angle steel, a flat-type steel sheet pile, a U-shaped steel sheet pile, equal angle steel, channel shaped steel, I-shaped steel, H-shaped steel, a rail including a rail for railroad or a curtain rail, and a steel pipe.

Further, shapes not limited to the steel material include a propeller, a screw, a H-shaped cross section, a whole shape, a cross-sectional shape, a ring shape, an angular ring shape, a circular tube shape, an angular tube shape, a spherical shape, a cube, a rectangular parallelepiped, a plate shape, a sheet shape, a tube, a soft tube, a hard tube, a spiral shape, a planar spiral shape (spiral shape), a cuboid spiral shape (coil form), a porous shape, a soft porous shape, a hard porous shape, a cone, a pyramid, a horn shape, a streamlined shape, and a hollow shape.

### <Suggestion of member in aspect of general name including preparation method or shape>

For example, general names of the steel material include a steel plate such as a thin steel plate (thickness less than 3 mm) or a thick steel plate (thickness greater than or equal to 3 mm), a steel pipe such as an electric resistance welding steel pipe, a forge welding steel pipe, a seamless steel pipe, a spiral steel pipe, a UOE steel pipe (= large-sized welded steel pipe) or a straight seam steel pipe, shape steel such as H-shaped steel, angle steel, I-shaped steel, U-shaped steel, a steel sheet pile, a rail, lightweight shape steel, a deck plate or a lightweight steel sheet pile, bar steel such as round bar steel, square bar steel, hexagon bar steel, octagon bar steel, flat steel or deformed bar steel, a wire such as a soft steel wire, a hard steel wire, a piano wire or a special wire, and a cast forged steel product such as a casting steel product provided in a desired shape by injecting steel into a mold or a forged steel product provided by forging a steel ingot or a steel billet to have an appropriate forging ratio and performing thermal treatment to provide a typical, predetermined mechanical property.

Further, general names not limited to the steel material include a roof tile, a pillar (post), a girder (beam), a tile, a window, a door, a gate, a sliding door, a fixture, a screw or propeller, various blades including an impeller, a wheel, a lean hose, a bonnet, wallpaper, a shelf, a table, H-steel, a chimney, and steps.

Hereinafter, the conduction path formed directly in the member will be described in detail. Further, the applications of the present invention are not limited to the examples suggested herein.

### <Positions at which conduction path is formed>

Positions at which the conduction path is formed in the member are a surface, a back surface, both an outer surface and an inner surface, a side, and a circumferential surface of the member. The member including an inner space is provided on one or both of an inner circumferential surface or an inner side surface and an outer circumferential surface of the member. Further, in a case in which a recess or a hole is present in a body of the member, the conduction path may also be formed in the body of the member by stacking a conductive material in the recess or the hole or filling the recess or the hole with the conductive material.

### <Layer state of conduction path>

A layer state of the conduction path is not limited to the single layer of FIG. 3 and the like, or the two layers of FIG. 5D, and a multilayer structure including at least three layers may be employed. When the conduction path is provided in a stacked structure including a plurality of layers, an electric insulation material is interposed therebetween as an intermediate layer. A protection layer may be formed on an outermost conduction path. The protection layer may be formed using a single layer or stacked layers of a protective layer for protecting the conduction path from damage caused by external interference with respect to the conduction path, a weather resistant layer for preventing deterioration by ultraviolet rays, a gas resistant layer for preventing gas permeation, oxidation or corrosion caused by the air, vapor or corrosive gas, or a chemical resistant layer for preventing an influence of acidity or basicity or solvents, oils or chemical solutions.

### <Shape of conduction path>

The shape of the conduction path includes a linear shape such as a straight line or a curved line, a planer shape such as a plane or a curved surface, and a cubic shape (including both a hollow shape or a solid shape) formed by combining a plurality of planes or curved surfaces, or other surfaces. The planar conduction path includes, in addition to a conduction path provided in a planar shape, a conduction path provided in a substantially planar shape by disposing a linear wiring to disperse in a planar/curved region or stacking the linear wiring, like a zigzag shape, a matrix shape, a grid shape, or a spiral shape. The planar conduction path may also be provided in a shape of curved surface by the whole or a portion of a surface of a round column, the whole or a portion of a surface of a circular cone, or the whole or a portion of a surface of a sphere. The shape of the planar conduction path may include a ring shape, a cylindrical shape (inner circumferential surface, outer circumferential surface), a square shape, a polygonal shape, a circular or elliptical shape, a heteromorphic shape, and a combination thereof.

### <Number of conduction paths>

A single conduction path or a plurality of conduction paths is disposed. Further, as a pattern to dispose a plurality of planar conduction paths, the plurality of conduction paths may be arranged along a straight line, the plurality of conduction paths may be arranged along a curved line (including a circle), the plurality of conduction paths may be arranged along a spiral line, the plurality of conduction paths may be disposed in a shape of matrices/grids, the plurality of conduction paths may be disposed in multiple layers, or the plurality of conduction paths may be disposed three-dimensionally. Further, in a case in which the conduction path is provided in a ring shape, the plurality of conduction paths may be disposed, for example, concentrically (in the shape of concentric circles or in approximately similar shapes). Of course, needless to say, the embodiments are not limited to the concentric shape. Similarly, by disposing a plurality of strands in a parallel state or a stacking state, the plurality of conduction paths may be disposed adjacent thereto.

### <Material of conduction path>

The material of the conduction path includes a material mainly containing aluminium, copper, silver, gold, platinum, iron, and carbon and/or a composite material thereof, or a material not containing the same as a main component. In addition, the conduction path or an insulating layer may be formed by film forming such as PVC or CVD, and includes, for example, an oxide thin film, a fluoride thin film, a nitride film, and a carbonized film. The oxide thin film includes aluminium oxide or alumina (Al2O3), cerium oxide (CeO2), chromium oxide (Cr2O3), gallium oxide (Ga2O3), hafnium oxide or hafnia (HfO2), nickel oxide (NiO), magnesium oxide or magnesia (MgO), indium tin oxide (ITO) (In2O3+SnO2), niobium pentoxide (Nb2O5), tantalum pentoxide (Ta2O5), yttrium oxide or yttria (Y2O3), tungsten oxide (WO3), titanium monoxide (TiO), titanium pentoxide (Ti3O5), titanium dioxide or titania (TiO2), zinc oxide (ZnO), compound oxide (ZrO2+TiO2), and zirconium dioxide or zirconia (ZrO2).

The fluoride thin film includes aluminium fluoride (AlF3), calcium fluoride (CaF2), cerium fluoride (CeF3), lanthanum fluoride (LaF3), lithium fluoride (LiF), sodium fluoride (NaF), magnesium fluoride (MgF2), neodym fluoride (NdF3), samarium fluoride (SmF3), ytterbium fluoride (YbF3), yttrium fluoride (YF3), and gadolinium fluoride (GdF3).

The nitride film includes titanium nitride (TiN), chromium nitride (CrN), titanium carbo-nitride (TiCN), titanium aluminium nitride (TiAlN), boron nitride (BN), aluminium nitride (AlN), carbon nitride (CN), and boron carbon nitride (BCN).

The carbonized film includes diamond-like carbon (DLC), titanium carbide (TiC), silicon carbide (SiC), boron carbide (BC), and tungsten carbide (WC).

In addition, indium zinc oxide (iZO), graphene, polyacetylene, and tin dioxide (SnO2) are also used.

A color of the conduction path includes diverse colors such as transparent color, opaque color, translucent color, white color, gray color, silver color, black color, red color, and brown color. In a case in which the member includes transparent or translucent glass, the conduction path may also be transparent or translucent.

### <Function of conduction path>

Sensing functions implemented by the conduction path include machine quantity measurement, thermal/temperature measurement, light/radiation measurement, electrical measurement, magnetic measurement, and chemical measurement. The machine quantity measurement includes an acceleration measured by an acceleration sensor, a force measured by a strain gauge (tension gauge), a load cell or a semiconductor pressure sensor, and a vibration measured by a sound wave (microphone) or an ultrasonic wave. The thermal/temperature measurement includes contact-type sensing performed by a thermistor, a resistance thermometer or a thermocouple (in this example, it may be implemented by forming junctions on both ends of the conduction path having different electrical conductivities, one as a hot junction and the other as a cold junction), and non-contact type sensing performed by a radiation thermometer. The light/radiation measurement includes light detection performed by a light sensor, a photoelectric device or a photodiode, infrared detection, and radiation detection. The electrical measurement includes an electrical field, a current, a voltage, and an electric power. The magnetic measurement includes a magnetic sensor. The chemical measurement includes smell detection, ion concentration detection, and gas concentration detection.

Further, sensors implemented by the conduction path alone or by an association with another circuit or device include a clock sensor for measuring time, a position sensor such as a position sensitive device (PSD) or a limit switch, a distance sensor such as an ultrasonic distance meter, a capacitive displacement sensor, optical distance measurement or electromagnetic wave distance measurement, a displacement sensor such as a differential trans or a linear encoder, a speed sensor such as a laser Doppler velocity measuring transducer or a laser Doppler hydrometer, a rotating angle sensor such as a potentiometer or a rotating angle sensor, a rotational speed sensor such as a tachogenerator or a rotary encoder, an angular velocity sensor such as a gyro sensor, a one-dimensional (1D) image linear image sensor, a two-dimensional (2D) image sensor such as a charge-coupled device (CCD) image sensor or a complementary metal-oxide-semiconductor (CMOS) image sensor, a stereo image sensor, a liquid sensor such as a liquid leakage sensor (leak sensor) or a liquid detection sensor (level sensor), a hardness sensor, a humidity sensor, a flow sensor, an inclination sensor, and an earthquake sensor.

Further, a strain sensor implemented by the conduction path may be used for load measurement (load cell), displacement measurement, vibration measurement, acceleration measurement, torque measurement, torque measurement (transducer), pressure measurement, and Coriolis force measurement. In addition, environmental temperature may be measured from a change in an electric resistance of the conduction path. In this example, the conduction path may be used as a so-called resistance thermometer, a position that is hardly affected by thermal extension and contraction or deformation may be selected as a placement position of the parent material to which the corresponding conduction path is disposed.

For example, a material having a substantially zero thermal expansion coefficient in a predetermined limited temperature range, in detail, a perovskite-based material or a bismuth/lanthan/nickel oxide-based material, may also be used. Further, a combination of a material having a negative thermal expansion coefficient and a material having a positive thermal expansion coefficient of which an absolute value approximately equals to that of the negative thermal expansion coefficient, or a combination of materials configured to have zero thermal extension coefficients through nano-composition by combining a positive thermal expansion material and a negative thermal expansion material in a fine structure may also be used. In doing so, it is possible to distinguish between a change in an electric resistance of the conduction path due to a deformation of the parent material by an external force and a change in the electric resistance of the conduction path due to a change in the environmental temperature.

Further, a piezoelectric element may be disposed in the conduction path or on the parent material which is a different position from the conduction path, or a conduction path having a piezoelectric element structure may be installed. When the piezoelectric element or the conduction path having the piezoelectric element structure is installed in the conduction path, an external force applied to the piezoelectric element or the conduction path having the piezoelectric element structure may be sensed, or a piezoelectric current (electromotive force) generated in response to a change in pressure may be provided to operate the conduction path or a circuit. For example, the piezoelectric element or the conduction path having the piezoelectric element structure may be installed at a position held by the parent material and an external member, an electromotive force may be generated in the piezoelectric element in response to a change in a holding force thereof (for example, vibration), and the electromotive force may be utilized as power to sense the conduction path.

Similarly, a Peltier device or a conduction path having a Peltier device structure may also be installed in the conduction path or on the parent material which is a different position from the conduction path. When the Peltier device or the conduction path having the Peltier device structure is installed in the conduction path, a temperature difference may be generated in the parent material or between the parent material and an external member. For example, the Peltier device or the conduction path having the Peltier device structure may be installed and displaced at a position at which temperature may change easily, and a temperature difference generated at the position may be forcibly eliminated by conduction with respect to the Peltier device or the conduction path having the Peltier device structure. That is, at the position at which the temperature difference is generated, a heat absorbing part of the Peltier device or the conduction path having the Peltier device structure may be installed at a high temperature side of the position, and a heat emitting part may be installed on a low temperature side thereof. By supplying electricity to the Peltier device or the conduction path having the Peltier device structure, the original high temperature side may be cooled and simultaneously the low temperature side may be heated, whereby the temperature difference may be eliminated. However, when the high temperature side and the low temperature side are reversed, by reversing a conduction direction, the heat absorbing part and the heat emitting part may be alternated. Thus, by controlling the alternation, the temperature may be controlled to a desired temperature by heating or cooling an appropriate part. It may also be possible to heat the original high temperature side and cool the low temperature side. In addition, by installing a heat sink structure in the heat emitting part of the Peltier device or the conduction path having the Peltier device structure, heat dissipation may be improved. The conduction path having the Peltier device structure may be configured by connecting a PN junction formed by a P-type semiconductor and an N-type semiconductor in series, and installing a region by a set of junction parts with a conduction direction of N→P and a region by a set of junction parts with a conduction direction of P→N. For example, while forming or stacking various types of existing known semiconductor materials of the P-type semiconductor and the N-type semiconductor in an appropriate region, semiconductor materials, or conductive materials such as metal of the N→P junction parts and the P→N junction parts may also be installed during the stacking process.

Next, a portion of members to which the present invention is applicable, including the above suggested member, will be described in an aspect of morphology. Further, a detection direction of a stress is indicated using an arrow with respect to the conduction path, and thus illustration of a detailed wiring structure will be omitted herein.

A sensor-structure-attached-member 400A as shown in (A) of FIG. 13 includes a plurality of conduction paths 92 disposed in a circumferential direction and an axial direction with respect to a shaft member 410A having a rectangular, rhomboidal, or trapezoidal cross section. Detailed examples thereof include a screw, a column, a rail, a guide shaft, and wood. Of course, the sensor structure 500 of FIG. 1I may be formed to widen over the entire surface around the sensor-structure-attached-member 400A.

A sensor-structure-attached-member 400A as shown in (B) of FIG. 13 includes a plurality of conduction paths 92 disposed in a circumferential direction and an axial direction with respect to a shaft member 410A having a circular or elliptical cross section. Detailed examples thereof include a screw (seat surface, cylindrical part, peripheral surface of head part, surface of head part or groove of thread), a ball screw, various driving shafts including a motor shaft, a shaft member of a speed reducer or a speed increaser, a propeller shaft, a crankshaft, a piston shaft, an axle, various shaft elements, a shaft, a rod, various wires such as a wire, and wood in a rod shape.

A sensor-structure-attached-member 400C as shown in (C) of FIG. 13 includes a plurality of conduction paths 92 disposed in a circumferential direction and an axial direction with respect to a rail member 410C having an I-shaped cross section. Such an elongated rail member may be stressed and fractured by a torsion or distortion while in use. Thus, a change in a state may be detected by the conduction paths 92. However, it is not limited to the example of the I-shaped cross section, and may also be applicable to H-shaped steel, C-shaped steel, or L-shaped steel. Of course, the sensor structure 500 of FIG. 1I may be formed to widen over the entire side surface of the sensor-structure-attached-member 400A.

A sensor-structure-attached-member 500A as shown in (A) of FIG. 14 includes a plurality of conduction paths 92 disposed in a surface direction with respect to a flat plate material 510A which widens in the surface direction. Detailed examples thereof include a wall material including wallpaper, a floor material, a ceiling material, a body, a cover, a case, a rim, a container, a top board, a flat frame, a tile, a wood/plaster board, a window, a door, and a hinge plate. Further, although not shown particularly herein, a grating or punching metal with an opening in the plate material 510A may also be used as the sensor-structure-attached-member. In addition, the shape of the plate material 510A is not limited particularly, and may include various shapes such as a rectangle, a circle, an oval, an ellipse, and a trapezoid. A circular plate material 510A may also be used as a valve element. Further, multiple conduction paths 92 may also be formed to be uniform or dispersed over the entire surface. Of course, the sensor structure 500 of FIG. 1I may be formed to widen over the entire surface of the sensor-structure-attached-member 500A.

A sensor-structure-attached-member 500B as shown in (B) of FIG. 14 includes a plurality of conduction paths 92 disposed in a surface direction with respect to a belt-shaped plate material 510B which widens in the surface direction. Detailed examples thereof include a flat spring and a shelf board in addition to the examples of (A) of FIG. 14. Of course, the sensor structure 500 of FIG. 1I may be formed to widen over the entire surface of the sensor-structure-attached-member 500B.

A sensor-structure-attached-member 500C as shown in (C) of FIG. 14 includes a plurality of conduction paths 92 disposed with respect to an L-shaped plate material 510C obtained by bending a flat plate to have an L-shaped cross section. In this example, the conduction paths 92 may also be disposed to extend across a bending line of the L-shaped plate material 510C. Detailed examples thereof include L-shaped steel, an L-shaped bracket, an L-shaped plate, and a stay. Of course, the sensor structure 500 of FIG. 1I may be formed to widen over the entire surface of the sensor-structure-attached-member 500C.

A sensor-structure-attached-member 500D as shown in (D) of FIG. 14 includes a plurality of conduction paths 92 disposed with respect to an L-shaped plate material 510C obtained by curving a flat plate. Detailed examples thereof include a fixture of a pipe or a column, a fixture of a gutter, and various stays. Of course, the sensor structure 500 of FIG. 1I may be formed to widen over the entire surface of the sensor-structure-attached-member 500D.

A sensor-structure-attached-member 600A as shown in (A) of FIG. 15 includes a plurality of conduction paths 92 disposed on an inner circumferential side and/or an outer circumferential side of a rectangular prismatic member 610A. Detailed examples thereof include rectangular tubing steel, a square pipe, and a pipe. Further, although not shown particularly herein, a member having an angled-C-shaped cross section by opening a portion of the member 610A may also be used. Detailed examples thereof include C-shaped steel, an irrigation channel, and a waste channel. Of course, although not shown particularly, the sensor structure 500 of FIG. 1I may be formed to widen over the entire inner circumferential or outer circumferential surface of the sensor-structure-attached-member 600A.

A sensor-structure-attached-member 600B as shown in (B) of FIG. 15 includes a plurality of conduction paths 92 disposed on an inner circumferential side and/or an outer circumferential side of a cylindrical member 610B. Herein, in particular, a flange or a rim is formed, and conduction paths are also formed in the flange. Detailed examples thereof include a round pipe, a pipe (gas pipe or liquid pipe), a pipeline, a pressure vessel, a female screw, a sleeve, various hollow shafts, a cylinder, a body such as a rocket, a fuel tank, a gas tank, and a tire wheel. Of course, although not shown particularly, the sensor structure 500 of FIG. 1I may be formed to widen over the entire inner circumferential or outer circumferential surface of the sensor-structure-attached-member 600B.

A sensor-structure-attached-member 700A as shown in (A) of FIG. 16 includes a plurality of conduction paths 92 disposed on an inner circumferential side and/or an outer circumferential side of a hollow or solid substantially cubic, substantially cylindrical, or substantially spherical member 710A. Detailed examples thereof include various containers including a substantially cylindrical or substantially spherical pressure vessel, a case, and a block. Of course, although not shown particularly, the sensor structure 500 of FIG. 1I may be formed to widen over the entire outer circumferential surface of the sensor-structure-attached-member 700A.

A sensor-structure-attached-member 700B as shown in (B) of FIG. 16 includes a plurality of conduction paths 92 disposed on an inner circumferential side and/or an outer circumferential side of a hollow or solid spherical member 710B. The spherical member 710B may be disposed to measure a stress in a latitude direction and a longitude direction. Detailed examples thereof include a valve body, various balls, a capsule, and a gas tank. Of course, although not shown particularly, the sensor structure 500 of FIG. 1I may be formed to widen over the entire outer circumferential surface of the sensor-structure-attached-member 700B.

A sensor-structure-attached-member 800A as shown in (A) of FIG. 17 includes a plurality of conduction paths 92 disposed with respect to a member 810A having a rigidness that changes in response to a change in a cross-sectional area. In this example, the conduction paths 92 may be disposed at positions at which the rigidness or the cross-sectional area changes, or ordinary inflection points at which the rigidness or the cross-sectional area changes from decreasing to increasing or from increasing to decreasing. Detailed examples thereof include a vibrating horn, various stays, a column, and a frame. Of course, although not shown particularly, the sensor structure 500 of FIG. 1I may be formed to widen over the entire surface of the sensor-structure-attached-member 800A.

A sensor-structure-attached-member 800B as shown in (B) of FIG. 17, which is a detailed example of (A) of FIG. 17, includes conduction paths 92 disposed with respect to a member 810B having a variable cross section corresponding to a base of a wing of an impeller. A stress may be easily concentrated on the base of the wing, and thus a fracture of the base leads to a serious accident. Accordingly, by detecting a torsion circumstance in advance, maintenance may be enabled. Of course, although not shown particularly, the sensor structure 500 of FIG. 1I may be formed to widen over the entire surface around the sensor-structure-attached-member 800B.

Further, the detailed examples mentioned above are a portion of the present invention, and the present invention is also applicable to other members. For example, the other members include a seat surface, a cylindrical part, a peripheral surface of a head part, a surface of the head part, and a groove of a thread of a male screw, a seat surface, an outer circumferential surface, and a groove of a thread of a female screw, a seat surface of a washer, one having a single hole, one having a plurality of holes and to be fastened with a plurality of male screws, one having a slot, a hook, a steel reinforcement, concrete, wood (pillar or roof beam (beam)), stone (including marble or artificial marble), a turbine (including a blade), an engine, a rubber tube, a silicon tube, a surface of a wing of wind power generation or hydraulic power generation, a rotary shaft, a column, a reinforcement, and a structure frame.

Although a case of measuring a stress of a member using the conduction path 92 is illustrated herein, the embodiment is not limited thereto. If the conduction path 92 changes together in response to a change in the member, and the change in the member is detected based on an electrical change in the conduction path 92, it may be used for other measurements. Detailed examples thereof may include a displacement (acceleration or rotation), a change in temperature, and a change in pressure of a surface.

Further, various materials may be selected for the sensor-structure-attached-member, in addition to metal. For example, plastic or a composite material (carbon fiber reinforced plastic or silica fiber reinforced plastic) may also be selected.

### <Detailed examples of conduction path>

Hereinafter, other configurations of the conduction path formed on the surface of the member and the sensor structure will be described further. To detect stresses in a plurality of directions, the first conduction path 93 extending to reciprocate in a first direction and the second conduction path 94 extending to reciprocate in a second direction may be formed to be independent (separate). However, the embodiment is not limited thereto. For example, the conduction path 92 of (A) and (B) of FIG. 18 is formed such that the first conduction path 93 and the second conduction path 94 overlap. Further, the electrically insulating layer 91 is disposed between the first conduction path 93 and the second conduction path 94. In doing so, even in a narrow space, a plurality of multidirectional conduction paths or sensor structures may be formed to overlap.

Further, in a sensor structure of (A) of FIG. 19A, the base path 95P may be a parallel circuit and the plurality of low resistance partial conducting sections 95Q may be disposed in a parallel region X including parallel wiring portions disposed adjacent in a belt width direction (lateral direction). In doing so, a detection sensitivity in a belt length direction of the parallel region X may increase. In this example, as in a sensor structure of (B) of FIG. 19A, only a vicinity of the parallel region X in which the low resistance partial conducting sections 95Q are formed may be the base path 95P with a high resistance value, and a supply wiring 95R which supplies power to the base path 95P may be formed of a good conductor (low-resistance material). In doing so, when the sensor-structure-attached-member 30 is deformed, a change in the resistance value of the supply wiring 95R decreases. Thus, a deformation may be detected limitedly in the parallel regions X, and noise of a detected signal may be restricted. Further, when a location (range) in which the parallel region X is formed is limited, the parallel wiring portion X may be disposed in the belt length direction (vertical direction), for example, as shown in FIG. 19B.

Further, for example, as in a sensor structure of FIG. 19C, the low resistance partial conducting sections 95Q may be a lower layer, and the base path 95P may be an upper layer. That is, the low resistance partial conducting sections 95Q may be formed on the rear surface of the base path 95P.

Further, as in a sensor structure of FIG. 19D, an upper-layer-side conduction path 92T and a lower-layer-side conduction path 92U may be stacked while the electrically insulating layer 91 is interposed therebetween. In the upper-layer-side conduction path 92T, the base path 95P corresponds to a lower layer, and the low resistance partial conducting sections 95Q correspond to an upper layer. Meanwhile, in the lower-layer-side conduction path 92U, the base path 95P corresponds to an upper layer, and the low resistance partial conducting sections 95Q correspond to a lower layer. Further, an example of a two-layer structure is illustrated here. However, an at least three-layer structure may also be adopted.

Further, as shown in (A) and (B) of FIG. 19E, the supply wiring 95R which supplies power with respect to the conduction path 92 including a sensor structure may be formed using a plane the same as a plane 30A on which the conduction path 92 is disposed in the sensor-structure-attached-member 30 or a plane 30B parallel thereto. Although the supply wiring 95R is formed of a low-resistance material, the resistance value thereof may change somewhat when the sensor-structure-attached-member 30 is deformed or displaced. There, in the above configuration, behavior characteristics of a great change in resistance value of the conduction path 92 of the sensor-structure-attached-member 30 and a minute change in resistance value of the supply wiring 95R are similar. Thus, the minute change in resistance value of the supply wiring 95R is difficult to be a noise component with respect to a detected signal of the conduction path 92.

As shown in FIG. 19F, conduction paths 92 including a sensor structure may be arranged in parallel, a first rectifier 95W which injects currents into one conduction path 92 in one direction may be connected thereto in series, and a second rectifier 95V which injects currents into the other conduction path 92 in another direction may be connected thereto in series. In doing so, by changing a direction of a current to be injected into the supply wiring 95R (positive and negative of voltage to be applied), sensing by the one conduction path 92 and sensing by the other conduction path 92 may be selected. For example, by a common power source or detection device, different detection results may be obtained from the plurality of conduction paths 92 by applying an alternating current (alternating voltage).

As shown in FIG. 19G, conduction paths 92 may be arranged radially. In detail, the conduction paths 92 reciprocating in a radial direction are provided with predetermined intervals therebetween in a circumferential direction, and connected to each other in series. When such a pattern is formed on a surface of a disk or a sphere being a parent material, a deformation of the disk extending in a radial direction in response to receiving a pressure in a direction perpendicular to the surface may be detected with high sensitivity.

Further, in the above embodiment, an example in which the base path 95P is a belt-shaped wiring is illustrated. However, the embodiment is not limited thereto. As shown in the conduction path 92 of (A) and (B) of FIG. 20, the planar resistance wiring 95C may be arranged as a base path, the electrodes 95A and 95B may be disposed on both outer edges thereof, and the plurality of low resistance partial conducting sections 95Q may be disposed on a surface of the planar resistance wiring 95C. Herein, the plurality of squire (not necessarily limited to the square shape, and to be configured by providing conduction portions 95D with a relatively good resistance value intermittently) low resistance partial conducting sections 95Q may be disposed with intervals therebetween on one surface of the planar resistance wiring 95C to widen in a surface direction (for example, in a shape of matrices or a honeycomb). The electrodes 95A and 95B are disposed at a total of four positions, for example, one pair (A1, A2) in one direction, and one pair (B1, B2) in another direction.

When a voltage is applied to each of two pairs of electrodes 95A and 95B, electrons move and currents flow in the low resistance partial conducting sections 95Q, and one surface layer of the planar resistance wiring 95C between adjacent low resistance partial conducting sections 95Q that are a distance d0 apart from each other, as indicated by arrows of (B) of FIG. 20. Thus, the currents may flow dominantly on the one surface layer of the planar resistance wiring 95C.

When the conduction path 92 is curved in one direction such that one surface of the planar resistance wiring 95C grows in a surface direction as shown in (C) of FIG. 20, the distance between the adjacent low resistance partial conducting sections 95Q increases from d0 to d. Thus, a resistance between the pair (A1, A2) of electrodes 95A and 95B in one direction may increase, and a state of being curved may be detected. Although not shown particularly herein, when the planar resistance wiring 95C is curved in another direction, a resistance between the pair (B1, B2) of electrodes 95A and 95B in another surface direction increases.

Further, although an example of the square low resistance partial conducting sections 95Q is illustrated, a polygon such as a triangle, a rectangle, a pentagon, a hexagon or an octagon, a circle such as an ellipse or a regular circle, and other various shapes may be employed. For example, in a case of hexagonal low resistance partial conducting sections 95Q, the low resistance partial conducting sections 95Q may be disposed in a shape of a so-called honeycomb as shown in (A) of FIG. 21. In this example, at least three pairs (A1, A2), (B1, B2), and (C1, C2) of electrodes may be disposed in a vicinity thereof to face each other. In addition, as shown in (B) of FIG. 21, like a so-called soccer ball, a combination of pentagonal and hexagonal low resistance partial conducting sections 95Q may be disposed on a surface of a spherical planar resistance wiring 95C. Further, when the planar resistance wiring 95C is used as a semiconductor or an insulator, a change in capacitance between electrodes may also be detected.

Further, in addition to implementing a sensor structure to detect a stress in the conduction path 92, other functions may be added. For example, as shown in FIG. 22, a first partial conduction path 92X having a first resistivity value (or, a work function value) may be connected to both ends of a second partial conduction path 92Y having a second resistivity value (or, a work function value), one junction may be set as a hot junction T1, and the other junction may be set as a cold junction T2. In this example, it is possible to obtain an electromotive force. This may be simply implemented through different resistivity values, that is, through different materials of the first partial conduction path 92X having the first resistivity and the second partial conduction path 92Y having the second resistivity value. When a temperature difference occurs between the hot junction T1 and the cold junction T2, a voltage V is generated between the hot junction T1 and the cold junction T2 and currents flow according to the so-called Seebeck effect. Thus, by forming the sensor structure described above with respect to the conduction path 92, a change in temperature occurring in the sensor-structure-attached-member may be sensed, or an electromotive force for the sensor structure may be obtained by itself.

Hereinafter, configurations of conduction circuits when forming a plurality of conduction paths 92 (a plurality of sensor structures) will be described with reference to FIGS. 23 through 27.

FIG. 23 illustrates a conduction circuit 201 formed in a sensor-structure-attached-member 202. The conduction circuit 201 is configured by connecting a plurality of conduction paths 92 being electric resistors in parallel (see (a) of FIG. 23). In doing so, for example, when the sensor-structure-attached-member 202 has a desired wide area like wallpaper or a plate, the plurality of conduction paths 92 may be disposed to be distributed, and thus a torsion around each conduction path 92 may be detected. Further, with respect to all the conduction paths 92, a voltage is applied from a pair (or a plurality of pairs) of good conductors being a common terminal A and a common terminal B, and thus a circuit configuration of the conduction circuit 201 may be simplified.

In this example, the conduction paths 92 are set to have resistances R1, R2, R3, and R4, respectively, and both ends of each of the four conduction paths 92 are connected to the terminal A and the terminal B via a good conductor. Further, the number of conduction paths 92 is not limited to "4", and may be any value. In addition, the number of terminals to measure resistances is also not limited to "2". The resistances R1, R2, R3, and R4 are set to different resistances, and differences between the resistances R1, R2, R3, and R4 are set to be greater than maximum resistance variations δR1, δR2, δR3, and δP4 that are generated and obtained when the conduction paths 92 sense torsions within standards.

The conduction circuit 201 is formed directly in the sensor-structure-attached-member 202. Methods of forming the conduction path 92 may include coating, transferring, lithography, cutting, vapor deposition, printing, and a semiconductor process. A portion being an electric resistor may be formed using a paste or a conductive paint with a high resistivity, or by forming a thin film of metal with a high resistivity, such as nichrome, as the conduction path 92. The portion being the electric resistor may be formed by forming a thin film of metal with a low resistivity, such as copper or aluminium, as a good conductor. Further, in a case in which the sensor-structure-attached-member 202 is an electric conductor, the conduction circuit 201 may be formed after applying an insulator as a base. The base may include, for example, polymethyl methacrylate (PMMA) resin.

In the example of (a) of FIG. 23, a combined resistance R between the terminal A and the terminal B is in a normal state without interfering in the sensor-structure-attached-member 202. In a case in which all circuit patterns are connected, a relationship of 1/R=1/R1+1/R2+1/R3+1/R4 may be established, and the combined resistance R may be obtained by calculation.

Further, when a deformation or a change in temperature occurs in the sensor-structure-attached-member 202, the change may be sensed based on a change in the resistance of the conduction path 92. For example, when the conduction path 92 having the resistance R1 is deformed by a torsion and the resistance increases by δR1, a relationship of 1/R=1/(R1+δR1)+1/R2+1/R3+1/R4 is established. Various phenomena or changes in a physical state may be sensed based on a change in the combined resistance R.

In this regard, when assuming that the sensor-structure-attached-member 202 is damaged due to a vibration or degradation over time, and a cut part 203 is generated as shown in (b) of FIG. 23, a combined resistance R' between the terminal A and the terminal B may satisfy a relationship of 1/R'=1/R2+1/R3+1/R4. Thus, by referring to the resistance between the terminal A and the terminal B, occurrence of a problem in the sensor-structure-attached-member 202 may be detected. Since R1 to R4 are set as different resistances, a conduction path 92 connected to a path in which a problem occurs may be detected by measuring an electric resistance between the terminal A and the terminal B. Although an example of electric resistors being arranged simply in parallel is illustrated herein, the conduction circuit 201 may also be provided in a structure in which electric resistors are connected in series, or in a structure in which series connection and parallel connection are mixed.

FIG. 24 illustrates an example of a conduction circuit 204 having a shape of 2D matrices, which is a modified example of the conduction circuit 201 of FIG. 23. The 2D matrices-shaped conduction circuit 204 as shown in (a) of FIG. 24 is configured by connecting a plurality of conduction paths 92 being electric resistors to each other in a shape of a mesh (shape of grids). A conduction path 92 and another conduction path 92 are connected in a circuit pattern formed by good conductors. The conduction circuit 204 includes a terminal A, a terminal B, a terminal C, and a terminal D to measure electric resistances. For example, by measuring a resistance between the terminal A and the terminal C, a change in the sensor-structure-attached-member 202 may be sensed.

Further, when one of the plurality of conduction paths 92 is disconnected or disabled, rough disablement information regarding whether the disconnection occurred at a single position or at least two positions may be obtained simply although the conduction paths 92 have the same electric resistances. Further, when the respective conduction paths 92 have different resistance values, for example, different prime resistance values, in unit of ohms, for example, 2 kiloohms, 3 kiloohms, and 5 kiloohms, a disabled, for example, fractured, portion of the sensor-structure-attached-member 202 in which the conduction paths 92 are formed may be estimated by measuring resistances between terminals. For example, when all resistance values are set to prime numbers, a resistance value of a disconnected conduction path may be estimated from a factorization of a prime product included in a combined resistance at a parallel circuit, and thus a position of the disconnected conduction path 205 may be specified.
(b) of FIG. 24 illustrates another modified example of the conduction circuit 204 having the shape of 2D matrices. In this conduction circuit 204, conduction paths 92 disposed in a shape of matrices are connected to each other in series. In a case of this series circuit, the whole of the conduction circuit 204 may not be sensed when a portion is disconnected, and thus an abnormality may be detected based on the disconnection. Meanwhile, a conduction circuit including parallel connection as shown in (a) of FIG. 23 or (a) of FIG. 24 may be suitable for measurement for a long time since sensing may be performed using a remaining portion although a portion is disconnected.

Further, although (b) of FIG. 24 illustrates only the terminal A and the terminal B, a portion of the structure being damaged may be specified later by installing terminals to measure the respective conduction paths 92 (or a predetermined group of a plurality of conduction paths 92). Thus, in regular sensing, by measuring a resistance between the terminal A and the terminal B, a safety of the whole of the sensor-structure-attached-member 202 may be checked easily. At the same time, when performing a detailed inspection after an abnormality is detected or an unexpected event such as earthquakes occurs, by measuring each resistance between conduction paths 92, a portion of the sensor-structure-attached-member 202 being damaged may be specified.

As shown in FIGS. 23 and 24, the conduction circuit including the conduction paths 92 widening in a 2D plane has an electric resistance that changes as a length, a thinness, or a thickness thereof changes. Thus, by embedding a conduction-path-formed member having a shape of a sheet or a mesh in which this conduction circuit is formed in a construction such as a road, a floor or a wall, a torsion occurring when or after asphalt or concrete is hardened may be sensed in real time. Further, applications of embedding or attaching the member having the shape of the sheet are particularly suitable for interpreting a process of constructing a huge structure such as a dam, an airport runway, a harbor, a high-rise edifice, a water supply and sewerage network, a highway or an overpass of a railroad, or interpreting a disablement thereof. In addition, by disposing memories in a portion of each conduction circuit to preserve sensing history data, a history of vibrations occurring during the constructing process may be accumulated accurately, and posterior data falsification may be prevented.

Further, in the examples of FIGS. 23 and 24, a torsion of the sensor-structure-attached-member is generally sensed. Further, when a cut part is generated in the conduction circuit, a position thereof may be specified easily. Meanwhile, the examples may also be utilized to restrictively detect a cut of the original sensor-structure-attached-member (that is, a disconnection of the conduction circuit).

Further, although FIG. 24 illustrates a case of connecting the plurality of conduction paths 92 in a shape of 2D matrices, the plurality of conduction paths 92 may also be connected to each other in a shape of 3D matrices (3D shape). It is exceptionally suitable for a case in which the sensor-structure-attached-member is a 3D structure.

Further, to install the plurality of conduction paths 92 having different resistances directly in the sensor-structure-attached-member as shown in FIG. 23 or 24, a circuit pattern thereof needs to be designed in advance. In this example, a plurality of pieces of basic pattern information having predetermined resistances may be prepared in a memory of such as a computer. Circuit data may be generated by combining such pattern information using a circuit generation program executed by the computer. The circuit data may be transmitted to a printer or a semiconductor film forming device. By applying/printing a metal paste or a conductive paint, or depicting a resist film of a semiconductor process, an actual conduction circuit may be formed. An example of this type of designing process is illustrated in FIG. 25.
(a) of FIG. 25 illustrates, in a reference range having a predetermined area, such as a square (not limited to the square, for example, a regular triangle, a rectangle, a rhombus, a regular hexagon, or other suitable geometric shapes), pattern information 206a including a pair of terminals 207 disposed at centers of opposite sides, and a unit resistor 208 disposed between the pair of terminals 207. The unit resistor 208 is set to have a reference resistance, for example, 1 kiloohm, and thus the print pattern information 206a is a 1-kiloohm pattern.

Pattern information 206b as shown in (b) of FIG. 25 includes two unit resistors 208 directly between the pair of terminals 207, and thus is a 2-kiloohm pattern. Pattern information 206c as shown in (c) of FIG. 25 is a 3-kiloohm pattern, pattern information 206d as shown in (d) of FIG. 25 is a 5-kiloohm pattern, and pattern information 206e as shown in (e) of FIG. 25 is a 7-kiloohm pattern.

Further, pattern information 206f as shown in (f) of FIG. 25 includes a total of four terminals 207 disposed at centers of 4 edges in a square reference range. A unit resistor 208 is disposed at a junction of all the terminals 207. In doing so, when predetermined two terminals 207 among the total of four terminals 207 are used, a resistance of 1 kiloohm may be obtained. In addition, as shown in pattern information 206g, 206h, and 206i of (g), (h), and (i) of FIG. 25, patterns for connecting good conductors only may be prepared. By accumulating the pattern information 206a through the pattern information 206i in the memory of the computer, and combining the information on a program, pattern information (circuit information) having a desired resistance may be generated easily. Further, although a case of disposing a terminal linked to an adjacent pattern at a center of each side of the square reference range is illustrated herein, the terminal linked to the adjacent pattern may also be disposed at each corner of the square reference range.

FIG. 26 illustrates circuit information generated by combining fifteen pieces of pattern information. Here, a 4-kiloohm conduction circuit, a 13-kiloohm conduction circuit, and a 14-kiloohm conduction circuit, each in which a plurality of pieces of pattern information is disposed in series, are connected to each other in parallel. For example, the circuit information may be input into an applying device, and the applying device may apply a good conductor paste or a resistor paste on a sensor-structure-attached-member, whereby a conduction circuit may be formed. Further, the same pattern may be depicted and masked with respect to the sensor-structure-attached-member by photoresist, and a desired conduction circuit may be formed by a film forming process such as semiconductor or vapor deposition.

Hereinafter, examples of using a sensor-structure-attached-member will be described with reference to FIGS. 27 and 28. (a) of FIG. 27 illustrates a case of forming a sensor structure (conduction circuit) in a pillar-shaped structure such as a bridge. A conduction circuit 213 is formed on a pillar 212 (bridge pier). In this example, an organic transistor may be directly printed as the conduction circuit 213. In doing so, an active electric circuit may be formed easily on the pillar 212. In detail, in addition to the sensor structure already described, an antenna structure, a resonance circuit, an amplifier circuit, a control circuit, a modulation circuit, or a transmission and reception interface may also be printed. When a physical phenomenon such as a deformation, a distortion, an extension and contraction, or a crack occurs in the pillar 212, an antenna structure formed on a surface of the pillar may be displaced or damaged, and thus a resonance frequency may change. When the conduction circuit 213 generally capable of responding is unable to respond sufficiently, the physical phenomenon may be detected accordingly. Further, when the pillar 212 swells, a phenomenon in which an area of an antenna increases and a resonance frequency decreases may be expected. Based on a change in the frequency, quantitative information related to the physical change in the pillar 212 may also be obtained.
(b) of FIG. 27 is a cross-sectional view cut along a line A-A' of (a) of FIG. 27. The conduction circuit 213 may be formed by applying a base 214 of an insulator on a surface of the pillar 212, forming a circuit pattern layer 215 having a sensor structure, and covering the surface with a water-resistant protection layer 216. However, in a case in which the sensor-structure-attached-member being a detection target is an insulator, like a concrete pillar 212, the base 214 may be omitted. In particular, in a case of a target which is to undergo both a process of a manufacturing factory such as precast concrete and precut lumber, and a subsequent site construction process, patterning may be performed by a patterning process at the manufacturing factory, whereby the workability at the site may greatly improve. In a circuit, using an existing electronic circuit (IC chip), only a sensor structure for detecting a physical phenomenon may be printed directly on the sensor-structure-attached-member of the pillar 212. The conduction circuit 213 may also be formed using a semiconductor process such as photolithography, or by performing etching after forming a metallic film like a case of preparing a print substrate.

Next, referring to FIG. 28, an example in which a sensor 217 and a member (constructions 212) being a measurement target are separate members will be described. The sensor 217 of the present embodiment is a belt-shaped material including a plurality of sensor structures (conduction circuits). The sensor 217 is a so-called smart band, and may be spirally wound over a columnar structure 212 such as a bridge pier as shown in (a) of FIG. 28 to reinforce the structure 212 and simultaneously detect a physical phenomenon based on a deformation thereof after the reinforcement. Methods of printing the conduction circuit on the sensor 217 may include transferring, etching, coating, and a semiconductor process. A material of the sensor 217 includes fabric, nonwoven fabric, resin, fiber-reinforced synthetic resin including various reinforced fibers such as a carbon fiber, a metal fiber, a silicon fiber and a glass fiber, paper, rubber, or silicone. A material of the conduction path may include aluminium, copper, an organic conductor, or other electric conductors. An ID signal sending circuit may be formed in the conduction circuit 213 implementing a sensor structure individually to send an independent individual ID. The ID signal sensing circuit may be disposed by attaching an IC chip later. Thus, a position of the sensor 217 at which each conduction circuit 213 is to be positioned may be verified (identified) in advance. For example, after reinforcement with this smart band, individual IDs are received from all conduction circuits 213 through a wireless access device 218, as shown in (b) of FIG. 28, and a position of the structure 212 at which each individual ID (conduction circuit 213) is disposed may be verified and preserved as data. After that, when a deformation or an abnormality occurs in the pillar 212, an amount of the deformation may be sensed in response to a change in the resistance value of each conduction circuit 213. Then, when a deformation or an abnormality occurs in the pillar 212 and thus, for example, the pillar 212 is cracked, a portion of antenna structures of the conduction circuits 213 are damaged. A conduction circuit that used to be accessible may be inaccessible, or a resonance frequency of a predetermined antenna may change. By collecting a corresponding individual ID from the conduction circuit 213 together with information related to the inaccessibility or the change in the frequency, a disabled portion of the pillar 212 may be detected without peeling off or removing a reinforcing material. Further, although a case of assigning an individual ID to each conduction circuit 213 is illustrated herein, a partial ID may be assigned in a unit of the sensor 217 being a smart band, or an ID may be assigned based on other rules.

Further, as the conduction-path-formed member, cables such as various types of power cables including high-voltage ones, middle-voltage ones and low-voltage ones, various types of pipes for water supply, sewerage, gas, steam, various medicines and oil, and various members of a joint for a pipe may be used.

### <Other aspects>

In addition to the foregoing, the present invention may be applicable to multi-purpose mechanical parts. For example, a linear part may include a linear shaft, a shaft holder, a set collar, a linear bushing, a ball guide, a spline, an oil-free bushing/washer, an oil-free bushing, an oil-free washer, an oil-free material (round bar/pipe), an oil-free plate/guide rail, an oil-free plate, an oil-free guide rail, an oil-free material (plate), a liner guide, a cable carrier, a ball screw, a support unit, a squared thread/sliding thread, a nut for a squared thread, a sliding thread, a cross roller, a cross roller table, a cross roller ring, a linear ball slide, a linear rail, an actuator, an index table, a power cylinder/jack, and bellows. Further, a rotating part may include, for example, a bearing, a bearing holder, a cam follower, a roller follower, a rotating shaft, and a driving shaft. A connecting/link part may include, for example, a stepped screw for fulcrum, a hinge pin, a hinge base, a hinge bolt, a link, a rod end bearing, a connecting rod, a link cable, and a link wire. Further, a transmission part may include, for example, a coupling joint such as a rigid type, a universal joint, a chain coupling or a flange type, a timing belt, a round belt, a V belt, a pulley, a chain, a sprocket, a chain bolt, a turn buckle, a tensioner, a gear or ratchet such as a spur gear, a bevel gear, a helical gear, a screw gear, a worm gear, a rack gear or an internal gear, and a ring rail gear. Further, a power source may include motors including a compact AC motor, a stepping motor, a servomotor, a brushless motor, a brushed DC motor, a general purpose motor, and a gear motor, and a gearbox or reducer including a clutch or a brake, in addition to an engine such as an internal combustion engine and an external combustion engine. Further, a transporting part including a conveyor or a roller, an elevator including a table lifter or an air lifter, and hauling machinery may also be included. Further, a stage part may include a manual or automatic stage in a movable stage of an X axis, a Z axis, XY axes, XYZ axes, a rotation, a gonio, a tilt or multiple axes. A pneumatic device may include a cylinder, an actuator, a valve, a regulator, a lubricator, a solenoid valve for air pressure, a solenoid valve for fluid, an air operated valve, and a pipe fitting. Further, a vacuum part may include a vacuum pipe, a vacuum pump, a vacuum generator, an ejector, a vacuum valve, a vacuum filter, a vacuum pressure regulating valve, a suction pad, a vacuum tank, and a chamber. A hydraulic device may include a hydraulic actuator, a hydraulic pump, an oil filter, a hydraulic cylinder, a hydraulic rotary actuator, a hydraulic clamp, a hydraulic pump, an oil filter, a hydraulic valve, a hydraulic hose, and an oil cap. A piping part may include a steel pipe, a copper pipe/stainless steel pipe, and a resin pipe. A fitting may include a screw type fitting, a screw type flange, a hose fitting, a stainless steel pipe fitting, a copper pipe fitting, a steel pipe fitting, a welded type fitting, a welded type flange, a rotary joint, a swivel joint, a mechanical pipe fitting, a resin pipe fitting, an expansion pipe fitting, a PVC pipe fitting, a coupler joint, and a one-touch joint. The valve may include a ball valve, a needle valve, a fluid check valve, a gate valve, a globe valve, a butterfly valve, a diaphragm valve, a pinch valve, an air operated valve, a safety valve, and a regulating valve. A pipe support may include, for example, a suspended pipe metallic fitting, a stand pipe metallic fitting, a floor penetrating metallic fitting, a floor-band, a U-shaped metallic fitting, a saddle band, and a bracket. A piping clamp may include, for example, a manifold, a block manifold, a rotary manifold, a bracket with fitting, and a manifold with magnet. A resin hose may include, for example, a resin hose, a hose band, a hose reel, and a duct hose. Further, a duct piping part may include a duct pipe, a flexible hose, a sanitary piping, a sanitary valve, a sanitary pipe, a sanitary fitting, a clamp, and a gasket. A seal may include an O-ring, an oil seal, a gasket, a seal washer, a seal cap, and a packing. A drainage-related part may include a catch basin, a rain water basin, a cover, a protection lid, a groove lid, and a degassing cylinder. Further, a shelf-related part may include, for example, a shelf, a shelf support, a shelf column, and a shelf board. A hinge may include, for example, a pivot type hinge, a rotary type hinge, and a leaf type hinge, and also include a flat hinge, a flag hinge, a free hinge, a back hinge, a hidden hinge, a spring hinge, and a glass hinge. A fastening member may include, for example, a screw, a bolt, a washer, and a nut. Respective examples thereof may include, for example, a micro screw, a fine screw, a washer mounting screw, a tapping screw, a tap-tight screw, a high-tech screw, a drill screw, a tamper resistant screw, a hex bolt, a hexagon socket head bolt (cap bolt), a low head bolt, a small-diameter bolt, a bolt with through-hole, a hexagon socket button bolt, a hexagon socket flathead bolt, an unified screw, an inch screw, a wit screw, a set screw, a full screw, a stud bolt, a butterfly bolt, a thumbscrew, a dress screw, a square bolt, a ring bolt, a resin screw, a ceramic screw, a dropout adjusting screw, a shoulder bolt, an eye bolt, a rot bolt, a piping U bolt, a wooden screw, a coach screw, a coarse thread, an insert nut, a light hollow screw, a universal screw, a joint connector, a connecting bracket bolt, other woodworking screws, other screws for concrete, other screws for gypsum board, a corrugated sheet screw, a nail, screws for steel plate, a stud-fastening screw, a washer, a screw washer, a flat washer, a spring washer, a toothed washer (inner clip washer), a rosette washer, one/both tongued washer, a tapered washer, a spherical washer, and a dress screw washer. Further, the present invention may be applicable to suitable parts of various types of plants such as a power plant, a complex plant, a crushing plant, a separation plant, a casting plant, a metal processing plant, a woodworking plant, a nuclear power plant, a steam generating plant, a steam power plant, a solar power plant, a regenerative plant, a cooling plant, a liquefaction plant, an electrolytic coating plant, a petroleum chemical plant, a gas plant, a water supply plant, a sewage treatment plant, a waste treatment plant, a resin plant, a metal plant, a concrete plant, and an asphalt plant. Types of a plant may include a nuclear power plant, for example, machine equipment such as a reactor vessel (reactor pressure vessel), a coolant piping (recirculation piping), a coolant pump (recirculation pump), a vacuum generator or a turbine, electric/instrumentation equipment such as a generator, a transformer or a cable, and a concrete structure such as a reactor building or a turbine scaffold. In addition, types of the plant may include a hydroelectric power plant, a wind power plant, a tidal power plant, a geothermal power plant, a solar thermal power plant, an ocean temperature difference power plant, and a thermal power plant. The nuclear power plant may include a nuclear fission plant and a nuclear fusion plant, and a solar power plant and a fuel cell plant power plant may be included. Further, the present invention may be applicable various types of vehicles (constituent parts thereof), for example, a wheelchair, a stroller, a ropeway, a lift, a gondola, an elevator, an escalator, a bicycle, a car, an industrial machine, a construction machine, an agricultural machine, a motorcycle, a snow mobile, an amphibious car, a military vehicle such as a tank or an armored car, a railroad vehicle, a passenger ship, a cargo ship, a fishing boat, a yacht, a boat, a water motorbike, a race boat, a navy vessel, a submarine, a glider, a balloon, an airplane, a vertical takeoff and landing aircraft, a helicopter, an auto-gyroscope, a rocket, an artificial satellite. The wheelchair may include a frame, a main wheel, a caster, a seat, a back support, a foot support, an arm support, a brake, a handle, and a tipping lever. The ropeway, the lift, or the gondola may include a cable, a carrier, and a column. The elevator may include, for example, a control panel, a hoisting machine, a speed governor, a main rope, a governor rope, a basket, a tail cord, and a governor tensioner. The escalator may include a scaffold, a riser, a step chain, a driving roller, a following roller, a driving rail, a following rail, a wheelchair dedicated step, a skirt guard, a comb plate, a driving unit, a driving chain, a handrail driving roller, a handrail chain, a pressure roller, a handrail guide rail, and an inlet. The bicycle may include, for example, a frame and a wheel. The bus, the truck, the car, or the motorcycle may include a vehicular structure such as a chassis, a frame, a reinforcement or a body, a motor, a power transmission device, a steering device, a braking/restraining device, an operating device, a tire wheel, a carrier, and a suspension. The railroad vehicle may include, for example, an underframe, a side structure, an end structure, a roof structure, a driver's platform, a door, a window, a seat, a lighting, an air conditioning device, a toilet, a coupler, a through-passage, a wheel, an axle, a bearing, an axle box supporting device, a bogie frame, a vehicle body supporting device, a driving device, a braking device, a power mechanism, and a pantograph. The ship may include, for example, a deck, an engine, a motor, a screw, a rudder, an anchor, an anchor chain, a radar, an antenna, a chimney, a fuel tank, a ballast tank, a sail, a mast, a ship's bottom, a paddle, and a bridge. The airplane may include, for example, a radome, a wheel, a galley, a passenger seat, a main wing, a horizontal tail wing, a vertical tail wing, a flap, a spoiler, a jet engine, a navigation light, a fuel tank, an aileron, an elevator, a rudder, a main circle casing, a longeron, a cowling, a main wing girder, a wing end plate, a fuselage skin, a circle casing, a horizontal stabilizer, a pressure bulkhead, a vertical stabilizer, a canard, a window, a door, a toilet, a cargo hold, an emergency facility, a propeller, a stack discharger, and a pitot tube. Further, various mechanical devices may include a refrigerator, a belt conveyor, a filling machine, an oven, a reservoir, a stirring machine, a whisk, a pot, a pressure cooker, a freezer, a fryer, a dryer, a sorting machine, a cutting machine, a smoking machine, a bottling machine, a canning machine, a washing machine, a shaving machine, a juicer, a crusher (mill), a fermentor, a burner, a steamer, a sprayer, a press machine, a stretching machine, a spinning machine, a weaving machine, a knitting machine, a sewing machine, a dyeing machine, a chemical fiber machine, a preparation machine (thread connecting machine), a polishing machine, a winder, a printer, a sawing machine, a rotary lathe (rotary cutting machine of log), a hot press, a wood dryer, a chip making machine, a raw wood sorting apparatus, a raw wood feeding machine, a band saw, a rip saw, a planning machine, a chisel machine, a milling machine, a tenon machine, a drilling machine, a sander or disk grinder, and a tightening machine. Further, the present invention may be applicable to sports equipment such as a bat, a glove, a mitt, and a ball of baseball, shoes, a ball, and a goal of soccer, armor or a bamboo sword of kendo, and a racket of tennis. Also, the present invention may also be applicable to musical instruments such as a piano, an electone, various types of wind instruments, and stringed instruments.

Next, an example in which a parent material itself in the sensor-structure-attached-member 30 serves as the base path 95P of the conduction path 92 of the sensor structure will be provided. In the sensor-structure-attached-member 30 of (A) of FIG. 29, a surface 32A of the parent material 32 itself being a detection target is formed of a conductive material with a high electric resistivity and a high electric resistance value when compared with the low resistance partial conducting sections 95Q, and the plurality of low resistance partial conducting sections 95Q being a good conductor with a relatively low electric resistivity and a relatively low electric resistance value is formed with intervals therebetween directly on the surface 32A. Further, as a material example of a high-resistance parent material, a material assigned with a conductivity by mixing conductive particles (for example, carbon powder) with a resin material with an extremely low conductivity such as FRP may be very suitable. Thus, the surface 32A itself may be utilized as the base path 95P. In this example, when a voltage is applied to both outer sides (see electrodes 32X and 32Y) with the low resistance partial conducting sections 95P therebetween on the surface 32A and a current is injected into the surface 32A, a resistance value (current value) may be changed with high sensitivity in response to a deformation of the surface 32A.

Further, as shown in (B) of FIG. 29, the plurality of low resistance partial conducting sections 95Q may be disposed to widen in a surface direction (for example, in a shape of matrices) with respect to the surface 32A. By applying a voltage to each of the pair of electrodes 32X and 32Y being good conductors disposing the low resistance partial conducting sections 95Q therebetween from one direction and the pair of electrodes 32V and 32AW being good conductors disposing the low resistance partial conducting sections 95Q therebetween from multiple directions, a deformation in both directions may be detected.

Hereinafter, a patterning method for forming the sensor structure of FIG. 1B on the surface of the parent material (measurement target) 32 of the sensor-structure-attached-member 30 will be described with reference to FIG. 30.

First, in a base path masking layer forming step of (A) of FIG. 30, a base path masking layer 95Pm is formed to cover a vicinity of a base path formation region 95Pf, with respect to the surface of the parent material including the base path formation region 95Pf. As a result, only the base path formation region 95Pf is exposed on the surface of the parent material.

Next, in a base path conductive layer forming step of (B) of FIG. 30, a base path conductive layer 95Pd is formed using a base path conductive material with respect to the surface of the parent material in a range including the base path formation region 95Pf.

Then, in a base path masking layer removing step of (C) of FIG. 30, the base path masking layer 95Pm is removed. As a result, the base path conductive layer 95Pd remains in the range of the base path formation region 95Pf, whereby a base path 95P is formed.

Further, in a low resistance partial conducting section masking layer forming step of (D) of FIG. 30, a low resistance partial conducting section masking layer 95Qm is formed to cover a vicinity of a plurality of low resistance partial conducting section formation regions 95Qf with respect to a surface of the base path conductive layer 95Pd (here, the completed base path 95P) including the plurality of low resistance partial conducting section formation regions 95Qf in the range of the base path formation region 95Pf. As a result, only the plurality of low resistance partial conducting section formation regions 95Qf is exposed. Further, a portion of the low resistance partial conducting section formation regions 95Qf may protrude from the completed base path 95P (the base path formation region 95Pf).

Next, in a low resistance partial conducting section conductive layer forming step of (E) of FIG. 30, a low resistance partial conducting section conductive layer 95Qd is formed using a low resistance partial conducting section conductive material, with respect to the surface in a range including the plurality of low resistance partial conducting section formation regions 95Qf.

After that, in a low resistance partial conducting section masking layer removing step of (F) of FIG. 30, the low resistance partial conducting section masking layer 95Qm is removed. As a result, the low resistance partial conducting section conductive layer 95Qd remains in the range of the low resistance partial conducting section formation regions 95Qf, whereby the plurality of low resistance partial conducting sections 95Q is formed. Through the above process, the sensor structure is completed.

Further, in the above patterning method, when an insulating layer is needed for a lower layer of the sensor structure, an insulating layer forming step may be performed earlier than the base path conductive layer forming step, and an insulating layer may be formed in the base path formation region 95Pf with respect to the surface of the parent material. Further, in the pattering method, an example in which the base path masking layer removing step is performed before the low resistance partial conducting section masking layer forming step is performed. However, the embodiment is not limited thereto. After the low resistance partial conducting section masking layer forming step is performed or after the low resistance partial conducting section masking layer removing step is performed, the base path masking layer removing step may be performed.

Further, in the base path masking layer forming step, the base path formation region 95Pf includes high resistance partial conducting section formation regions in which the high resistance partial conducting sections 95T (see FIG. 1B) are formed. That is, the base path masking layer forming step may be defined as a "high resistance partial conducting section masking layer forming step" of forming a high resistance partial conducting section masking layer to cover a vicinity of at least high resistance partial conducting section formation regions such that the high resistance partial conducting section formation regions are exposed. Similarly, the base path conductive layer forming step may be defined as a "high resistance partial conducting section conductive layer forming step" of forming a high resistance partial conducting section conductive layer using a high resistance partial conducting section conductive material. Similarly, the base path masking layer removing step may be defined as a "high resistance partial conducting section masking layer removing step" of removing the high resistance partial conducting section masking layer and completing the high resistance partial conducting sections 95T. These redefinitions also apply to the description provided below.

Hereinafter, a patterning method for forming the sensor structure of FIG. 1E on the surface of the parent material (measurement target) 32 of the sensor-structure-attached-member 30 will be described with reference to FIG. 31.

First, in a low resistance partial conducting section masking layer forming step of (A) of FIG. 31, a low resistance partial conducting section masking layer 95Qm is formed to cover a vicinity of a plurality of low resistance partial conducting section formation regions 95Qf, with respect to the surface of the parent material including the plurality of low resistance partial conducting section formation regions 95Qf. As a result, only the plurality of low resistance partial conducting section formation regions 95Qf is exposed.

Next, in a low resistance partial conducting section conductive layer forming step of (B) of FIG. 31, a low resistance partial conducting section conductive layer 95Qd is formed using a low resistance partial conducting section conductive material, with respect to the surface in a range including the plurality of low resistance partial conducting section formation regions 95Qf.

After that, in a low resistance partial conducting section masking layer removing step of (C) of FIG. 31, the low resistance partial conducting section masking layer 95Qm is removed. As a result, the low resistance partial conducting section conductive layer 95Qd remains in the range of the low resistance partial conducting section formation regions 95Qf, whereby a plurality of low resistance partial conducting sections 95Q is formed.

Next, in a base path masking layer forming step of (D) of FIG. 31, a base path masking layer 95Pm is formed to cover a vicinity of a base path formation region 95Pf, with respect to the surface of the parent material including the base path formation region 95Pf. As a result, only the base path formation region 95Pf is exposed on the surface of the parent material. Further, the plurality of low resistance partial conducting sections 95Q is positioned in the base path formation region 95Pf. Of course, a portion of the plurality of low resistance partial conducting sections 95Q may protrude from the base path formation region 95Pf.

After that, in a base path conductive layer forming step of (E) of FIG. 31, a base path conductive layer 95Pd is formed using a base path conductive material, with respect to the surface of the parent material in a range including the base path formation region 95Pf.

Further, in a base path masking layer removing step of (F) of FIG. 31, the base path masking layer 95Pm is removed. As a result, the base path conductive layer 95Pd remains in the range of the base path formation region 95Pf, whereby a base path 95P is formed. Through the above process, the sensor structure is completed.

Further, in the above patterning method, when an insulating layer is needed for a lower layer of the sensor structure, an insulating layer forming step is performed earlier than the low resistance partial conducting section masking layer forming step, and an insulating layer may be formed in the base path formation region 95Pf with respect to the surface of the parent material.

Hereinafter, a patterning method for forming the sensor structure of (A) of FIG. 29 on the surface of the parent material (measurement target) of the sensor-structure-attached-member 30 will be described with reference to FIG. 32.

First, in a low resistance partial conducting section masking layer forming step of (A) of FIG. 32, a low resistance partial conducting section masking layer 95Qm is formed to cover a vicinity of a plurality of low resistance partial conducting section formation regions 95Qf, with respect to the surface of the parent material including the plurality of low resistance partial conducting section formation regions 95Qf. As a result, only the plurality of low resistance partial conducting section formation regions 95Qf is exposed.

Next, in a low resistance partial conducting section conductive layer forming step of (B) of FIG. 32, a low resistance partial conducting section conductive layer 95Qd is formed using a low resistance partial conducting section conductive material, with respect to the surface in a range including the plurality of low resistance partial conducting section formation regions 95Qf.

After that, in a low resistance partial conducting section masking layer removing step of (C) of FIG. 32, the low resistance partial conducting section masking layer 95Qm is removed. Aa a result, the low resistance partial conducting section conductive layer 95Qd remains in the range of the low resistance partial conducting section formation regions 95Qf, whereby a plurality of low resistance partial conducting sections 95Q is formed. Through the above process, the sensor structure is completed.

Further, in the above patterning method, the masking layer, the conductive layer, and the insulating layer may be formed using various schemes, for example, vapor phase film forming, liquid phase film forming, thermal oxide film forming, printing, coating, foil stamping, transferring, and etching. For example, spray coating (including inkjet printing), spray coating (including gun spraying and airbrushing), electrodeposition coating, roller coating, and brushing may also be applied thereto. When roller coating or brushing is used, the sensor structure may be formed at a construction site.

Hereinafter, a patterning method for forming the sensor structure of FIG. 1B on the surface of the parent material (measurement target) 32 of the sensor-structure-attached-member 30, using a scheme used for a semiconductor process or MEMS process will be described with reference to FIG. 33.

First, in a base path conductive layer forming step of (A) of FIG. 33, a base path conductive layer 95Pd is formed using a base path conductive material, with respect to the surface of the parent material 32 in a range including a base path formation region 95Pf. This may be performed using various vapor deposition methods or coating methods.

Next, in a base path masking layer forming step of (B) of FIG. 33, a base path masking layer 95Pm is formed to cover only the base path formation region 95Pf, with respect to the base path conductive layer 95Pd. As a result, a region other than the base path formation region 95Pf is exposed on the surface of the parent material. This process is so-called photo lithography.

Next, in a base path conductive material removing step of (C) of FIG. 33, a base path 95P is formed by removing the base path conductive layer 95Pd in the region other than the base path formation region 95Pf. This process is so-called etching.

After that, in a base path masking layer removing step of (D) of FIG. 33, the base path masking layer 95Pm being a photoresist is removed. As a result, the base path 95P is exposed. Further, when the photoresist itself has a conductivity, the base path masking layer 95Pm may remain as is.

Further, in a low resistance partial conducting section conductive layer forming step of (E) of FIG. 33, a low resistance partial conducting section conductive layer 95Qd is formed using a low resistance partial conducting section conductive material, with respect to the surface in a range including a plurality of low resistance partial conducting section formation regions 95Qf overlapping the base path 95P. This may be performed using various vapor deposition methods or coating methods.

Next, in a low resistance partial conducting section masking layer forming step of (F) of FIG. 33, a low resistance partial conducting section masking layer 95Qm is formed to cover only the plurality of low resistance partial conducting section formation regions 95Qf, with respect to the low resistance partial conducting section conductive layer 95Qd. As a result, a region other than the plurality of low resistance partial conducting section formation regions 95Qf is exposed on a surface of the low resistance partial conducting section conductive layer 95Qd. Further, a portion of the low resistance partial conducting section formation regions 95Qf may protrude from the base path 95P (the base path formation region 95Pf). This process is so-called photo lithography.

After that, in a low resistance partial conducting section conductive material removing step of (G) of FIG. 33, the region other than the low resistance partial conducting section formation regions 95Qf is removed from the low resistance partial conducting section conductive layer 95Qd. As a result, low resistance partial conducting sections 95Q are formed. This process is so-called etching. Last, as shown in (H) of FIG. 33, the low resistance partial conducting section masking layer 95Qm is removed, as necessary, to expose the low resistance partial conducting sections 95Q. The sensor structure is completed through the above process.

Hereinafter, a patterning method for forming the sensor structure of FIG. 1E on the surface of the parent material (measurement target) 32 of the sensor-structure-attached-member 30, using a scheme used for a semiconductor process or MEMS process will be described with reference to FIG. 34.

First, in a low resistance partial conducting section conductive layer forming step of (A) of FIG. 34, a low resistance partial conducting section conductive layer 95Qd is formed using a low resistance partial conducting section conductive material, with respect to the surface of the parent material in a range including a plurality of low resistance partial conducting section formation regions 95Qf. This may be performed using various vapor deposition methods or coating methods.

Next, in a low resistance partial conducting section masking layer forming step of (B) of FIG. 34, a low resistance partial conducting section masking layer 95Qm is formed to cover only the conducting section formation regions 95Qf, with respect to the low resistance partial conducting section conductive layer 95Qd. As a result, a region other than the conducting section formation regions 95Qf is exposed on the surface of the parent material. This process is so-called photo lithography.

Next, in a low resistance partial conducting section conductive material removing step of (C) of FIG. 34, low resistance partial conducting sections 95Q are formed by removing the low resistance partial conducting section conductive layer 95Qd in the region other than the conducting section formation regions 95Qf. This process is so-called etching.

After that, in a low resistance partial conducting section masking layer removing step of (D) of FIG. 34, the low resistance partial conducting section masking layer 95Qm being a photoresist is removed. As a result, the low resistance partial conducting sections 95Q are exposed. Further, when the photoresist itself has a conductivity, the low resistance partial conducting section masking layer 95Qm may remain as is.

Further, in a base path conductive layer forming step of (E) of FIG. 34, a base path conductive layer 95Pd is formed using a base path conductive material, with respect to the surface in a range including a base path formation region 95Pf overlapping the low resistance partial conducting sections 95P. This may be performed using various vapor deposition methods or coating methods.

Next, in a base path masking layer forming step of (F) of FIG. 34, a base path masking layer 95Pm is formed to cover only the base path formation region 95Pf, with respect to the base path conductive layer 95Pd. As a result, a region other than the base path formation region 95Pf is exposed on a surface of the base path conductive layer 95Pd. Further, the low resistance partial conducting sections 95Q may protrude from a portion of the base path formation region 95QP. This process is so-called photo lithography.

After that, in a base path conductive material removing step of (G) of FIG. 34, the region other than the base path formation region 95Pf is removed from the base path conductive layer 95Pd. As a result, a base path 95P is formed. This process is so-called etching. Last, as shown in (H) of FIG. 34, the base path masking layer 95Pm is removed, as necessary, to expose the base path 95P. The sensor structure is completed through the above process.

Hereinafter, a patterning method for forming the sensor structure of (A) of FIG. 29 on the surface of the parent material (measurement target) of the sensor-structure-attached-member 30, using a scheme used for a semiconductor process or MEMS process will be described with reference to FIG. 35.

First, in a low resistance partial conducting section conductive layer forming step of (A) of FIG. 35, a low resistance partial conducting section conductive layer 95Qd is formed using a low resistance partial conducting section conductive material, with respect to the surface in a range including a plurality of low resistance partial conducting section formation regions 95Qf.

Next, in a low resistance partial conducting section masking layer forming step of (B) of FIG. 35, a low resistance partial conducting section masking layer 95Qm is formed to cover only a plurality of low resistance partial conducting section formation regions 95Qf, with respect to the low resistance partial conducting section conductive layer 95Qd. As a result, a region other than the plurality of low resistance partial conducting section formation regions 95Qf is exposed. This process is so-called photo lithography.

Next, in a low resistance partial conducting section conductive material removing step of (C) of FIG. 35, low resistance partial conducting sections 95Q are formed by removing the low resistance partial conducting section conductive layer 95Qd in a range other than the conducting section formation regions 95Qf. This process is so-called etching.

Last, as shown in (D) of FIG. 35, the low resistance partial conducting section masking layer 95Qm is removed, as necessary, to expose the low resistance partial conducting sections 95Q. The sensor structure is completed through the above process.

Hereinafter, a patterning method for forming the sensor structure of (A) of FIG. 1I on the surface of the parent material (measurement target) 32 of the sensor-structure-attached-member 30 will be described with reference to FIG. 36. Further, for ease of description, an example in which the parent material 32 has a narrow surface area is illustrated. However, in reality, the parent material 32 may be applied to large areas of, such as, wallpaper, plates, inner walls of tunnels, and bridge girders.

In a base path forming step of (A) of FIG. 36, a base path 95P is formed by applying a base path conductive material to the surface of the parent material 32. Thus, when the base path 95P is to be formed on the entirety or a wide area of the parent material 32, forming a base path masking layer is unnecessary.

Next, in a low resistance partial conducting section masking layer forming step of (B) of FIG. 36, a low resistance partial conducting section masking layer 95Qm is formed to cover a vicinity of a plurality of low resistance partial conducting section formation regions 95Qf, with respect to a surface of the base path 95P including the plurality of low resistance partial conducting section formation regions 95Qf. As a result, only the plurality of low resistance partial conducting section formation regions 95Qf is exposed.

Next, in a low resistance partial conducting section conductive layer forming step of (C) of FIG. 36, a low resistance partial conducting section conductive layer 95Qd is formed using a low resistance partial conducting section conductive material, with respect to the surface in a range including the plurality of low resistance partial conducting section formation regions 95Qf.

After that, in a low resistance partial conducting section masking layer removing step of (D) of FIG. 36, the low resistance partial conducting section masking layer 95Qm is removed. As a result, the low resistance partial conducting section conductive layer 95Qd remains in the range of the low resistance partial conducting section formation regions 95Qf, whereby a plurality of low resistance partial conducting sections 95Q is formed. Through the above process, the sensor structure is completed.

A patterning method for forming the sensor structure of (C) of FIG. IF on the surface of the parent material (measurement target) 32 of the sensor-structure-attached-member 30 will be described with reference to FIG. 37.

In a high resistance partial conducting section conductive layer forming step of (A) of FIG. 37, a high resistance partial conducting section masking layer 95Tm is formed to cover a vicinity of a plurality of high resistance partial conducting section formation regions 95Tf such that the plurality of high resistance partial conducting section formation regions 95Tf is exposed.

Next, in a high resistance partial conducting section conductive layer forming step of (B) of FIG. 37, a high resistance partial conducting section conductive layer 95Td is formed using a high resistance partial conducting section conductive material, in a range including the plurality of high resistance partial conducting section formation regions 95Tf.

After that, in a high resistance partial conducting section masking layer removing step of (C) of FIG. 37, the high resistance partial conducting section masking layer 95Tm is removed, and a portion of the high resistance partial conducting section conductive layer 95Td remains, whereby a plurality of high resistance partial conducting sections 95T is formed.

Next, in a low resistance partial conducting section masking layer forming step of (D) of FIG. 37, a low resistance partial conducting section masking layer 95Qm is formed to cover a vicinity of a plurality of low resistance partial conducting section formation regions 95Qf, and the plurality of low resistance partial conducting section formation regions 95Qf is exposed. Further, the low resistance partial conducting section masking layer 95Qm may serve as the high resistance partial conducting section masking layer 95Tm and, at the same time, may be disposed at a position deferred by a half phase from a disposition period of the high resistance partial conducting sections 95T. In doing so, the positions of the low resistance partial conducting section formation regions 95Qf are determined so as to suspend the corresponding high resistance partial conducting sections 95T.

Next, in a low resistance partial conducting section conductive layer forming step of (E) of FIG. 37, a low resistance partial conducting section conductive layer 95Qd is formed using a low resistance partial conducting section conductive material, with respect to a range including the plurality of low resistance partial conducting section formation regions 95Qf.

Last, in a low resistance partial conducting section masking layer removing step of (F) of FIG. 37, the low resistance partial conducting section masking layer 95Qm is removed, and a portion of the low resistance partial conducting section conductive layer 95Qd remains, whereby a plurality of low resistance partial conducting sections 95Q is formed. As a result, the high resistance partial conducting sections 95T and the low resistance partial conducting sections 95Q are formed such that at least a portion thereof overlap each other.

Hereinafter, a method of patterning the sensor structure 500 of FIG. 1B with respect to the parent material 32 being a material, at an actual site such as a construction site or a building site will be described with reference to FIG. 38.

In a base path masking layer forming step of (A) of FIG. 38, a base path masking layer 95Pm is formed to cover a vicinity of a meandering base path formation region 95Pf on the surface of the parent material 32 being a wall material, for example. Further, the base path masking layer 95Pm may be formed of a peelable strippable seal material. As a result, only the base path formation region 95Pf is exposed on the surface of the parent material.

Next, in a base path conductive layer forming step of (B) of FIG. 38, a base path conductive layer 95Pd is formed by applying a base path conductive material of a liquid or paste phase using a brush, a coating roller, a spray, or an inkjet, with respect to the surface of the parent material in a range including the base path formation region 95Pf.

After that, in a base path masking layer removing step of (C) of FIG. 38, the base path masking layer 95Pm is removed by stripping. As a result, the base path conductive layer 95Pd remains in the range of the base path formation region 95Pf, whereby a base path 95P is formed.

Further, in a low resistance partial conducting section masking layer forming step of (D) of FIG. 38, a low resistance partial conducting section masking layer 95Qm is formed to cover a vicinity of a plurality of low resistance partial conducting section formation regions 95Qf, with respect to a surface of the base path conductive layer 95Pd (here, the completed base path 95P) including the plurality of low resistance partial conducting section formation regions 95Qf in the range of the base path formation region 95Pf. The low resistance partial conducting section masking layer 95Qm may also be formed of a strippable seal material. As a result, only the plurality of low resistance partial conducting section formation regions 95Qf is exposed along the base path 95P. Further, from ease of positioning, a portion of the low resistance partial conducting section formation regions 95Qf is configured to actively protrude from the completed base path 95P.

Next, in a low resistance partial conducting section conductive layer forming step of (E) of FIG. 38, a low resistance partial conducting section conductive layer 95Qd is formed by applying a low resistance partial conducting section conductive material of a liquid or phase phase using a brush, a coating roller, a spray, or an inkjet, with respect to the surface in a range including the plurality of low resistance partial conducting section formation regions 95Qf.

After that, in a low resistance partial conducting section masking layer removing step of (F) of FIG. 38, the low resistance partial conducting section masking layer 95Qm is removed by stripping. As a result, the low resistance partial conducting section conductive layer 95Qd remains in the range of the low resistance partial conducting section formation regions 95Qf, whereby a plurality of low resistance partial conducting sections 95Q is formed. Through the above process, the sensor structure 500 is completed.

The embodiments of the present invention are not limited to the described embodiments. Instead, various changes may be made to these embodiments without departing from the principles and spirit of the invention.

### Description of Reference Numerals

1 Measuring system
10 Constructions
12 Structure
14 Roof beam
30 Sensor-structure-attached-member
32 Parent material
40 Male screw body
42 Head part
44 Shaft part
50 Washer
54 Substrate
91 Electrically insulating layer
92 Conduction path
92T Upper-layer-side conduction path
92U Lower-layer-side conduction path
92X First partial conduction path
92Y Second partial conduction path
95P Base path
95Q Low resistance partial conducting sections
95T High resistance partial conducting sections
95U Auxiliary conducting sections
100 Information collection device
400A Sensor-structure-attached-member
400B Sensor-structure-attached-member
400C Sensor-structure-attached-member
410A Shaft member
410C Rail member
500 Sensor structure

## Claims

1. A sensor structure, comprising:
a plurality of high resistance partial conducting sections formed of a first conductive material, and disposed with intervals therebetween, and
a plurality of low resistance partial conducting sections formed of a second conductive material having a small electric resistivity when compared with the first conductive material, disposed to respectively connect the corresponding high resistance partial conducting sections, and disposed with intervals therebetween,
wherein a physical phenomenon is detected due to a change in electric resistance value in a range including both the high resistance partial conducting sections and the low resistance partial conducting sections.

2. The sensor structure of claim 1, wherein the high resistance partial conducting sections and the low resistance partial conducting sections have planar shapes, and
the high resistance partial conducting sections and the low resistance partial conducting sections overlap and are in surface contact with each other.

3. The sensor structure of claim 1 or 2, comprising:
auxiliary conducting sections formed of a conductive material having a great electric resistivity when compared with the second conductive material, and disposed to respectively connect the corresponding high resistance partial conducting sections.

4. The sensor structure of claim 3, comprising:
a base path formed of the first conductive material,
wherein the plurality of low resistance partial conducting sections is arranged to contact a surface of the base path with intervals therebetween,
at least a portion of regions, corresponding to the intervals between the plurality of low resistance partial conducting sections, in the base path correspond to the high resistance partial conducting sections, and
regions contacting the low resistance partial conducting sections in the base path correspond to the auxiliary conducting sections.

5. A sensor-structure-attached-member in which the sensor structure of one of claims 1 to 4 is disposed on the entirety or a portion of a member being a measurement target.

6. The sensor-structure-attached-member of claim 5, wherein the high resistance partial conducting sections or the low resistance partial conducting sections are formed directly on a surface of the member.

7. The sensor-structure-attached-member of claim 5 or 6, wherein a plurality of sensor structures is arranged at different positions on the surface of the member.

8. The sensor-structure-attached-member of one of claims 5 to 7, wherein the sensor structure is disposed over the entire region from a vicinity of one end to a vicinity of the other end on the surface of the member.

9. The sensor-structure-attached-member of one of claims 5 to 7, wherein the sensor structure being a single conduction path is disposed over the entire region from a vicinity of one end to a vicinity of the other end on the surface of the member.

10. The sensor-structure-attached-member of one of claims 5 to 9, wherein the member is formed of a conductive material and serves as the high resistance conducting sections, and
the sensor structure is formed by arranging the low resistance partial conducting sections with intervals therebetween on the surface of the member.

11. A sensor structure, comprising:
a base path formed of a first conductive material, and
a plurality of low resistance partial conducting sections arranged to contact a surface of the base path, the low resistance partial conducting sections formed of a conductive material having a small electric resistivity when compared with the first conductive material,
wherein a physical phenomenon is detected due to a change in electric resistance value in a range including both the base path and the low resistance partial conducting sections.

12. The sensor structure of claim 11, wherein the plurality of low resistance partial conducting sections is arranged on at least one surface of the base path.

13. The sensor structure of claim 11 or 12, wherein the change in electric resistance value resulting from a deformation of the base path is detected.

14. The sensor structure of one of claims 11 to 13, comprising:
a plurality of parallel conduction portions configured to branch and join between both ends to which a voltage is applied,
wherein the base path and the plurality of low resistance partial conducting sections are arranged in each of the plurality of parallel conduction portions.

15. The sensor structure of one of claims 11 to 14, comprising:
a pair of terminals which are adjacent to each other and to which a voltage is applied, and
a conduction path configured to separate from one of the terminals and return to the other of the terminals,
wherein the base path and the plurality of low resistance partial conducting sections are arranged in the middle of the conduction path.

16. The sensor structure of one of claims 11 to 15, wherein a layer thickness of the base path is greater than a layer thickness of the low resistance partial conducting sections.

17. A sensor-structure-attached-member in which the sensor structure of one of claims 11 to 16 is disposed on the entirety or a portion of a member being a measurement target.

18. The sensor-structure-attached-member of claim 17, wherein the base path or the low resistance partial conducting sections are formed directly on a surface of the member.

19. The sensor-structure-attached-member of claim 17 or 18, wherein a plurality of sensor structures is arranged at different positions on a surface of the member.

20. The sensor-structure-attached-member of one of claims 17 to 19, wherein the member is formed of a conductive material and serves as the base path, and
the sensor structure is formed by arranging the low resistance partial conducting sections on a surface of the member.

21. A patterning method for forming a sensor structure including a plurality of high resistance partial conducting sections disposed with intervals therebetween and a plurality of low resistance partial conducting sections arranged to connect the high resistance partial conducting sections on a surface of a measurement target, and sensorizing the measurement target by combining the sensor structure with the measurement target, the patterning method comprising:
a high resistance partial conducting section masking layer forming step of forming a high resistance partial conducting section masking layer to cover a vicinity of at least a plurality of high resistance partial conducting section formation regions such that the high resistance partial conducting section formation regions are exposed,
a high resistance partial conducting section conductive layer forming step performed later than the high resistance partial conducting section masking layer forming step, the high resistance partial conducting section conductive layer forming step of forming a high resistance partial conducting section conductive layer using a high resistance partial conducting section conductive material, with respect to a range including the plurality of high resistance partial conducting section formation regions,
a low resistance partial conducting section masking layer forming step of forming a low resistance partial conducting section masking layer to cover a vicinity of a plurality of low resistance partial conducting section formation regions, and exposing the plurality of low resistance partial conducting section formation regions,
a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to a range including the plurality of low resistance partial conducting section formation regions,
a high resistance partial conducting section masking layer removing step performed later than the high resistance partial conducting section conductive layer forming step, the high resistance partial conducting section masking layer removing step of forming the plurality of high resistance partial conducting sections through the high resistance partial conducting section conductive layer by removing the high resistance partial conducting section masking layer, and
a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer.

22. The patterning method of claim 21, wherein the high resistance partial conducting sections and the low resistance partial conducting sections are formed such that at least a portion thereof overlap each other.

23. Apatterning method for forming a sensor structure including a base path and a plurality of low resistance partial conducting sections arranged to contact the base path on a surface of a measurement target, and sensorizing the measurement target by combining the sensor structure with the measurement target, the patterning method comprising:
a base path forming step of forming a base path using a base path conductive material, with respect to the surface of the measurement target,
a low resistance partial conducting section masking layer forming step performed later than the base path forming step, the low resistance partial conducting section masking layer forming step of forming a low resistance partial conducting section masking layer to cover a vicinity of a plurality of low resistance partial conducting section formation regions, with respect to the base path including the plurality of low resistance partial conducting section formation regions, and exposing the plurality of low resistance partial conducting section formation regions,
a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to the base path in a range including the plurality of low resistance partial conducting section formation regions, and
a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer.

24. A patterning method for forming a sensor structure including a base path and a plurality of low resistance partial conducting sections arranged to contact the base path on a surface of a measurement target, and sensorizing the measurement target by combining the sensor structure with the measurement target, the patterning method comprising:
a base path masking layer forming step of forming a base path masking layer to cover a vicinity of a base path formation region, with respect to the surface of the measurement target including the base path formation region, and exposing the base path formation region,
a base path conductive layer forming step performed later than the base path masking layer forming step, the base path conductive layer forming step of forming a base path conductive layer using a base path conductive material with respect to the surface of the measurement target in a range including the base path formation region,
a low resistance partial conducting section masking layer forming step performed later than the base path conductive layer forming step, the low resistance partial conducting section masking layer forming step of forming a low resistance partial conducting section masking layer to cover a vicinity of a plurality of low resistance partial conducting section formation regions, with respect to the base path conductive layer including the plurality of low resistance partial conducting section formation regions in a range of the base path formation region, and exposing the plurality of low resistance partial conducting section formation regions,
a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to the base path conductive layer in a range including the plurality of low resistance partial conducting section formation regions,
a base path masking layer removing step performed later than the base path conductive layer forming step, the base path masking layer removing step of forming the base path through the base path conductive layer by removing the base path masking layer, and
a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer.

25. The patterning method of claim 24, comprising:
an insulating layer forming step performed earlier than the base path conductive layer forming step, the insulating layer forming step of forming an insulating layer in the base path formation region with respect to the surface of the measurement target.

26. A patterning method for forming a sensor structure including a base path and a plurality of low resistance partial conducting sections arranged to contact the base path on a surface of a measurement target, and sensorizing the measurement target by combining the sensor structure with the measurement target, the patterning method comprising:
a low resistance partial conducting section masking layer forming step of forming a low resistance partial conducting section masking layer to cover a vicinity of a plurality of low resistance partial conducting section formation regions, with respect to the surface of the measurement target including the plurality of low resistance partial conducting section formation regions, and exposing the plurality of low resistance partial conducting section formation regions,
a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to the surface of the measurement target in a range including the plurality of low resistance partial conducting section formation regions,
a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer,
a base path masking layer forming step performed later than the low resistance partial conducting section masking layer removing step, the base path masking layer forming step of forming a base path masking layer to cover a vicinity of a base path formation region overlapping the plurality of low resistance partial conducting section formation regions, with respect to the surface of the measurement target including the base path formation region, and exposing the base path formation region,
a base path conductive layer forming step performed later than the base path masking layer forming step, the base path conductive layer forming step of forming a base path conductive layer using a base path conductive material with respect to the surface of the measurement target in a range including the base path formation region, and
a base path masking layer removing step performed later than the base path conductive layer forming step, the base path masking layer removing step of forming the base path through the base path conductive layer by removing the base path masking layer.

27. The patterning method of claim 26, comprising:
an insulating layer forming step performed earlier than the low resistance partial conducting section masking layer forming step, the insulating layer forming step of forming an insulating layer in the base path formation region with respect to the surface of the measurement target.

28. Apatterning method for forming a sensor structure including a base path and a plurality of low resistance partial conducting sections arranged to contact the base path on a surface of a measurement target, and sensorizing the measurement target by combining the sensor structure with the measurement target, the patterning method comprising:
a low resistance partial conducting section masking layer forming step of forming a low resistance partial conducting section masking layer to cover a vicinity of a plurality of low resistance partial conducting section formation regions, with respect to the surface of the measurement target serving as the base path, and exposing the plurality of low resistance partial conducting section formation regions,
a low resistance partial conducting section conductive layer forming step performed later than the low resistance partial conducting section masking layer forming step, the low resistance partial conducting section conductive layer forming step of forming a low resistance partial conducting section conductive layer using a low resistance partial conducting section conductive material, with respect to the surface of the measurement target in a range including the plurality of low resistance partial conducting section formation regions, and
a low resistance partial conducting section masking layer removing step performed later than the low resistance partial conducting section conductive layer forming step, the low resistance partial conducting section masking layer removing step of forming the plurality of low resistance partial conducting sections through the low resistance partial conducting section conductive layer by removing the low resistance partial conducting section masking layer.

29. Apatterning method for forming a sensor structure including a base path and a plurality of low resistance partial conducting sections arranged to contact the base path on a surface of a measurement target, and sensorizing the measurement target by combining the sensor structure with the measurement target, the patterning method comprising:
a base path conductive layer forming step of forming a base path conductive layer using a base path conductive material with respect to the surface of the measurement target in a range including a base path formation region,
a base path masking layer forming step of forming a base path masking layer to cover the base path formation region, with respect to the base path conductive layer, and exposing a region other than the base path formation region,
a base path conductive material removing step of forming the base path by removing the region other than the base path formation region from the base path conductive layer,
a low resistance partial conducting section conductive layer forming step performed later than the base path conductive material removing step, the low resistance partial conducting section conductive layer forming step of forming a low resistance partial conducting section conductive layer using a low resistance partial conducting section conductive material, with respect to a range including a plurality of low resistance partial conducting section formation regions overlapping the base path,
a low resistance partial conducting section masking layer forming step of forming a low resistance partial conducting section masking layer to cover the plurality of low resistance partial conducting section formation regions, with respect to the low resistance partial conducting section conductive layer, and exposing a region other than the plurality of low resistance partial conducting section formation regions, and
a low resistance partial conducting section conductive material removing step of forming the plurality of low resistance partial conducting sections by removing the region other than the low resistance partial conducting section formation regions from the low resistance partial conducting section conductive layer.

30. Apatterning method for forming a sensor structure including a base path and a plurality of low resistance partial conducting sections arranged to contact the base path on a surface of a measurement target, and sensorizing the measurement target by combining the sensor structure with the measurement target, the patterning method comprising:
a low resistance partial conducting section conductive layer forming step of forming a low resistance partial conducting section conductive layer using a low resistance partial conducting section conductive material with respect to the surface of the measurement target in a range including low resistance partial conducting section formation regions,
a low resistance partial conducting section masking layer forming step of forming a low resistance partial conducting section masking layer to cover the plurality of low resistance partial conducting section formation regions with respect to the low resistance partial conducting section conductive layer, and exposing a region other than the plurality of low resistance partial conducting section formation regions,
a low resistance partial conducting section conductive material removing step of forming the plurality of low resistance partial conducting sections by removing the region other than the low resistance partial conducting section formation regions from the low resistance partial conducting section conductive layer,
a base path conductive layer forming step performed later than the low resistance partial conducting section conductive material removing step, the base path conductive layer forming step of forming a base path conductive layer using a base path conductive material with respect to a range including a base path formation region overlapping the plurality of low resistance partial conducting sections,
a base path masking layer forming step of forming a base path masking layer to cover the base path formation region, with respective to the base path conductive layer, and exposing a region other than the base path formation region, and
a base path conductive material removing step of forming the base path by removing the region other than the base path formation region from the base path conductive layer.

31. A patterning method for forming a sensor structure including a base path and a plurality of low resistance partial conducting sections arranged to contact the base path on a surface of a measurement target, and sensorizing the measurement target by combining the sensor structure with the measurement target, the patterning method comprising:
a low resistance partial conducting section conductive layer forming step of forming a low resistance partial conducting section conductive layer using a low resistance partial conducting section conductive material to include low resistance partial conducting section formation regions, with respect to the surface of the measurement target serving as the base path,
a low resistance partial conducting section masking layer forming step of forming a low resistance partial conducting section masking layer to cover the plurality of low resistance partial conducting section formation regions, with respect to the low resistance partial conducting section conductive layer, and exposing a region other than the plurality of low resistance partial conducting section formation regions, and
a low resistance partial conducting section conductive material removing step of forming the plurality of low resistance partial conducting sections by removing the region other than the low resistance partial conducting section formation regions from the low resistance partial conducting section conductive layer.
